# EUROPÄISCHE PATENTSCHRIFT

(11) **EP 0 685 519 B1**
(45) Veröffentlichungstag und Bekanntmachung des Hinweises auf die Patenterteilung: **04.11.1998**
(21) Anmeldenummer: 95810335.0
(22) Anmeldetag: 19.05.1995
(51) Int. Cl.: C08K 5/529, C08K 5/5373, C07F 9/59

(54) **Oligomere HALS-Phosphite und HALS-Phosphonite als Stabilisatoren**
Oligomeric HALS-phosphites and HALS-phosphonites as stabilizers
HALS phosphites et HALS phosphonites oligomères comme stabilisateurs

(30) Priorität: 02.06.1994 CH 1734/94
(43) Veröffentlichungstag der Anmeldung: 06.12.1995
(73) Patentinhaber: Ciba Specialty Chemicals Holding Inc., 4057 Basel (CH)
(72) Erfinder: Pitteloud, Rita, Dr., CH-1724 Praroman (CH)

(56) Entgegenhaltungen:
- Keine einschlägigen Dokumente gefunden

## Beschreibung

Die vorliegende Erfindung betrifft neue oligomere HALS-Phosphite und HALS-Phosphonite, Zusammensetzungen, enthaltend ein organisches Material, bevorzugt ein Polymer, und die neuen oligomeren HALS-Phosphite und HALS-Phosphonite, sowie die Verwendung derselben zum Stabilisieren von organischen Materialien gegen oxidativen, thermischen oder lichtinduzierten Abbau.

Organische Phosphite und Phosphonite sind in der Technik als Costabilisatoren, sekundäre Antioxidantien und Verarbeitungsstabilisatoren, unter anderem für Polyolefine, bekannt; Beispiele für solche bekannten Phosphitstabilisatoren finden sich in R. Gächter/H. Müller (Ed.), Plastics Additives Handbook, 3rd Ed., p. 47, Hanser, München 1990, und EP-A-356 688.

Gehinderte Amine, darunter insbesondere Verbindungen enthaltend 2,2,6,6-Tetramethylpiperidylgruppen, finden bevorzugt Einsatz als Lichtschutzmittel (hindered amine light stabilizers; HALS).

Phosphite oder Phosphonite mit HALS-Strukturelementen werden beispielsweise von T. König al, J. prakt. Chem. 334, 333-349 (1992), in US-A-5 239 076, GB-A-2 247 241, DE-A-4 306 747 und FR-A-2 380 290 beschrieben.

Es besteht weiterhin ein Bedarf an wirksamen Stabilisatoren für organische Materialien, die gegen oxidativen, thermischen und/oder lichtinduzierten Abbau empfindlich sind.

Es wurde nun gefunden, dass eine ausgewählte Gruppe solcher HALS-Phosphite und HALS-Phosphonite sich besonders gut als Stabilisatoren für organische Materialien, die gegen oxidativen, thermischen oder lichtinduzierten Abbau empfindlich sind, eignen. Insbesondere hervorzuheben ist die Eignung der genannten Verbindungen als Verarbeitungsstabilisatoren für synthetische Polymere.

Die vorliegende Erfindung betrifft daher oligomere Verbindungen der Formel I 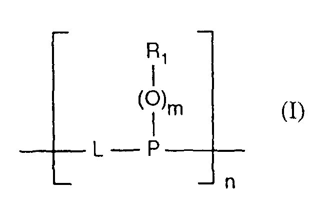 worin L eine Gruppe der Formel II oder III

(II) ―O-R₂-O―

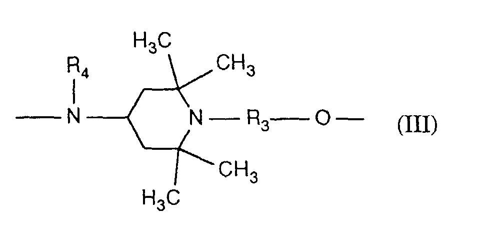

bedeutet,
R₁ C₁-C₂₅-Alkyl, durch Sauerstoff, Schwefel oder 〉N-R₅ unterbrochenes C₂-C₂₅-Alkyl; C₂-C₂₄-Alkenyl, unsubstituiertes oder durch C₁-C₄-Alkyl substituiertes C₅-C₁₅-Cycloalkyl; unsubstituiertes oder durch C₁-C₄-Alkyl substituiertes C₅-C₁₅-Cycloalkenyl; unsubstituiertes oder am Phenylring durch C₁-C₄-Alkyl substituiertes C₇-C₉-Phenylalkyl; oder Tetrahydroabietyl bedeutet; oder ferner R₁ einen Rest der Formel IV 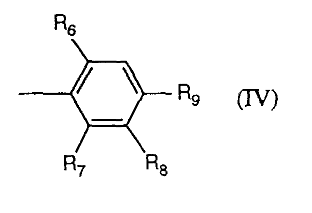 darstellt,
R₂ eine Gruppe der Formel V bis XVI 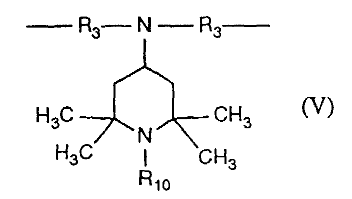 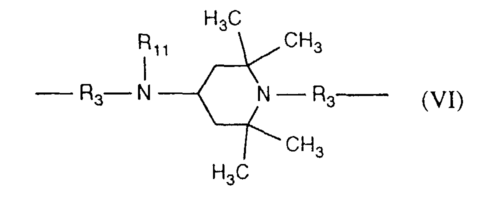 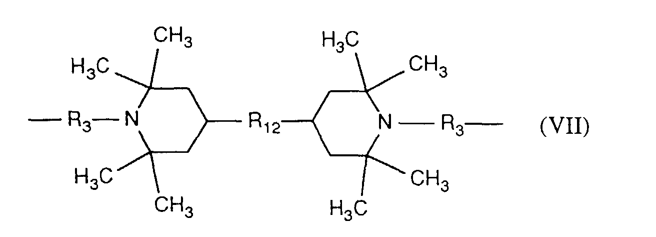 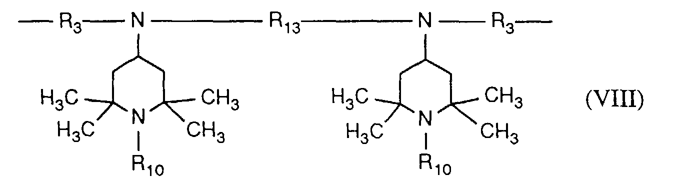 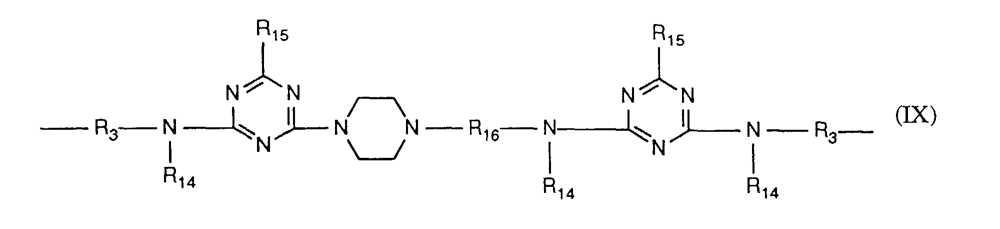 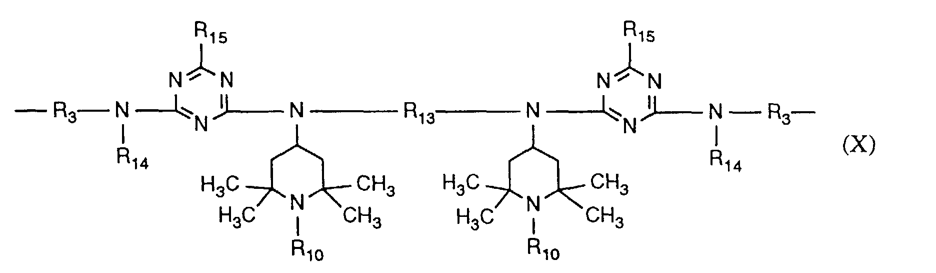 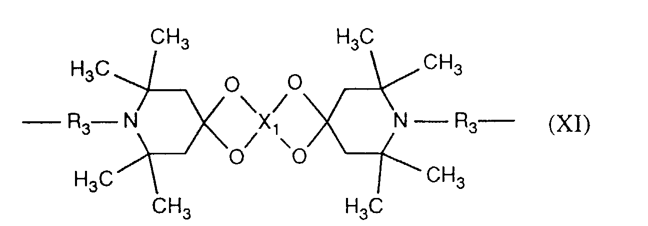 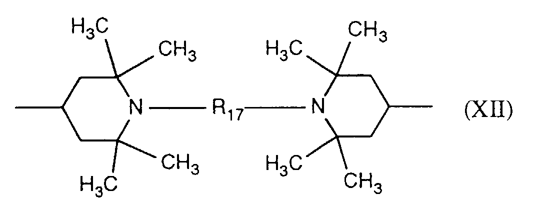 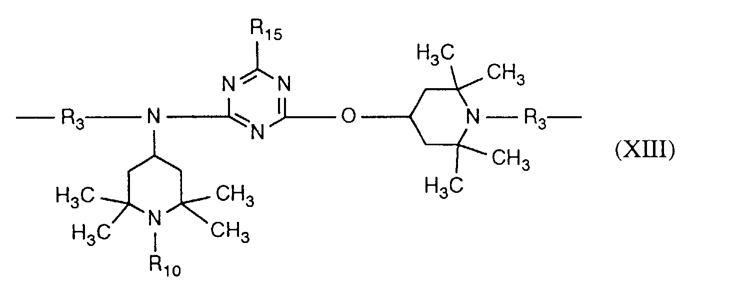 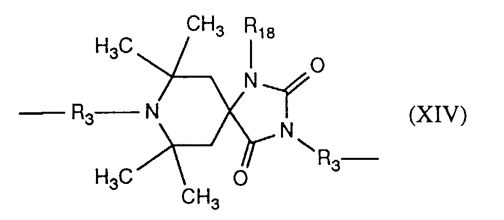 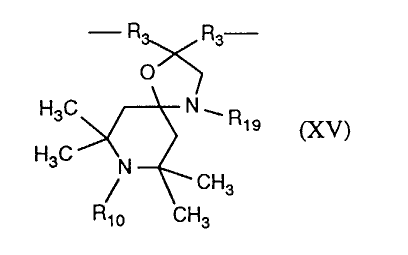 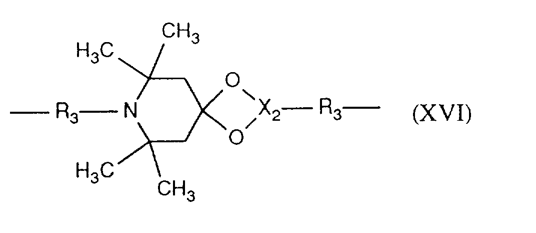 bedeutet,
R₃ C₁-C₁₈-Alkylen, durch Sauerstoff, Schwefel oder 〉N-R₅ unterbrochenes C₂-C₁₈-Alkylen; C₄-C₈-Alkenylen oder Phenylethylen darstellt,
R₄ C₁-C₈-Alkyl oder einen Rest der Formel XVII 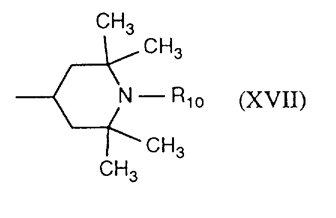 bedeutet,
R₅ Wasserstoff oder C₁-C₈-Alkyl darstellt,
R₆ und R₇ unabhängig voneinander Wasserstoff, C₁-C₂₅-Alkyl, C₂-C₂₄-Alkenyl, unsubstituiertes oder durch C₁-C₄-Alkyl substituiertes C₅-C₈-Cycloalkyl, unsubstituiertes oder durch C₁-C₄-Alkyl substituiertes Phenyl, unsubstituiertes oder durch C₁-C₄-Alkyl substituiertes C₅-C₈-Cycloalkenyl; C₇-C₉-Phenylalkyl oder -CH₂-S-R₂₀ bedeuten,
R₈ Wasserstoff oder Methyl ist,
R₉ Wasserstoff, C₁-C₂₅-Alkyl, C₂-C₂₄-Alkenyl, unsubstituiertes oder durch C₁-C₄-Alkyl substituiertes C₅-C₈-Cycloalkyl, unsubstituiertes oder durch C₁-C₄-Alkyl substituiertes Phenyl; unsubstituiertes oder durch C₁-C₄-Alkyl substituiertes C₅-C₈-Cycloalkenyl; C₇-C₉-Phenylalkyl, -CH₂-S-R₂₀, -(CH₂)ₚCOOR₂₁ oder -(CH₂)_{q}OR₂₂ bedeutet,
R₁₀ Wasserstoff, C₁-C₈-Alkyl, O^{•}, OH, NO, -CH₂CN, C₁-C₁₈-Alkoxy, C₅-C₁₂-Cycloalkoxy, C₃-C₆-Alkenyl, C₃-C₆-Alkinyl, C₁-C₈-Acyl, unsubstituiertes oder am Phenylring durch C₁-C₄-Alkyl substituiertes C₇-C₉-Phenylalkyl darstellt;
R₁₁ C₁-C₈-Alkyl oder einen Rest der Formel XVII 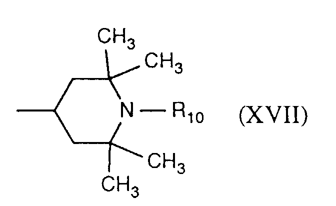 bedeutet,
R₁₂ 〉N-R₂₃, 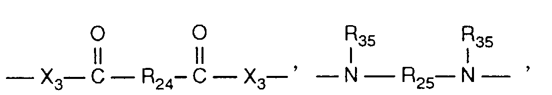 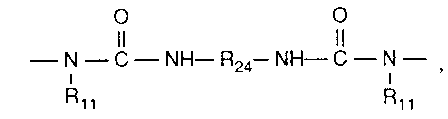 -O-R₂₅-O-, 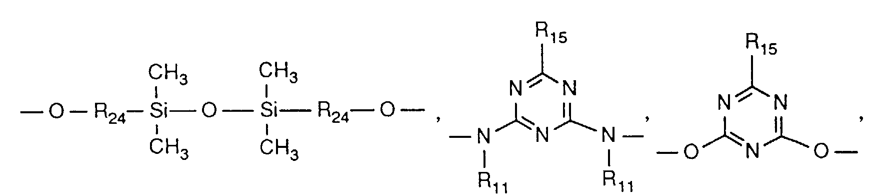 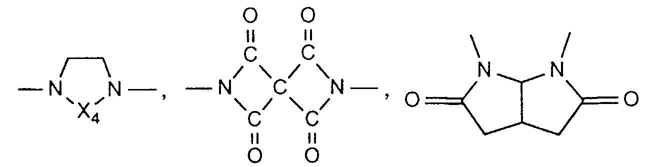 oder 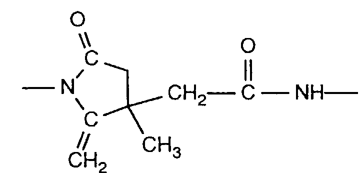 darstellt,
R₁₃ 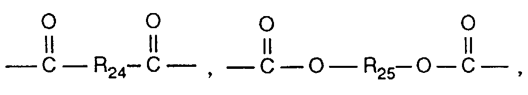 -R₂₅-, 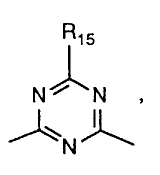 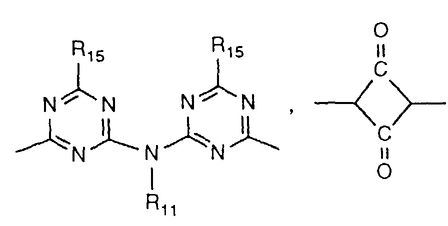 oder 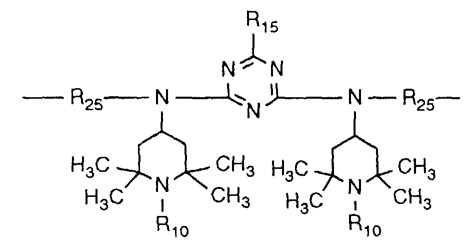 bedeutet,
R₁₄C₁-C₈-Alkyl oder einen Rest der Formel XVII 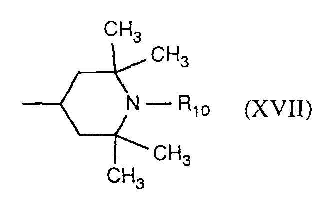 darstellt,
R₁₅-OR₂₆,-NHR₂₇, 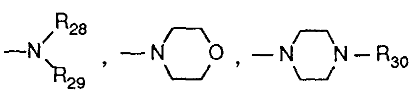 oder -SR₂₆ bedeutet,
R₁₆ und R₁₇ unabhängig voneinander 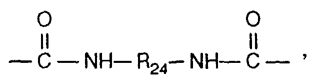 C₁-C₁₈-Alkylen, durch Sauerstoff, Schwefel oder 〉N-R₅ unterbrochenes C₂-C₁₈-Alkylen; C₂-C₁₈-Alkenylen, C₂-C₁₈-Alkinylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen oder Naphthylen; 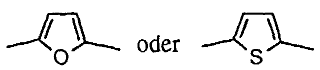 darstellen,
R₁₈ und R₁₉ unabhängig voneinander Wasserstoff oder C₁-C₈-Alkyl bedeuten,
R₂₀ C₁-C₁₈-Alkyl, unsubstituiertes oder durch C₁-C₄-Alkyl substituiertes C₅-C₁₂-Cycloalkyl; unsubstituiertes oder durch C₁-C₄-Alkyl substituiertes Phenyl; C₇-C₉-Phenylalkyl oder -(CH₂)ᵣCOOR₂₁ darstellt,
R₂₁ C₁-C₁₈-Alkyl, unsubstituiertes oder durch C₁-C₄-Alkyl substituiertes C₅-C₁₂-Cycloalkyl; unsubstituiertes oder durch C₁-C₄-Alkyl substituiertes Phenyl; oder C₇-C₉-Phenylalkyl bedeutet,
R₂₂ C₁-C₂₅-Alkyl, unsubstituiertes oder durch C₁-C₄-Alkyl substituiertes Phenyl; C₇-C₉-Phenylalkyl, C₁-C₂₅-Alkanoyl, C₃-C₂₅-Alkenoyl, durch Sauerstoff, Schwefel oder 〉N-R₅unterbrochenes C₃-C₂₅-Alkanoyl; C₆-C₉-Cycloalkylcarbonyl, unsubstituiertes oder durch C₁-C₁₂-Alkyl substituiertes Benzoyl; Thenoyl oder Furoyl darstellt,
R₂₃ C₁-C₈-Alkyl bedeutet,
R₂₄ eine direkte Bindung, C₁-C₁₈-Alkylen, durch Sauerstoff, Schwefel oder 〉N-R₅ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen oder Naphthylen; 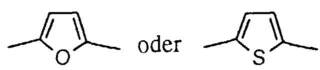 darstellt,
R₂₅ C₁-C₁₈-Alkylen, durch Sauerstoff, Schwefel oder 〉N-R₅ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen oder Naphthylen; 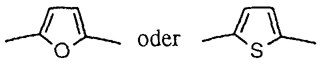 bedeutet,
R₂₆ C₁-C₂₅-Alkyl, durch Sauerstoff, Schwefel oder 〉N-R₅ unterbrochenes C₂-C₂₅-Alkyl; C₂-C₂₄-Alkenyl, unsubstituiertes oder durch C₁-C₄-Alkyl substituiertes C₅-C₁₅-Cycloalkyl; unsubstituiertes oder durch C₁-C₄-Alkyl substituiertes C₅-C₁₅-Cycloalkenyl; unsubstituiertes oder am Phenylring durch C₁-C₄-Alkyl substituiertes C₇-C₉-Phenylalkyl; unsubstituiertes oder durch C₁-C₄-Alkyl substituiertes Phenyl darstellt;
R₂₇, R₂₈, R₂₉ und R₃₀ unabhängig voneinander Wasserstoff, C₁-C₁₈-Alkyl oder einen Rest der Formel XVII 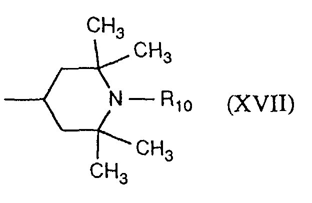 bedeuten,
R₃₁ C₁-C₄-Alkyl oder Hydroxymethyl darstellt,
R₃₂ Wasserstoff oder C₁-C₈-Alkyl bedeutet,
R₃₃ Wasserstoff, C₁-C₈-Alkyl oder einen Rest der Formel XVII 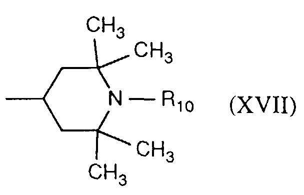 darstellt,
R₃₄ Wasserstoff, C₁-C₂₀-Alkyl, C₅-C₁₂-Cycloalkyl, unsubstituiertes oder durch C₁-C₄-Alkyl substituiertes Phenyl bedeutet,
R₃₅ C₁-C₂₅-Alkanoyl, unsubstituiertes oder durch C₁-C₄-Alkyl substituiertes Benzoyl; oder 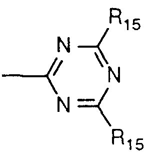 darstellt,
X₁ eine Gruppe der Formel XVIII, XIX, XX oder XXI 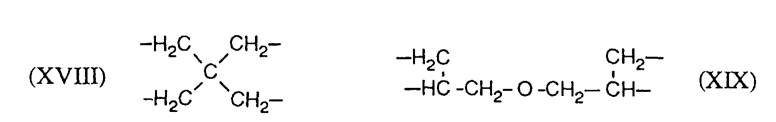 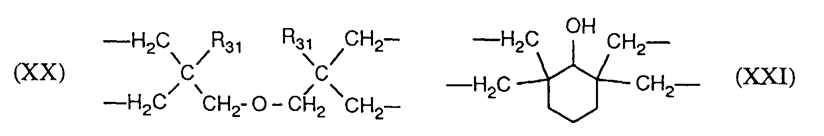 bedeutet,
X₂ 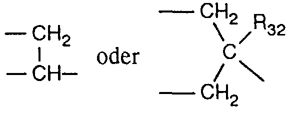 darstellt,
X₃ Sauerstoff oder 〉N-R₃₃ bedeutet,
X₄ 〉C=O, 〉C=S oder 〉CH-R₃₄ darstellt,
m 0 oder 1 ist,
n eine Zahl von 2 bis 25 darstellt,
p 0, 1 oder 2 ist,
q eine ganze Zahl von 3 bis 8 bedeutet, und
r 1 oder 2 darstellt, wobei in den wiederkehrenden Struktureinheiten der Formel I die Gruppe L, der Rest R₁, sowie die Ziffer m gleich oder verschieden sind.

Alkyl mit bis zu 25 Kohlenstoffatomen bedeutet einen verzweigten oder unverzweigten Rest wie beispielsweise Methyl, Ethyl, Propyl, Isopropyl, n-Butyl, sec-Butyl, Isobutyl, tert-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methyl-heptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl oder Docosyl. Eine der bevorzugten Bedeutungen von R₁, R₆, R₇, R₉, R₂₂, R₂₆ und R₃₄ ist beispielweise C₁-C₁₈-Alkyl, insbesondere C₁-C₁₂-Alkyl, z.B. C₁-C₈-Alkyl. Eine besonders bevorzugte Bedeutung von R₆, R₇ und R₉ ist beispielsweise C₁-C₄-Alkyl, insbesondere tert-Butyl. Eine der bevorzugten Bedeutungen von R₄, R₅, R₁₀, R₁₁, R₁₄, R₁₈, R₁₉, R₂₃, R₃₂ und R₃₃ ist beispielsweise C₁-C₆-Alkyl, insbesondere C₁-C₅-Alkyl, z.B. C₁-C₄-Alkyl. Eine besonders bevorzugte Bedeutung von R₂₀, R₂₁, R₂₇, R₂₈, R₂₉ und R₃₀ ist beispielsweise C₁-C₁₆-Alkyl, insbesondere C₁-C₁₄-Alkyl, z.B. C₁-C₁₂-Alkyl. Eine besonders bevorzugte Bedeutung von R₂₇, R₂₈, R₂₉ und R₃₀ ist beispielsweise C₁-C₁₂-Alkyl, insbesondere C₁-C₁₀-Alkyl, z.B. C₁-C₈-Alkyl.

Durch Sauerstoff, Schwefel oder 〉N-R₅ unterbrochenes Alkyl mit 2 bis zu 25 Kohlenstoffatomen kann ein- oder mehrfach unterbrochen sein und bedeutet beispielsweise CH₃-O-CH₂-, CH₃-S-CH₂-, CH₃-NH-CH₂-, CH₃-N(CH₃)-CH₂-, CH₃-O-CH₂CH₂-O-CH₂-, CH₃-(O-CH₂CH₂-)₂O-CH₂-, CH₃-(O-CH₂CH₂-)₃O-CH₂- oder CH₃-(O-CH₂CH₂-)₄O-CH₂-. Eine besonders bevorzugte Bedeutung von R₁ und R₂₆ ist beispielsweise durch Sauerstoff unterbrochenes C₂-C₁₈-Alkyl, insbesondere durch Sauerstoff unterbrochenes C₄-C₁₈-Alkyl, z.B. durch Sauerstoff unterbrochenes C₄-C₁₂-Alkyl.

Alkenyl mit 2 bis 24 Kohlenstoffatomen bedeutet einen verzweigten oder unverzweigten Rest wie beispielsweise Vinyl, Propenyl, 2-Butenyl, 3-Butenyl, Isobutenyl, n-2,4-Pentadienyl, 3-Methyl-2-butenyl, n-2-Octenyl, n-2-Dodecenyl, iso-Dodecenyl, Oleyl, n-2-Octadecenyl oder n-4-Octadecenyl. Eine besonders bevorzugte Bedeutung von R₁, R₆, R₇, R₉ und R₂₆ ist Alkenyl mit 3 bis 18, insbesondere 3 bis 12, z.B. 3 bis 10 Kohlenstoffatomen. Eine besonders bevorzugte Bedeutung von R₁₀ ist Alkenyl mit 3 bis 6, insbesondere 3 bis 5, z.B. 3 bis 4 Kohlenstoffatomen.

Unsubstituiertes oder durch C₁-C₄-Alkyl substituiertes C₅-C₁₅-Cycloalkyl, insbesondere C₅-C₁₂-Cycloalkyl, das vorzugsweise 1 bis 3, insbesondere 1 oder 2 verzweigte oder unverzweigte Alkylgruppen-Reste enthält, bedeutet beispielsweise Cyclopentyl, Methylcyclopentyl, Dimethylcyclopentyl, Cyclohexyl, Methylcyclohexyl, Dimethylcyclohexyl, Trimethylcyclohexyl, tert-Butylcyclohexyl, Cycloheptyl, Cyclooctyl oder Cyclododecyl. Bevorzugt ist C₅-C₈-Cycloalkyl, insbesondere Cyclohexyl.

Unsubstituiertes oder durch C₁-C₄-Alkyl substituiertes C₅-C₁₅-Cycloalkenyl, das vorzugsweise 1 bis 3, insbesondere 1 oder 2 verzweigte oder unverzweigte Alkylgruppen-Reste enthält, bedeutet beispielsweise Cyclopentenyl, Methylcyclopentenyl, Dimethylcyclopentenyl, Cyclohexenyl, Methylcyclohexenyl, Dimethylcyclohexenyl, Trimethylcyclohexenyl, tert-Butylcyclohexenyl, Cycloheptenyl, Cyclooctenyl oder Cyclododecenyl. Bevorzugt ist C₅-C₁₂-Cycloalkenyl, insbesondere C₅-C₈-Cycloalkenyl, z.B. Cyclohexenyl.

Unsubstituiertes oder am Phenylrest durch C₁-C₄-Alkyl substituiertes C₇-C₉-Phenylalkyl, das vorzugsweise 1 bis 3, insbesondere 1 oder 2 verzweigte oder unverzweigte Alkylgruppen-Reste enthält, bedeutet beispielsweise Benzyl, α-Methylbenzyl, α,α-Dimethylbenzyl, 2-Phenylethyl, 2-Methylbenzyl, 3-Methylbenzyl, 4-Methylbenzyl, 2,4-Dimethylbenzyl, 2,6-Dimethylbenzyl oder 4-tert-Butylbenzyl. Benzyl ist bevorzugt.

C₁-C₁₈-Alkylen bedeutet einen verzweigten oder unverzweigten Rest wie beispielsweise Methylen, Ethylen, Propylen, Tetramethylen, Pentamethylen, Hexamethylen, Heptamethylen, Octamethylen, Decamethylen, Dodecamethylen oder Octadecamethylen. Eine bevorzugte Bedeutung von R₃ ist beispielsweise C₁-C₁₂-Alkylen, insbesondere C₂-C₁₀-Alkylen, z.B. C₂-C₈-Alkylen. Eine speziell bevorzugte Bedeutung von R₃ ist Ethylen und Propylen. Eine bevorzugte Bedeutung von R₁₆ und R₁₇ ist beispielsweise C₂-C₁₄-Alkylen, insbesondere C₂-C₁₂-Alkylen, z.B. C₂-C₈-Alkylen. Eine speziell bevorzugte Bedeutung von R₁₆ und R₁₇ ist beispielsweise C₄-C₈-Alkylen. Eine bevorzugte Bedeutung von R₂₄ ist beispielsweise C₁-C₁₄-Alkylen, insbesondere C₁-C₁₂-Alkylen, z.B. C₁-C₈-Alkylen. Eine bevorzugte Bedeutung von R₂₅ ist beispielsweise C₂-C₁₄-Alkylen, insbesondere C₂-C₁₂-Alkylen, z.B. C₂-C₈-Alkylen.

Durch Sauerstoff, Schwefel oder 〉N-R₅ unterbrochenes C₂-C₁₈-Alkylen kann ein- oder mehrfach unterbrochen sein und bedeutet beispielsweise -CH₂-O-CH₂-, -CH₂-S-CH₂-, -CH₂-NH-CH₂-, -CH₂-N(CH₃)-CH₂-, -CH₂-O-CH₂CH₂-O-CH₂-, -CH₂-(O-CH₂CH₂-)₂O-CH₂-, -CH₂-(O-CH₂CH₂-)₃O-CH₂-, -CH₂-(O-CH₂CH₂-)₄O-CH₂- oder -CH₂CH₂-S-CH₂CH₂-. Eine bevorzugte Bedeutung von R₃, R₁₆, R₁₇, R₂₄ und R₂₅ ist beispielsweise durch Sauerstoff unterbrochenes C₂-C₁₈-Alkylen, insbesondere durch Sauerstoff unterbrochenes C₄-C₁₈-Alkylen, z.B. durch Sauerstoff unterbrochenes C₄-C₁₂-Alkylen.

Ist R₃ C₄-C₈-Alkenylen, so handelt es sich beispielsweise um 2-Butenylen- 1,4.

Phenylethylen bedeutet -CH(C₆H₅)CH₂-.

Durch C₁-C₄-Alkyl substituiertes Phenyl, das vorzugsweise 1 bis 3, insbesondere 1 oder 2 Alkylgruppen enthält, bedeutet beispielsweise o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-butylphenyl, 2-Ethylphenyl oder 2,6-Diethylphenyl.

Alkoxy mit bis zu 18 Kohlenstoffatomen bedeutet einen verzweigten oder unverzweigten Rest wie beispielsweise Methoxy, Ethoxy, Propoxy, Isopropoxy, n-Butoxy, Isobutoxy, Pentoxy, Isopentoxy, Hexoxy, Heptoxy, Octoxy, Decyloxy, Tetradecyloxy, Hexadecyloxy oder Octadecyloxy. Eine bevorzugte Bedeutung von R₁₀ ist Alkoxy mit 4 bis 16, insbesondere 6 bis 12 Kohlenstoffatomen.

Cycloalkoxy mit 5 bis 12 C-Atomen bedeutet beispielsweise Cyclopentoxy, Cyclohexoxy, Cycloheptoxy, Cyclooctoxy, Cyclodecyloxy oder Cyclododecyloxy. Eine der bevorzugten Bedeutungen von R₁₀ ist C₅-C₈-Cycloalkoxy. Besonders bevorzugt sind Cyclopentoxy und Cyclohexoxy.

Alkinyl mit 3 bis 6 Kohlenstoffatomen bedeutet einen verzweigten oder unverzweigten Rest wie beispielsweise Propinyl (Propargyl) (-CH₂-C≡CH ), 2-Butinyl oder 3-Butinyl.

Acyl mit 1 bis 8 C-Atomen bedeutet beispielsweise Formyl, Acetyl, Propionyl, Butyryl, Pentanoyl, Hexanoyl, Heptanoyl, Octanoyl, Benzoyl, Acryloyl oder Crotonyl. Bevorzugt sind C₁-C₈-Alkanoyl, C₃-C₈-Alkenoyl oder Benzoyl, insbesondere Acetyl.

C₂-C₁₈-Alkenylen bedeutet beispielsweise Vinylen, Methylvinylen, Octenylethylen oder Dodecenylethylen. Eine bevorzugte Bedeutung von R₁₆, R₁₇, R₂₄ und R₂₅ ist C₄-C₁₂-Alkenylen, insbesondere C₄-C₈-Alkenylen, z.B. 2-Butenylen-1,4.

C₂-C₁₈-Alkinylen bedeutet beispielsweise -C≡C- , 2-Propinylen(-C≡C-CH₂-), 2-Butinylen (-CH₂-C=C-CH₂- ), 2-Pentinylen, 2-Hexinylen, 3-Hexinylen, 3-Heptinylen, 2-Decinylen, 4-Decinylen oder 8-Octadecinylen. Eine bevorzugte Bedeutung von R₁₆ und R₁₇ ist C₂-C₁₂-Alkinylen, insbesondere C₄-C₈-Alkinylen, z.B. 2-Butinylen.

Alkyliden mit 2 bis 20 Kohlenstoffatomen bedeutet beispielsweise Ethyliden, Propyliden, Butyliden, Pentyliden, 4-Methylpentyliden, Heptyliden, Nonyliden, Tridecyliden, Nonadecyliden, 1-Methylethyliden, 1-Ethylpropyliden oder 1-Ethylpentyliden. Eine bevorzugte Bedeutung von R₁₆, R₁₇, R₂₄ und R₂₅ ist beispielsweise Alkyliden mit 2 bis 12, insbesondere 2 bis 8, z.B. 2 bis 6 Kohlenstoffatomen.

Phenylalkyliden mit 7 bis 20 Kohlenstoffatomen bedeutet beispielsweise Benzyliden, 2-Phenylethyliden oder 1-Phenyl-2-hexyliden. Eine bevorzugte Bedeutung von R₁₆, R₁₇, R₂₄ und R₂₅ ist beispielsweise Phenylalkyliden mit 7 bis 15, insbesondere 7 bis 12, z.B. 7 bis 9 Kohlenstoffatomen.

C₅-C₈-Cycloalkylen bedeutet eine gesättigte Kohlenwasserstoffgruppe mit zwei freien Valenzen und mindestens einer Ringeinheit und ist beispielsweise Cyclopentylen, Cyclohexylen, Cycloheptylen oder Cyclooctylen. Bevorzugt ist Cyclohexylen.

C₇-C₈-Bicycloalkylen bedeutet beispielsweise Bicycloheptylen oder Bicyclooctylen.

Unsubstituiertes oder durch C₁-C₄-Alkyl substituiertes Phenylen oder Naphthylen bedeutet beispielsweise 1,2-, 1,3-, 1,4-Phenylen, 1,2-, 1,3-, 1,4-, 1,6-, 1,7-, 2,6- oder 2,7-Naphthylen. 1,4-Phenylen ist bevorzugt.

Alkanoyl mit bis zu 25 Kohlenstoffatomen bedeutet einen verzweigten oder unverzweigten Rest wie beispielsweise Formyl, Acetyl, Propionyl, Butanoyl, Pentanoyl, Hexanoyl, Heptanoyl, Octanoyl, Nonanoyl, Decanoyl, Undecanoyl, Dodecanoyl, Tridecanoyl, Tetradecanoyl, Pentadecanoyl, Hexadecanoyl, Heptadecanoyl, Octadecanoyl, Eicosanoyl oder Docosanoyl. Eine bevorzugte Bedeutung von R₂₂ und R₃₅ ist C₁-C₁₈-Alkanoyl, insbesondere C₁-C₁₂-Alkanoyl, z.B. C₁-C₈-Alkanoyl. Eine besonders bevorzugte Bedeutung von R₃₅ ist C₁-C₄-Alkanoyl, insbesondere Acetyl.

Alkenoyl mit 3 bis 25 Kohlenstoffatomen bedeutet einen verzweigten oder unverzweigten Rest wie beispielsweise Propenoyl, 2-Butenoyl, 3-Butenoyl, Isobutenoyl, n-2,4-Pentadienoyl, 3-Methyl-2-butenoyl, n-2-Octenoyl, n-2-Dodecenoyl, iso-Dodecenoyl, Oleoyl, n-2-Octadecenoyl oder n-4-Octadecenoyl. Bevorzugt ist Alkenoyl mit 3 bis 18, insbesondere 3 bis 12, z.B. 3 bis 6, vor allem 3 bis 4 Kohlenstoffatomen.

Durch Sauerstoff, Schwefel oder 〉N-R₅ unterbrochenes C₃-C₂₅-Alkanoyl bedeutet beispielsweise CH₃-O-CH₂CO-, CH₃-S-CH₂CO-, CH₃-NH-CH₂CO-, CH₃-N(CH₃)-CH₂CO-, CH₃-O-CH₂CH₂-O-CH₂CO-, CH₃-(O-CH₂CH₂-)₂O-CH₂CO-, CH₃-(O-CH₂CH₂-)₃O-CH₂CO- oder CH₃-(O-CH₂CH₂-)₄O-CH₂CO-.

C₆-C₉-Cycloalkylcarbonyl bedeutet beispielsweise Cyclopentylcarbonyl, Cyclohexylcarbonyl, Cycloheptylcarbonyl oder Cyclooctylcarbonyl. Cyclohexylcarbonyl ist bevorzugt.

Durch C₁-C₁₂-Alkyl substituiertes Benzoyl, das vorzugsweise 1 bis 3, insbesondere 1 oder 2 Alkylgruppen trägt, bedeutet beispielsweise o-, m- oder p-Methylbenzoyl, 2,3-Dimethylbenzoyl, 2,4-Dimethylbenzoyl, 2,5-Dimethylbenzoyl, 2,6-Dimethylbenzoyl, 3,4-Dimethylbenzoyl, 3,5-Dimethylbenzoyl, 2-Methyl-6-ethylbenzoyl, 4-tert-Butylbenzoyl, 2-Ethylbenzoyl, 2,4,6-Trimethylbenzoyl, 2,6-Dimethyl-4-tert-butylbenzoyl oder 3,5-Ditert-butylbenzoyl. Bevorzugte Substituenten sind C₁-C₈-Alkyl, insbesondere C₁-C₄-Alkyl.

Bevorzugt sind die oligomeren Verbindungen der Formel I, worin
R₁ C₁-C₁₈-Alkyl, durch Sauerstoff unterbrochenes C₂-C₁₈-Alkyl; C₂-C₁₈-Alkenyl, C₅-C₁₅-Cycloalkyl, C₅-C₁₅-Cycloalkenyl, C₇-C₉-Phenylalkyl oder Tetrahydroabietyl bedeutet; oder ferner R₁ einen Rest der Formel IV 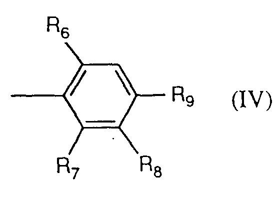 darstellt,
R₆ und R₇ unabhängig voneinander Wasserstoff, C₁-C₁₈-Alkyl, C₂-C₁₈-Alkenyl, C₅-C₈-Cycloalkyl, Phenyl, C₅-C₈-Cycloalkenyl, C₇-C₉-Phenylalkyl oder -CH₂-S-R₂₀ bedeuten,
R₉ Wasserstoff, C₁-C₁₈-Alkyl, C₂-C₁₈-Alkenyl, C₅-C₈-Cycloalkyl, Phenyl, C₅-C₈-Cycloalkenyl, C₇-C₉-Phenylalkyl, -CH₂-S-R₂₀, -(CH₂)ₚCOOR₂₁ oder (CH₂)_{q}OR₂₂ darstellt,
R₂₀ C₁-C₁₂-Alkyl, C₅-C₁₂-Cycloalkyl, Phenyl, C₇-C₉-Phenylalkyl oder -(CH₂)ᵣCOOR₂₁ bedeutet,
R₂₁ C₁-C₁₂-Alkyl, C₅-C₁₂-Cycloalkyl, Phenyl oder C₇-C₉-Phenylalkyl darstellt,
R₂₂ C₁-C₁₈-Alkyl, Phenyl, C₇-C₉-Phenylalkyl, C₁-C₁₈-Alkanoyl, C₃-C₁₈-Alkenoyl, durch Sauerstoff unterbrochenes C₃-C₁₈-Alkanoyl; C₆-C₉-Cycloalkylcarbonyl, Benzoyl, Thenoyl oder Furoyl bedeutet, und
q eine ganze Zahl von 3 bis 6 darstellt.

Bevorzugt sind sind auch die oligomeren Verbindungen der Formel I, worin
R₁ C₁-C₁₂-Alkyl, C₃-C₁₂-Alkenyl, Cyclohexyl, Benzyl oder Tetrahydroabietyl bedeutet, oder ferner R₁ einen Rest der Formel IV 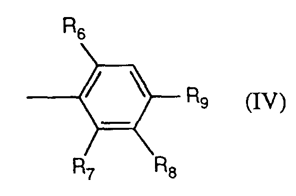 darstellt,
R₆ und R₇ unabhängig voneinander Wasserstoff, C₁-C₈-Alkyl, Cyclohexyl oder Phenyl bedeuten,
R₉ Wasserstoff, C₁-C₈-Alkyl, Cyclohexyl, Phenyl oder -(CH₂)ₚCOOR₂₁ darstellt,
R₂₁ C₁-C₁₂-Alkyl oder Benzyl bedeutet,
n eine Zahl von 2 bis 20 darstellt, und
p 2 ist.

Ebenfalls bevorzugt sind die oligomeren Verbindungen der Formel I, worin
R₃ C₁-C₁₂-Alkylen, durch Sauerstoff unterbrochenes C₂-C₁₂-Alkylen; C₄-C₈-Alkenylen oder Phenylethylen darstellt,
R₁₁ C₁-C₈-Alkyl bedeutet,
R₁₂ 〉N-R₂₃, 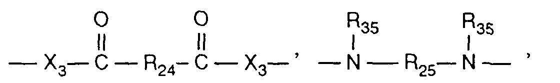 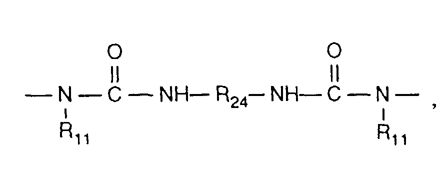 -O-R₂₅-O-, 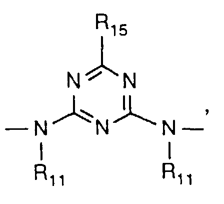 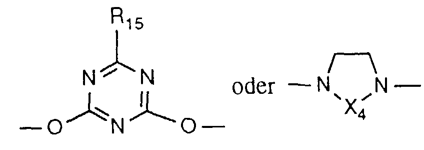 darstellt,
R₁₃ 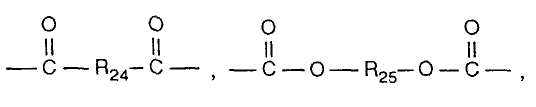 -R₂₅-, 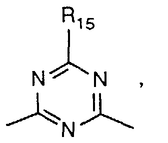 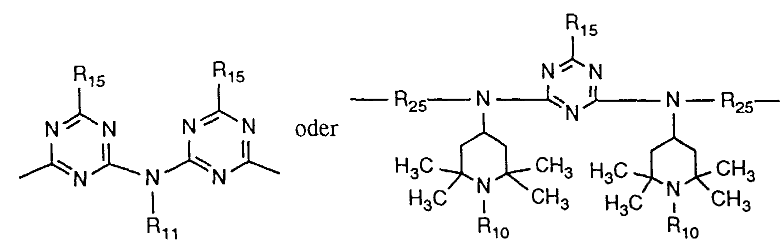 bedeutet,
R₁₅-OR₂₆,-NHR₂₇, 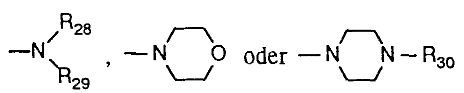 darstellt,
R₁₆ und R₁₇ unabhängig voneinander 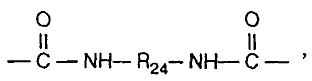 C₂-C₁₂-Alkylen, durch Sauerstoff unterbrochenes C₂-C₁₂-Alkylen; C₂-C₁₂-Alkenylen, C₄-C₁₂-Alkinylen, C₂-C₁₂-Alkyliden, C₇-C₁₂-Phenylalkyliden, C₅-C₈-Cycloalkylen oder Phenylen bedeuten,
R₂₄ eine direkte Bindung, C₁-C₁₂-Alkylen, durch Sauerstoff unterbrochenes C₂-C₁₂-Alkylen; C₂-C₁₂-Alkenylen, C₂-C₁₂-Alkyliden, C₇-C₁₂-Phenylalkyliden, C₅-C₈-Cycloalkylen oder Phenylen darstellt,
R₂₅ C₁-C₁₂-Alkylen, durch Sauerstoff unterbrochenes C₂-C₁₂-Alkylen; C₂-C₁₂-Alkenylen, C₂-C₁₂-Alkyliden, C₇-C₁₂-Phenylalkyliden, C₅-C₈-Cycloalkylen oder Phenylen bedeutet,
R₂₆ C₁-C₁₈-Alkyl, durch Sauerstoff unterbrochenes C₂-C₁₈-Alkyl; C₂-C₁₈-Alkenyl, C₅-C₁₅-Cycloalkyl, C₅-C₁₅-Cycloalkenyl, C₇-C₉-Phenylalkyl oder Phenyl darstellt,
R₂₇, R₂₈, R₂₉ und R₃₀ unabhängig voneinander Wasserstoff, C₁-C₁₂-Alkyl oder einen Rest der Formel XVII 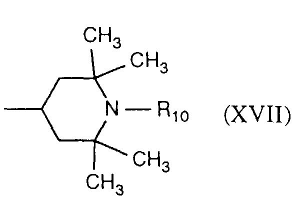 bedeuten,
R₃₂ Wasserstoff oder C₁-C₄-Alkyl ist,
R₃₃ Wasserstoff oder C₁-C₈-Alkyl darstellt,
R₃₄ Wasserstoff, C₁-C₁₂-Alkyl, C₅-C₁₂-Cycloalkyl oder Phenyl bedeutet,
R₃₅ C₁-C₁₈ Alkanoyl, Benzoyl oder 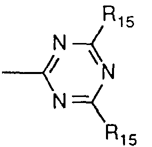 darstellt,
X₁ eine Gruppe der Formel XVIII oder XIX 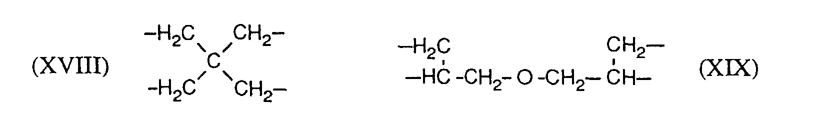 bedeutet,
X₂ 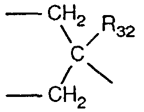 darstellt,
X₄ 〉C=O oder 〉CH-R₃₄ bedeutet, und
n eine Zahl von 2 bis 20 darstellt.

Besonders bevorzugt sind die oligomeren Verbindungen der Formel I, worin
R₃ C₁-C₈-Alkylen, durch Sauerstoff unterbrochenes C₂-C₈-Alkylen; oder C₄-C₈-Alkenylen darstellt,
R₁₁ C₁-C₆-Alkyl bedeutet,
R₁₂ 〉N-R₂₃ 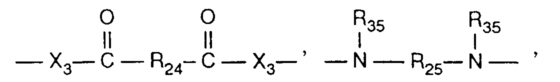 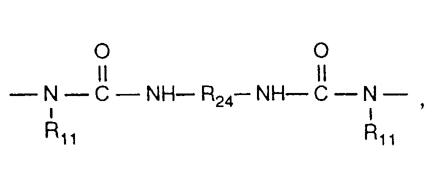 -O-R₂₅-O-, 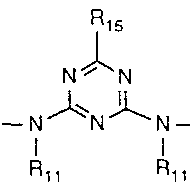 oder 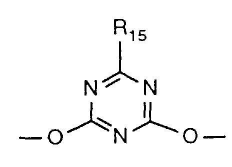 darstellt,
R₁₃ 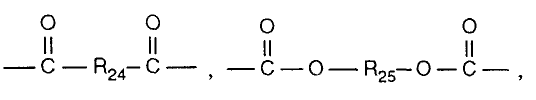 -R₂₅-, 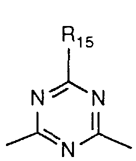 oder 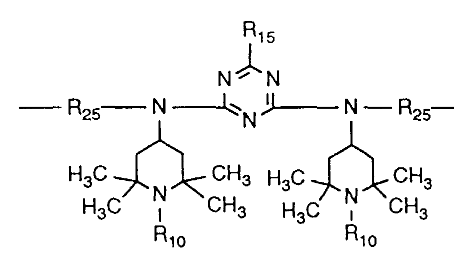 bedeutet,
R₁₅-OR₂₆,-NHR₂₇, 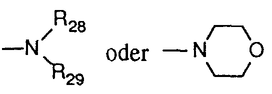 darstellt,
R₁₆ und R₁₇ unabhängig voneinander 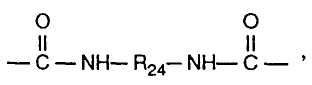 C₂-C₈-Alkylen, C₄-C₁₂-Alkinylen oder C₂-C₈-Alkyliden bedeuten,
R₂₃ C₁-C₆-Alkyl ist,
R₂₄ eine direkte Bindung, C₁-C₁₂-Alkylen, durch Sauerstoff unterbrochenes C₂-C₁₂-Alkylen; C₂-C₈-Alkenylen oder C₂-C₈-Alkyliden darstellt,
R₂₅ C₂-C₁₂-Alkylen, durch Sauerstoff unterbrochenes C₂-C₁₂-Alkylen; C₂-C₁₂-Alkenylen oder C₂-C₁₂-Alkyliden bedeutet,
R₂₆ C₁-C₁₂-Alkyl, C₂-C₁₂-Alkenyl, Cyclohexyl, Benzyl oder Phenyl darstellt,
R₂₇, R₂₈ und R₂₉ unabhängig voneinander Wasserstoff, C₁-C₁₀-Alkyl oder einen Rest der Formel XVII 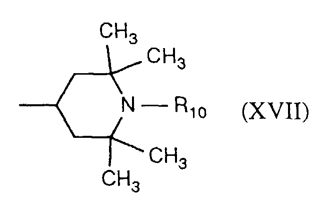 bedeuten,
R₃₂ Wasserstoff oder C₁-C₄-Alkyl ist,
R₃₃ Wasserstoff oder C₁-C₈-Alkyl darstellt,
R₃₄ Wasserstoff oder C₁-C₈-Alkyl bedeutet,
R₃₅ C₁-C₁₂-Alkanoyl, Benzoyl oder 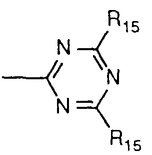 darstellt,
X₁ eine Gruppe der Formel XVIII oder XIX 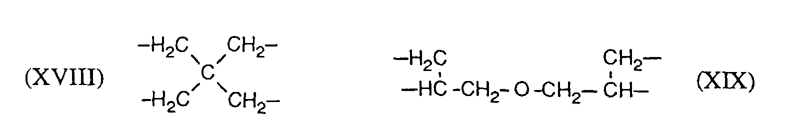 bedeutet,
X₂ 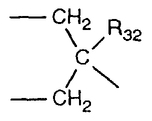 darstellt,
X₄ 〉C=O oder 〉CH-R₃₄ bedeutet, und
n eine Zahl von 2 bis 15 darstellt.

Von besonderem Interesse sind die oligomeren Verbindungen der Formel I, worin
R₁₀ Wasserstoff, C₁-C₄-Alkyl, C₄-C₁₆-Alkoxy, C₅-C₈-Cycloalkoxy, Allyl, Propargyl, Acetyl oder Benzyl darstellt.

Speziell von besonderem Interesse sind die oligomeren Verbindungen der Formel I, worin
R₁ einen Rest der Formel IV 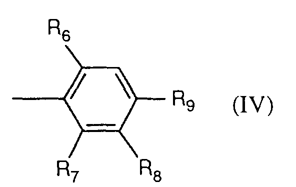 darstellt,
R₂ eine Gruppe der Formel V, VI, VII, VIII, XI, XII oder XVI 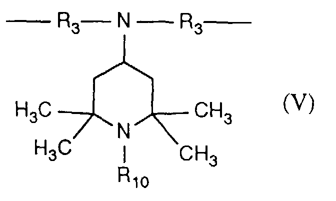 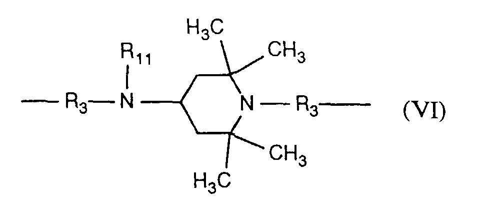 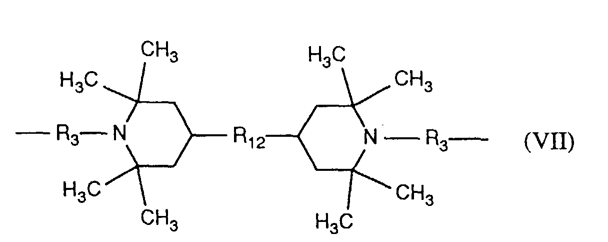 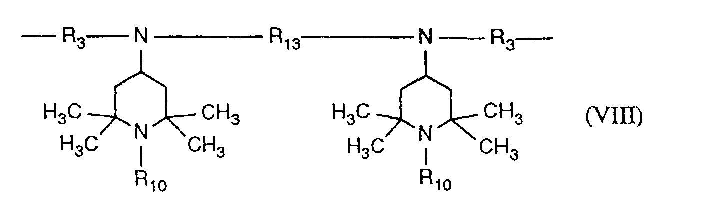 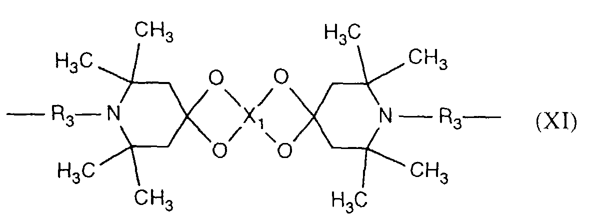 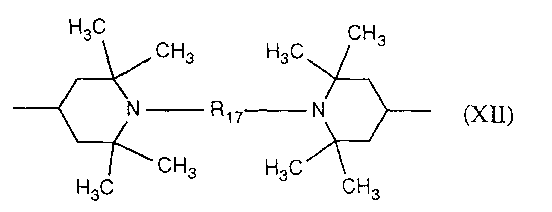 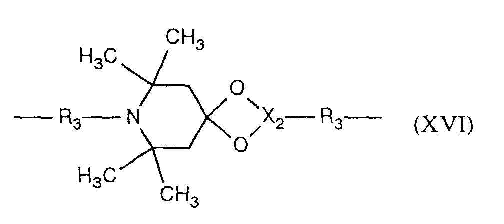 bedeutet,
R₃ Methylen oder Ethylen darstellt,
R₄ C₁-C₈-Alkyl bedeutet,
R₆ und R₇ unabhängig voneinander Wasserstoff oder C₁-C₄-Alkyl sind,
R₈ Wasserstoff ist,
R₉ Wasserstoff oder C₁-C₄-Alkyl bedeutet,
R₁₀ Wasserstoff oder C₁-C₄-Alkyl darstellt,
R₁₁ C₁-C₄-Alkyl bedeutet,
R₁₂ 〉N-R₂₃, 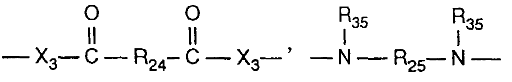 oder 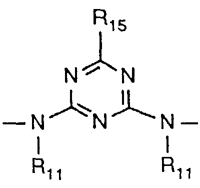 darstellt,
R₁₃ 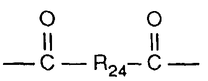 oder -R₂₅- bedeutet,
R₁₅ -OR₂₆ oder 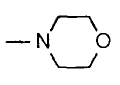 darstellt,
R₁₇ 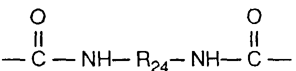 oder C₄-C₆-Alkinylen ist,
R₂₃ C₁-C₄-Alkyl bedeutet,
R₂₄ C₂-C₈-Alkylen darstellt,
R₂₅ C₂-C₈-Alkylen bedeutet,
R₂₆ C₁-C₄-Alkyl darstellt,
R₃₂ Wasserstoff oder C₁-C₄-Alkyl ist,
R₃₃ Wasserstoff oder C₁-C₄-Alkyl darstellt,
R₃₅ C₁-C₄-Alkanoyl bedeutet,
X₁ eine Gruppe der Formel XVIII 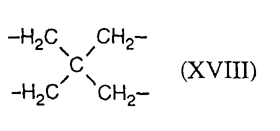 darstellt,
X₂ 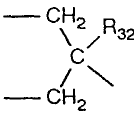 bedeutet,
X₃ Sauerstoff oder 〉N-R₃₃ darstellt, und
n eine Zahl von 2 bis 10 bedeutet.

Die erfindungsgemässen oligomeren Verbindungen der Formel I können auf an sich bekannte Weise hergestellt werden.

Ein weiterer Gegenstand der Erfindung ist ein bevorzugtes Verfahren zur Herstellung von oligomeren Verbindungen der Formel I, dadurch gekennzeichnet, dass eine Verbindung der Formel XXII oder ein Gemisch von Verbindungen der Formel XXII 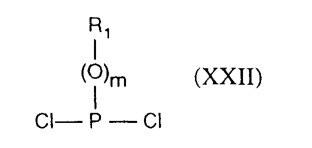 worin m und R₁ die angegebenen Bedeutungen haben, mit einer Verbindung der Formel XXIII oder einem Gemisch von Verbindungen der Formel XXIII

H―L―H (XXIII)

worin L die angegebene Bedeutung hat, umgesetzt wird.

Die Umsetzung erfolgt in der Schmelze oder in Gegenwart eines geeigneten organischen, polaren oder apolaren, aprotischen Lösungsmittels. Bevorzugt geschieht diese Umsetzung in Gegenwart einer Base bei Temperaturen zwischen -20°C und dem Siedepunkt des Lösungsmittels, insbesondere bei Temperaturen zwischen 20 und 150°C.

Basen wie beispielsweise Amine können gleichzeitig auch als Lösungsmittel verwendet werden.

Die Base kann in unterschiedlichen Mengen eingesetzt werden, von katalytischen über stöchiometrische Mengen bis hin zu mehrfachem molarem Überschuß bezüglich eingesetzten Verbindungen der Formel XXII oder Verbindungen der Formel XXIII. Der bei der Reaktion gebildete Chlorwasserstoff wird gegebenenfalls durch die Base in Chlorid überführt, das durch Filtration und/oder Waschen mit einer geeigneten wässrigen oder festen Phase entfernt werden kann; dabei kann auch ein zweites, nicht mit Wasser mischbares Lösungsmittel eingesetzt werden. Die Isolierung der Produkte erfolgt zweckmäßig durch Eindampfen der organischen Phase und Trocknung des Rückstandes.

Geeignete Lösungsmittel zur Durchführung der Reaktion sind u.a. Kohlenwasserstoffe (beispielsweise Mesitylen, Toluol, Xylol, Hexan, Pentan oder weitere Petroletherfraktionen), halogenierte Kohlenwasserstoffe (beispielsweise Di- oder Trichlormethan, 1,2-Dichlorethan, 1,1,1-Trichlorethan oder Chlorbenzol), Ether (z.B. Diethylether, Dibutylether oder Tetrahydrofuran), Ketone (z.B. Aceton, Ethylmethylketon, Diethylketon, Methylpropylketon oder Cyclohexanon), ferner Acetonitril, Butylacetat, Dimethylformamid, Dimethylsulfoxid oder N-Methylpyrrolidon.

Geeignete Basen sind u.a. primäre, sekundäre oder vor allem tertiäre Amine (z.B. Trimethylamin, Triethylamin, Tributylamin, N,N-Dimethylanilin, N,N-Diethylanilin oder Pyridin), Hydride (z.B. Lithium-, Natrium-, Kaliumhydrid) oder Alkoholate (z.B. Natriummethanolat).

Werden Hydride (z.B. Natriumhydrid, Natriumborhydrid oder Lithiumaluminiumhydrid), Alkalimetalle, Alkalihydroxide oder Natriummethanolat als Basen verwendet, kann zuerst das entsprechende Alkoholat der Verbindung der Formel XXIII gebildet werden; das gegebenenfalls dabei entstehende Reaktionsprodukt (z.B. Wasser, Methanol) wird vor der Umsetzung mit der Verbindung der Formel XXII abdestilliert (z.B. als Azeotrop mit Toluol).

Die strukturelle Zusammensetzung der oligomeren Verbindungen der Formel I ist abhängig von den Reaktionsbedingungen, wie beispielsweise dem Lösungsmittel oder der Reaktionstemperatur, sowie dem molaren Mengenverhältnis und der Konzentration der eingesetzten Verbindungen der Formel XXII und XXIII.

Sowohl die Verbindung der Formel XXII als auch die Verbindung der Formel XXIII kann in einem molaren Ueberschuss verwendet werden. Bevorzugt wird jedoch das HALS-Diol bzw. der HALS-Aminoalkohol der Formel XXIII in einem Ueberschuss verwendet. Bevorzugte molare Mengenverhältnisse der Verbindungen der Formel XXII zu XXIII sind 1,9 : 1 bis 1 : 1,9. Besonders bevorzugt ist ein molares Mengenverhältnis von 1,05 : 1 bis 1 : 1,8; insbesondere 1 : 1,1 bis 1 : 1,3.

Die vorliegende Erfindung betrifft daher auch oligomere Produkte, erhältlich durch Umsetzung einer Verbindung der Formel XXII oder eines Gemisches von Verbindungen der Formel XXII, mit einer Verbindung der Formel XXIII oder einem Gemisch von Verbindungen der Formel XXIII.

Die Herstellung der Verbindungen der Formel XXII und XXIII ist bekannt.

Die Verbindungen der Formel XXII, worin m = 1 bedeutet, sind bekannt oder können nach an sich bekannten Verfahren wie sie beispielsweise in DE-A-3 928 291 oder von R.A. Bartlett et al, J. Amer. Chem. Soc. 109 (19), 5699 (1987) beschrieben sind, hergestellt werden.

Die Verbindungen der Formel XXII, worin m = 0 bedeutet, sind ebenfalls bekannt oder können nach an sich bekannten Verfahren, wie sie beispielsweise in Org. Syntheses Coll. Vol. IV, 784 (1963) oder von Th. Weil et al, Helv. Chim. Acta 1952, 1412 oder F. Nief et al, Tetrahedron 47 (33), 6673 (1991) beschrieben sind, hergestellt werden.

Die für die Herstellung der erfindungsgemässen Verbindungen der Formel I benötigten Verbindungen der Formel XXII können in Analogie zu den oben erwähnten Literaturvorschriften in situ hergestellt werden und ohne Isolierung mit einer Verbindung der Formel XXIII zu den Verbindungen der Formel I weiter umgesetzt werden.

Die HALS-Verbindungen der Formel XXIII sind bekannt oder können nach an sich bekannten Verfahren, wie sie beispielsweise in US-A-3 974 127, US-A-4 279 804; US-A-4 798 836; US-A-4 883 870 und US-A-5 198 546 beschrieben sind, hergestellt werden.

In der wiederkehrenden Struktureinheit der Formel I kann L die gleiche oder verschiedene Bedeutungen haben.

Wird die HALS-Verbindung der Formel XXIII im Ueberschuss verwendet, sind wie in Formel XXIV dargestellt, 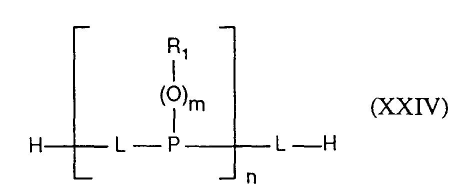 die Endgruppen der oligomeren Verbindungen der Formel I vorwiegend Hydroxy- oder sekundäre Amin-Gruppen, die bei Bedarf leicht nach bekannten Methoden derivatisiert werden können. Diese Endgruppen lassen sich beispielsweise mit Säurehalogeniden, wie beispielsweise Carbonsäurehalogeniden oder Phosphorsäurehalogeniden, oder Säureanhydriden verestern; mit Silylhalogeniden silylieren; mit Alkyl- oder Benzyl-Halogeniden alkylieren bzw. benzylieren; mit Isocyanaten zu den Urethanen umsetzen; mit Isothiocyanaten zu den Thiourethanen derivatisieren; mit Sulfonylhalogeniden und beispielsweise Thionylchlorid zu den Halogeniden umsetzen; oder mit Chorphosphiten wie beispielsweise der Formel XXV, XXVI oder XXVII 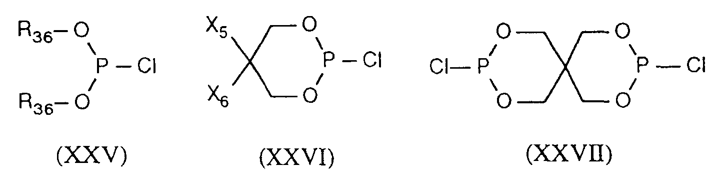 zur Reaktion gebracht werden, worin R₃₆ beispielsweise C₁-C₂₅-Alkyl, unsubstituiertes oder durch C₁-C₄-Alkyl substituiertes Phenyl; oder C₇-C₉-Phenylalkyl bedeutet, X₅ und X₆ unabhängig voneinander Wasserstoff oder C₁-C₄-Alkyl bedeuten oder zusammen mit dem Kohlenstoffatom, an das sie gebunden sind, einen 3,4-Dehydrocyclohexylidenring bilden.

Durch C₁-C₄-Alkyl substituiertes Phenyl, das vorzugsweise 1 bis 3, insbesondere 1 oder 2 Alkylgruppen enthält, bedeutet beispielsweise o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-butylphenyl, 2-Ethylphenyl oder 2,6-Diethylphenyl.

Wird die Verbindung der Formel XXII im Ueberschuss verwendet, tragen, wie in den Formeln XXVIII, XXIX und XXX dargestellt, 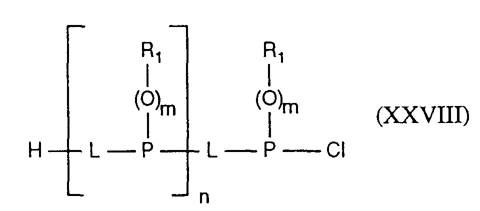 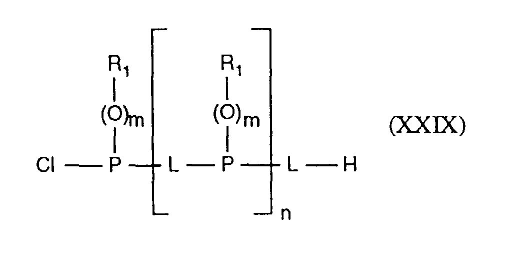 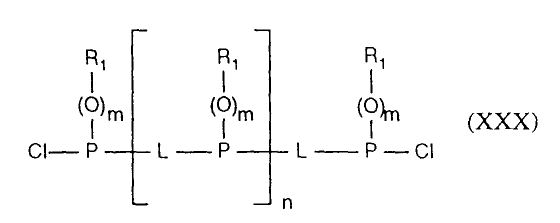 die Endgruppen der oligomeren Verbindungen der Formel I teilweise noch reaktive 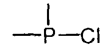 Gruppen. Die Chloratome können nach bekannten Methoden mit zusätzlichen Nukleophilen, wie beispielsweise Phenolen, Alkoholen, Aminen, Mercaptanen oder Dialkylphosphiten unter Abspaltung von Salzsäure substituiert werden. Geeignete Alkohole sind C₁-C₈-Alkanole wie beispielsweise Methanol, Ethanol, n-Propanol oder n-Butanol.

Die oligomeren Verbindungen der Formel I können auch als Ringsysteme gemäss Formel XXXI vorliegen, 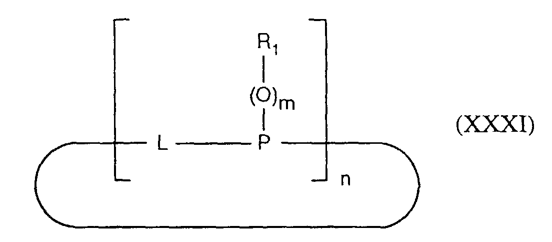 bei welchen die Hydroxy-Endgruppe bzw. die sekundäre Amino-Endgruppe in L mit dem anderen Kettenende 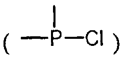 unter Salzsäureabspaltung einen Ring schliesst.

Die vorliegende Erfindung betrifft bevorzugt oligomere Verbindungen der Formel XXXII 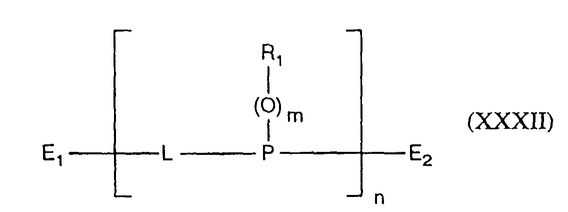 worin die Endgruppen E₁ Wasserstoff, 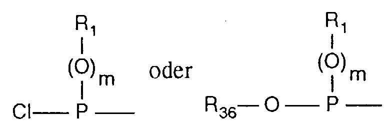 bedeutet,
die Endgruppe E₂ -L-H, 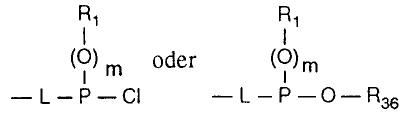 darstellt; oder ferner die Endgruppen E₁ und E₂ zusammen eine direkte Bindung bilden (cyclische Verbindungen); und R₃₆ C₁-C₈-Alkyl bedeutet.

Speziell bevorzugt sind solche oligomeren Verbindungen der Formel XXXII, worin die Endgruppe E₁ Wasserstoff darstellt und die Endgruppe E₂ -L-H bedeutet, worin L die angegebene Bedeutung besitzt.

Die erfindungsgemässen Verbindungen der Formel I eignen sich zum Stabilisieren von organischen Materialien gegen oxidativen, thermischen oder lichtinduzierten Abbau.

### Beispiele für derartige Materialien sind:

1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π oder σ-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), PropylenButen-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/EthylenVinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und - methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-PropylenDien-Terpolymeren; sowie Block-Copolymere des Styrols, wie z.B. Styrol-ButadienStyrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-VinylhalogenidCopolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide, Polyetherimide, Polyesterimide, Polyhydantoine und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, Isocyanaten, Isocyanuraten, Polyisocyanaten oder Epoxidharzen vernetzt sind.
26. Vernetzte Epoxidharze, die sich von aliphatischen, cycloaliphatischen, heterocyclischen oder aromatischen Glycidylverbindungen ableiten, z.B. Produkte von Bisphenol-Adiglycidylethern, Bisphenol-F-diglycidylethern, die mittels üblichen Härtern wie z.B. Anhydriden oder Aminen mit oder ohne Beschleunigern vernetzt werden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.
29. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.
30. Wässrige Emulsionen natürlicher oder synthetischer Kautschuke, wie z.B. Naturkautschuk-Latex oder Latices von carboxylierten Styrol-Butadien-Copolymeren.

Weitere Gegenstände der Erfindung sind daher auch Zusammensetzungen enthaltend (a) ein dem oxidativen, thermischen oder lichtinduzierten Abbau unterworfenes organisches Material und (b) mindestens eine oligomere Verbindung der Formel I oder mindestens ein oligomeres Produkt, erhältlich durch Umsetzung einer Verbindung der Formel XXII oder eines Gemisches von Verbindungen der Formel XXII, mit einer Verbindung der Formel XXIII oder einem Gemisch von Verbindungen der Formel XXIII.

Vorzugsweise handelt es sich bei den zu schützenden organischen Materialien um natürliche, halbsynthetische oder bevorzugt synthetische Polymere. Besonders bevorzugt sind thermoplastische Polymere, insbesondere PVC oder Polyolefine, vor allem Polyethylen und Polypropylen.

Besonders hervorzuheben ist die Wirkung der erfindungsgemässen Verbindungen gegen thermischen und oxidativen Abbau, vor allem bei thermischer Belastung, wie sie bei der Verarbeitung von Thermoplasten auftritt. Die erfindungsgemässen Verbindungen sind daher hervorragend als Verarbeitungsstabilisatoren einzusetzen.

Vorzugsweise werden die oligomeren Verbindungen der Formel I dem zu stabilisierenden Material in Mengen von 0,01 bis 10 %, beispielsweise 0,01 bis 5 %, vorzugsweise 0,025 bis 3 %, insbesondere 0,025 bis 1 % zugesetzt, bezogen auf das Gewicht des zu stabilisierenden organischen Materials.

Zusätzlich zu den oligomeren Verbindungen der Formel I können die erfindungsgemässen Zusammensetzungen weitere Costabilisatoren enthalten, wie beispielsweise die folgenden:
1. Antioxidantien
   1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Ditert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1-methyl-heptadec-1'-yl)-phenol, 2,4-Dimethyl-6-(1'-methyl-tridec-1'-yl)-phenol und Mischungen davon.
   1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
   1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tertbutyl-4-hydroxyanisol, 3,5-Di-tert-butyl-4-hydroxyphenyl-stearat, Bis(3,5-di-tert-butyl-4-hydroxyphenyl)adipat.
   1.4. Tocopherole, z.B. α-Tocopherol, β-Tocopherol, γ-Tocopherol, δ-Tocopherol und Mischungen davon (Vitamin E).
   1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.
   1.6. Alkyliden-Bisphenole, z.B. 2,2'-Methylen-bis(6-tert-butyl-4-methylphenol), 2,2'-Methylen-bis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis-(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3-tert-butyl-2'-hydroxy5'-methyl-benzyl)-6-tert-butyl-4-methyl-phenyl]-terephthalat, 1,1-Bis(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
   1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.
   1.8. Hydroxybenzylierte Malonate, z.B. Dioctadecyl-2,2-bis(3,5-di-tert-butyl-2-hydroxy-benzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.
   1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5 6-tetramethylbenzol, 2,4,6-Tris(3,5-di-tert-butyl-4-hydroxybenzyl)-phenol.
   1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-12,3-triazin,1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat,2,4,6-Tris(3,5-di-tert-butyl-4-hydroxyphenylethyl)- 1,3,5-triazin,1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.
   1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
   1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
   1.13. Ester der β-(3,5-Di-tert-butyl-4-hydroxyophenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(5-tert-Butyl-4-hydroxy-3-methylophenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha2,6,7-trioxabicyclo-[2.2.2]-octan.
   1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethyl-hexandiol, Trimethylolpropan, 4-Hydroxymethyl-1-phospha-2,6,7-trioxabicyclo-[2.2.2]-octan.
   1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.17. Amide der β-(3,5-Di-tert-butyl-4-hydroxyphenyl)-propionsäure, (3,5-di-tert-butyl-4-hydroxyphenylpropionyl)-hexamethylendiamin, N,N'-Bis(3,5-di-tert-butyl-4-hydroxyphenylpropionyl)-trimethylendiamin, N,N'-Bis(3,5-di-tert-butyl-4-hydroxyphenylpropionyl)-hydrazin.
   1.18. Ascorbinsäure (Vitamin C).
   1.19. Aminische Antioxidantien, wie z.B. N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis( 1 -ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Di-methyl-butyl)-N'-phenyl-p-phenylendiamin, N-(1-Methyl-heptyl)-N'-phenyl-p-phenylen-diamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylaminophenol, 4-Dodecanoylamino-phenol, 4-Octadecanoylamino-phenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und di- alkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethylpiperidin-4-on, 2,2,6,6-Tetramethylpiperidin-4-ol.
2. UV-Absorber und Lichtschutzmittel
   2.1.2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, Mischung aus 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5-(2-methoxycarbonylethyl)-2'-hydroxy-phenyl]-benzotriazol mit Polyethylenglycol 300; [R-CH₂CH₂-COO(CH₂)₃ 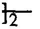 mit R = 3'-tert-Butyl-4'-hydroxy-5'-2H-benzotriazol-2-yl-phenyl.
   2.2. 2-Hydroxybenzoyhenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2-Hydroxy-4,4'-dimethoxy-Derivat.
   2.3. Ester von e ebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethyl-ester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis(2,2,6,6-tetramethyl-piperidin-4-yl)-sebacat, Bis(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis(1-octyloxy-2,2,6,6-tetramethylpiperidyl)-sebacat, Bis(1-octyloxy-2,2,6,6-tetramethylpiperidyl)-succinat, Kondensationsprodukt aus N,N'-Bis(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)-ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetra-methyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethyl-piperidin, Kondenstionsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro[4,5]decan und Epichlorhydrin.
   2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyl-oxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis-(2,4-dimethylphenyl)-1,3,5-triazin, 2-[2-Hydroxy-4-(2-hydroxy-3-butyloxy-propyloxy)-phenyl]-4,6-bis(2,4-dimethylphenyl)-1,3,5-triazin, 2-[2-Hydroxy-4-(2-hydroxy-3-octyl-oxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin,2-(2-Hydroxy-4-hexyloxy)phenyl-4,6-diphenyl- 1,3,5-triazin,2-(2-Hydroxy-4-methoxyphenyl)-4,6-diphenyl-1,35-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin.
3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenyl-propionyl)-hydrazin, 3-Salicyloylamino-1,2,4-triazol, Bis(benzyliden)-oxalsäuredi-hydrazid, Oxanilid, Isophthalsäure-dihydrazid, Sebacinsäure-bis-phenylhydrazid, N,N'-Di-acetyl-adipinsäure-dihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit,6-Isooctyloxy-2,4,8,10-tetra-tert-butyl-12H-di-benz[d,g]-1,3,2-dioxaphosphocin, 6-Fluor-2,4,8,10-tetra-tert-butyl-12-methyl-dibenz-[d,g]-1,3,2-dioxaphosphocin, Bis(2,4-di-tert-butyl-6-methylphenyl)-methylphosphit, Bis-(2,4-di-tert-butyl-6-methylphenyl)-ethylphosphit.
5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecyl-hydroxylamin, N-Heptadecyl-N-octadecylhydroxylamin, N,N-Dialkylhydroxylamin aus hydrierten Talgfettaminen.
6. Nitrone wie z.B. N-Benzyl-alpha-phenyl-nitron, N-Ethyl-alpha-methyl-nitron, N-Octyl-alpha-heptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alpha-heptadecyl-nitron, N-Ocatadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.
7. Thiosynergisten wie z.B. Thiodipropionsäure-di-laurylester oder Thiodipropionsäure-di-stearylester.
8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.
9. Polyamidstabilisatoren, wie z.B. Kupfersalze in Kombination mit Jodiden und/oder Phosphorverbindungen und Salze des zweiwertigen Mangans.
10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.
11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natrium-succinat oder Natriumbenzoat; polymere Verbindungen wie z.B. ionische Copolymerisate ("Ionomere").
12. Füllstoffe und Verstärkungsmittel, wie z.B. Calciumcarbonat, Silikate, Glasfasern, Glaskugeln, Asbest, Talk, Kaolin, Glimmer, Bariumsulfat, Metalloxide und -hydroxide, Ruß, Graphit, Holzmehl und Mehle oder Fasern anderer Naturprodukte, synthetische Fasern.
13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.
14. Benzofuranone bzw. Indolinone, wie z.B. in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 oder EP-A-0 591 102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis[5,7-di-tert-butyl-3-(4-[2-hydroxyethoxy]-phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Die Costabilisatoren, mit Ausnahme der unter Punkt 14 aufgeführten Benzofuranone, werden beispielsweise in Konzentrationen von 0,01 bis 10 % bezogen auf das Gesamtgewicht des zu stabilisierenden Materials, zugesetzt.

Weitere bevorzugte Zusammensetzungen enthalten neben der Komponente (a) und den oligomeren Verbindungen der Formel I noch weitere Additive, insbesondere phenolische Antioxidantien, Lichtschutzmittel oder/und Verarbeitungsstabilisatoren.

Besonders bevorzugte Additive sind phenolische Antioxidantien (Punkt 1 der Liste), sterisch gehinderte Amine (Punkt 2.6 der Liste), Phosphite und Phosphonite (Punkt 4. der Liste) und peroxidzerstörende Verbindungen (Punkt 8 der Liste).

Ebenfalls besonders bevorzugte zusätzliche Additive (Stabilisatoren) sind Benzofuran-2-one, wie sie z.B. in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 und EP-A-0 591 102 beschrieben werden.

Beispiele für solche Benzofuran-2-one sind Verbindungen der Formel 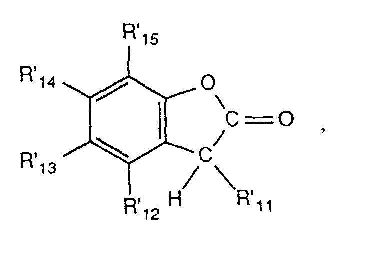 worin
R'₁₁ ein unsubstituiertes oder substituiertes carbocyclisches oder heterocyclisches aromatisches Ringsystem bedeutet;
R'₁₂ Wasserstoff ist;
R'₁₄ Wasserstoff, Alkyl mit 1 bis 12 Kohlenstoffatomen, Cyclopentyl, Cyclohexyl oder Chlor ist;
R'₁₃ die Bedeutung von R'₁₂ oder R'₁₄ hat oder ein Rest der Formel 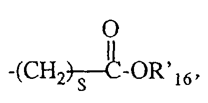 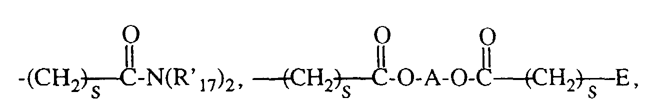 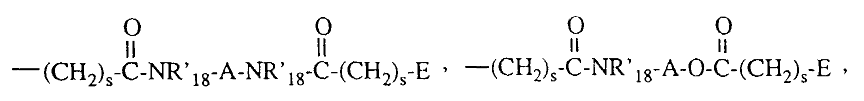 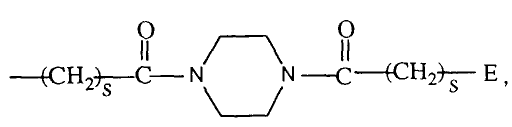 -CH₂-S-R'₁₉, 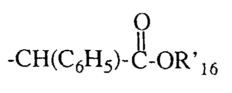 oder -D-E ist, worin
R'₁₆ Wasserstoff, Alkyl mit 1 bis 18 Kohlenstoffatomen, durch Sauerstoff oder Schwefel unterbrochenes Alkyl mit 2 bis 18 Kohlenstoffatomen, Dialkylaminoalkyl mit insgesamt 3 bis 16 Kohlenstoffatomen, Cyclopentyl, Cyclohexyl, Phenyl oder durch 1 bis 3 Alkylreste mit zusammen höchstens 18 Kohlenstoffatomen substituiertes Phenyl ist;
s 0, 1 oder 2 ist;
die Substituenten R'₁₇ unabhängig voneinander Wasserstoff, Alkyl mit 1 bis 18 Kohlenstoffatomen, Cyclopentyl, Cyclohexyl, Phenyl, durch 1 oder 2 Alkylreste mit zusammen höchstens 16 Kohlenstoffatomen substituiertes Phenyl, ein Rest der Formel -C₂H₄OH, -C₂H₄-O-CₜH₂ₜ₊₁ oder 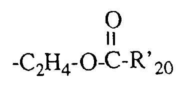 sind oder zusammen mit dem Stickstoffatom, an das sie gebunden sind, einen Piperidin- oder Morpholinrest bilden;
t 1 bis 18;
R'₂₀ Wasserstoff, Alkyl mit 1 bis 22 Kohlenstoffatomen oder Cycloalkyl mit 5 bis 12 Kohlenstoffatomen;
A ein gegebenenfalls durch Stickstoff, Sauerstoff oder Schwefel unterbrochenes Alkylen mit 2 bis 22 Kohlenstoffatomen;
R'₁₈ Wasserstoff, Alkyl mit 1 bis 18 Kohlenstoffatomen, Cyclopentyl, Cyclohexyl, Phenyl, durch 1 oder 2 Alkylreste mit zusammen höchstens 16 Kohlenstoffatomen substituiertes Phenyl oder Benzyl;
R'₁₉ Alkyl mit 1 bis 18 Kohlenstoffatomen bedeutet;
D -O-, -S-, -SO-, -SO₂ oder -C(R'₂₁)₂- ist;
die Substituenten R'₂₁ unabhängig voneinander Wasserstoff, C₁-C₁₆-Alkyl sind, wobei die beiden R'₂₁ zusammen 1 bis 16 Kohlenstoffatome enthalten, R'₂₁ ferner Phenyl oder einen Rest der Formel 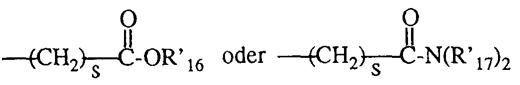 ist, worin s, R'₁₆ und R'₁₇ die oben angegebenen Bedeutungen haben;
E ein Rest der Formel 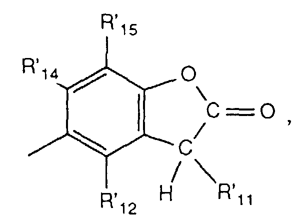 worin R'₁₁, R'₁₂ und R'₁₄ die oben angegebenen Bedeutungen haben; und
R'₁₅ Wasserstoff, Alkyl mit 1 bis 20 Kohlenstoffatomen, Cyclopentyl, Cyclohexyl, Chlor oder ein Rest der Formel 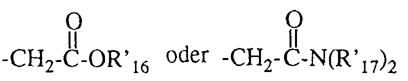 ist, worin R'₁₆ und R'₁₇ die oben angegebenen Bedeutungen haben, oder R'₁₅ zusammen mit R'₁₄ einen Tetramethylenrest bildet.

Bevorzugt sind solche Benzofuran-2-one, in denen R'₁₃ Wasserstoff, Alkyl mit 1 bis 12 Kohlenstoffatomen, Cyclopentyl, Cyclohexyl, Chlor oder ein Rest der Formel 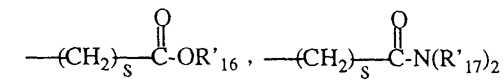 oder -D-E ist, worin s, R'₁₆, R'₁₇, D und E die oben angegebenen Bedeutungen haben, R'₁₆ insbesondere die Bedeutung von Wasserstoff, Alkyl mit 1 bis 18 Kohlenstoffatomen, Cyclopentyl oder Cyclohexyl hat.

Bevorzugt sind weiterhin solche Benzofuran-2-one, in denen R'₁₁ Phenyl oder durch 1 oder 2 Alkylreste mit zusammen höchstens 12 Kohlenstoffatomen substituiertes Phenyl ist; R'₁₂ Wasserstoff; R'₁₄ Wasserstoff oder Alkyl mit 1 bis 12 Kohlenstoffatomen ist;
R'₁₃ Wasserstoff, Alkyl mit 1 bis 12 Kohlenstoffatomen, 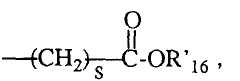 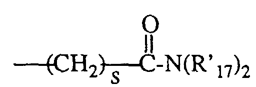 oder -D-E; R'₁₅ Wasserstoff, Alkyl mit 1 bis 20 Kohlenstoffatomen, 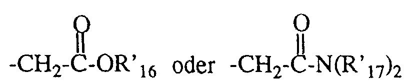 ist oder R'₁₅ zusammen mit R'₁₄ einen Tetramethylenrest bildet, wobei s, R'₁₆, R'₁₇, D und E die zu Anfang angegebenen Bedeutungen haben.

Ebenfalls von besonderem Interesse sind solche Benzofuran-2-one, in denen R'₁₃ Wasserstoff, Alkyl mit 1 bis 12 Kohlenstoffatomen oder -D-E ist; R'₁₂ und R'₁₄ unabhängig voneinander Wasserstoff oder Alkyl mit 1 bis 4 Kohlenstoffatomen sind; und R'₁₅ Alkyl mit 1 bis 20 Kohlenstoffatomen ist, wobei D und E die zu Anfang angegebenen Bedeutungen haben.

Ebenfalls von hervorgehobenem Interesse sind schließlich solche Benzofuran-2-one, in denen R'₁₃ Alkyl mit 1 bis 4 Kohlenstoffatomen oder -D-E ist; R'₁₂ und R'₁₄ Wasserstoff sind; und R'1₅ Alkyl mit 1 bis 4 Kohlenstoffatomen, Cyclopentyl oder Cyclohexyl ist, wobei D eine Gruppe -C(R'₂₁)₂- und E ein Rest der Formel 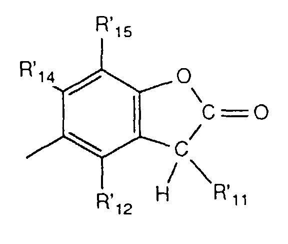 ist, wobei die Substituenten R'₂₁ gleich oder verschieden voneinander sind und je Alkyl mit 1 bis 4 Kohlenstoffatomen sind, und R'₁₁, R'₁₂, R'₁₄ und R'₁₅ die angegebene Bedeutung haben.

Die Menge an zusätzlich eingesetzten Benzofuran-2-onen, kann in weiten Grenzen schwanken. Beispielsweise können sie zu 0,0001 bis 5, vorzugsweise 0,001 bis 2, insbesondere 0,01 bis 2 Gew.-%, in den erfindungsgemäßen Zusammensetzungen enthalten sein.

Die Einarbeitung der oligomeren Verbindungen der Formel I sowie gegebenenfalls weiterer Additive in das polymere, organische Material erfolgt nach bekannten Methoden, beispielsweise vor oder während der Formgebung oder auch durch Aufbringen der gelösten oder dispergierten Verbindungen auf das polymere, organische Material, gegebenenfalls unter nachträglichem Verdunsten des Lösungsmittels. Die oligomeren Verbindungen der Formel I können auch in Form eines Masterbatches, der diese beispielsweise in einer Konzentration von 2,5 bis 25 Gew.-% enthält, den zu stabilisierenden Materialien zugesetzt werden.

Die oligomeren Verbindungen der Formel I können auch vor oder während der Polymerisation oder vor der Vernetzung zugegeben werden.

Die oligomeren Verbindungen der Formel I können in reiner Form oder in Wachsen, Oelen oder Polymeren verkapselt in das zu stabilisierende Material eingearbeitet werden.

Die oligomeren Verbindungen der Formel I können auch auf das zu stabilisierende Polymer aufgesprüht werden. Sie sind in der Lage, andere Zusätze (z.B. die oben angegebenen herkömmlichen Additive) bzw. deren Schmelzen zu verdünnen, so dass sie auch zusammen mit diesen Zusätzen auf das zu stabilisierende Polymer aufgesprüht werden können. Besonders vorteilhaft ist die Zugabe durch Aufsprühen während der Desaktivierung der Polymerisationskatalysatoren, wobei z.B. der zur Desaktivierung verwendete Dampf zum Versprühen verwendet werden kann.

Bei kugelförmig polymerisierten Polyolefinen kann es z.B. vorteilhaft sein, die oligomeren Verbindungen der Formel I, gegebenenfalls zusammen mit anderen Additiven, durch Aufsprühen zu applizieren.

Die so stabilisierten Materialien können in verschiedenster Form angewendet werden, z.B. als Folien, Fasern, Bändchen, Formmassen, Profile oder als Bindemittel für Lacke, Kleb0stoffe oder Kitte.

Wie bereits erwähnt, handelt es sich bei den zu schützenden organischen Materialien vorzugsweise um organische, besonders synthetische, Polymere. Besonders vorteilhaft werden dabei thermoplastische Materialien geschützt, insbesondere Polyolefine. Vor allem ist dabei die ausgezeichnete Wirksamkeit der oligomeren Verbindungen der Formel I als Verarbeitungsstabilisatoren (Hitzestabilisatoren) hervorzuheben. Zu diesem Zweck werden sie vorteilhaft vor oder während der Verarbeitung des Polymeren diesem zugesetzt. Aber auch weitere Polymere (z.B. Elastomere) oder Schmierstoffe bzw. Hydraulikflüssigkeiten können gegen Abbau, z.B. lichtinduzierten oder thermooxidativen Abbau, stabilisiert werden. Elastomere sind der obigen Aufzählung von möglichen organischen Materialien zu entnehmen.

Die in Frage kommenden Schmierstoffe und Hydraulikflüssigkeiten basieren beispielsweise auf mineralischen oder synthetischen Ölen oder Mischungen davon. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) und in Ullmanns Enzyklopädie der technischen Chemie", Bd. 13, Seiten 85-94 (Verlag Chemie, Weinheim, 1977) beschrieben.

Eine bevorzugte Ausführungsform der vorliegenden Erfindung ist daher die Verwendung von oligomeren Verbindungen der Formel I sowie Produkte, erhältlich durch Umsetzung einer Verbindung der Formel XXII oder eines Gemisches von Verbindungen der Formel XXII, mit einer Verbindung der Formel XXIII oder einem Gemisch von Verbindungen der Formel XXIII, zum Stabilisieren von organischen Materialien gegen oxidativen, thermischen oder lichtinduzierten Abbau.

Die erfindungsgemässen oligomeren Verbindungen der Formel I zeichnen sich durch eine ausgeprägt gute Hydrolysestabilität und ein vorteilhaftes Farbverhalten, d.h. geringe Verfärbung der organischen Materialien während der Verarbeitung, aus.

Organische Materialien, die mit den Verbindungen der vorliegenden Erfindung stabilisiert sind, sind besonders gut vor einem lichtinduzierten Abbau geschützt.

Die vorliegende Erfindung betrifft auch ein Verfahren zum Stabilisieren eines organischen Materials gegen oxidativen, thermischen oder lichtinduzierten Abbau, dadurch gekennzeichnet, daß man diesem mindestens eine oligomere Verbindung der Formel I oder mindestens ein Produkt, erhältlich durch Umsetzung einer Verbindung der Formel XXII oder eines Gemisches von Verbindungen der Formel XXII, mit einer Verbindung der Formel XXIII oder einem Gemisch von Verbindungen der Formel XXIII, einverleibt oder auf dieses aufbringt.

Die folgenden Beispiele erläutern die Erfindung weiter. Angaben in Teilen oder Prozenten beziehen sich auf das Gewicht.

### Beispiel 1: Herstellung der oligomeren Verbindung (101) (Tabelle 1).

a) Zu einer unter Stickstoffatmosphäre gerührten Lösung von 4,41 g (20,0 mMol) 2,4-Ditert-butyl-6-methyl-phenol und 50 mg (0,40 mMol) 4-Dimethylaminopyridin in 12 ml Toluol wird bei 50°C 3,57 g (26,0 mMol; 1,3 Equivalent) Phosphortrichlorid getropft. Nach ca. 5 Minuten wird auf 100°C erwärmt und während 30 Minuten bei dieser Temperatur gerührt (Ende der Salzsäure-Gas-Entwicklung). Die Lösung wird mit 12 ml Toluol verdünnt. Der Ueberschuss an Phosphortrichlorid und ca. 12 ml Toluol werden anschliessend abdestilliert. Der Rückstand enthält das 2,4-Di-tert-butyl-6-methylphenylphosphorodichloridit.
b) In einen Stahlautoklav werden 42,47g (0,20 Mol) 4-n-Butylamino-2,2,6,6-tetramethylpiperidin [EP-A-302 020, Beispiel 1, Seite 4], 3 ml konzentrierte Salzsäure und 300 ml Methanol vorgelegt. Der Autoklav wird mit Stickstoff inertisiert. Dann werden 26,5 g (0,60 Mol) Ethylenoxid zugepresst und das ganze Reaktionsgemisch auf 150°C erwärmt. Der entstehende Druck beträgt 10 bar. Nach 30 Stunden wird auf Raumtemperatur gekühlt. Ca. 250 ml Methanol werden abdestilliert, der Rückstand auf eine wässrige gesättigte Natriumhydrogencarbonat-Lösung gegossen und mit Essigester dreimal extrahiert. Die organischen Phasen werden mit einer wässrigen, gesättigten Natriumchlorid-Lösung gewaschen, über Natriumsulfat getrocknet und am Vakuumrotationsverdampfer eingeengt. Chromatographie des Rückstandes an Kieselgel mit dem Laufmittelsystem Hexan/Essigester 3:1 bis 1:1 und Essigester liefert 31,5 g (53 %) 2-(n-Butyl-[1-(2-hydroxyethyl)2,2,6,6-tetramethyl-piperidin-4-yl]amino)ethanol (Verbindung (201)), als hellgelbes Oel. Analyse berechnet: C 67,95 %; H 12,08 %; N 9,32 %. gefunden: C 67,31 %; H 11,98 %; N 9,10 %. 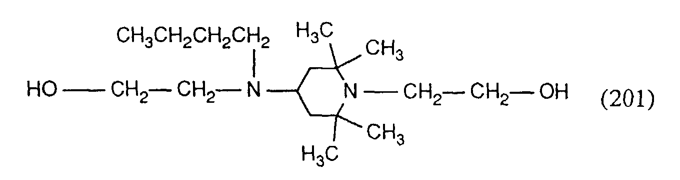
   α) In Analogie zu Beispiel 1b) wird ausgehend vom bekannten 4-Amino-1,2,2,6,6-pentamethylpiperidin [Beilstein EII, Vol. 22, Seite 321] mit Ethylenoxid das HALS-Diol (202) hergestellt, Smp. 57-64°C. Analyse berechnet: C 65,07 %; H 11,70 %; N 10,84 %. gefunden: C 64,68 %; H 11,43 %; N 10,69 %. 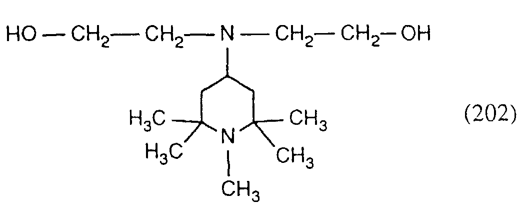
   β) In Analogie zu Beispiel 1b) wird ausgehend vom bekannten Bis(2,2,6,6-tetramethyl-piperidin-4-yl)sebacinsäureester [®Tinuvin 770, Ciba-Geigy AG, US-A-4 396 769] mit Ethylenoxid das HALS-Diol (203) hergestellt. Ausbeute 67 %, Smp. 59-62°C, weisses Pulver. Analyse berechnet: C 67,57 %; H 10,63 %; N 4,92 %. gefunden: C 67,37 %; H 10,67 %; N 4,78 %. 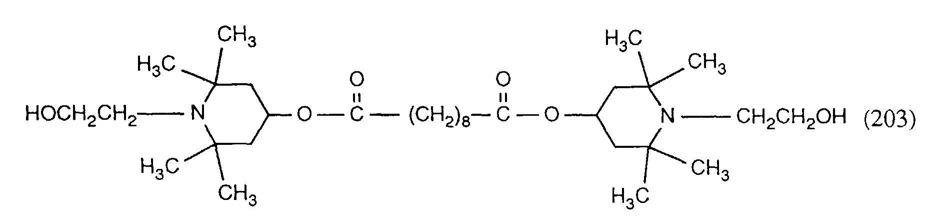
   γ)
      1. Zu einer Lösung von 42,4 g (0,23 Mol) Cyanurchlorid in 280 ml Xylol wird unter Stickstoffatmosphäre bei 15°C 99,4 g (0,46 Mol) 4-n-Butylamino-2,2,6,6-tetramethyl-piperidin [EP-A-302 020, Beispiel 1, Seite 4] getropft. Das Reaktionsgemisch wird während 30 Minuten bei Raumtemperatur gerührt. Anschliessend wird auf ca. 55°C erwärmt und eine Lösung von 20 g (0,50 Mol) Natriumhydroxid in 50 ml Wasser zugetropft Nach Ende der Zugabe wird das Reaktionsgemisch weitere 30 Minuten bei 55°C gerührt. Die wässrige Phase wird abgetrennt und das Gemisch auf 90°C erwärmt. Gleichzeitig werden 24 g (0,27 Mol) Morpholin und eine Lösung von 10 g (0,25 Mol) Natriumhydroxid in 25 ml Wasser zugetropft Das Wasser wird azeotrop abdestilliert. Anschliessend wird unter leichtem Vakuum 50 ml Xylol abdestilliert (115°C/0,7 Torr). Das auf ca. 50°C abgekühlte Reaktionsgemisch wird zweimal mit Wasser gewaschen. Die organische Phase wird über Hyflo filtriert. Nach Zugage von 50 ml Wasser und Abkühlen auf 5°C kristallisieren 110 g (82 %) 2-N-Morpholino-4,6-bis[N-n-butyl-(2,2,6,6-tetramethyl-piperidin-4-yl)amino]-13,5-triazinalsweisses Pulver aus, Smp. 112-114°C. Analyse berechnet: C 67,53 %; H 10,65 %; N 19,09 %. gefunden: C 67,28 %; H 10,70 %; N 19,06 %.
      2. In Analogie zu Beispiel 1b) wird ausgehend vom 2-N-Morpholino-4,6-bis[N-n-butyl-(2,2,6,6-tetramethyl-piperidin-4-yl)amino]-1,3,5-triazin (Beispiel yl) mit Ethylenoxid das HALS-Diol (204) hergestellt. Smp. 114-117°C. Analyse berechnet: C 65,84 %; H 10,45 %; N 16,60 %. gefunden: C 65,86 %; H 10,33 %; N 16,01 %. 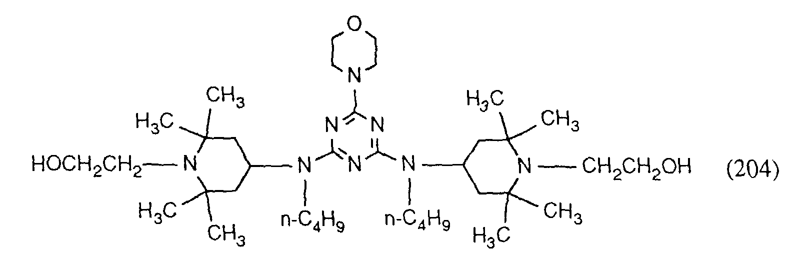
   δ)
      1. In einem 200 ml Sulfierkolben werden 40,48 g (0,14 Mol) Bis(2,2,6,6-tetramethyl-piperidin-4-yl)amin [EP-A-336 895, Ciba-Geigy] und 11,4 g (0,14 Mol) einer 36 % wässrigen Formaldehyd-Lösung vorgelegt. Bei Raumtemperatur werden 25,8 g (0,56 Mol) Ameisensäure zugetropft. Dabei steigt die Innentemperatur unter CO₂-Entwicklung auf 70°C an. Das Reaktionsgemisch wird bis zum Abkühlen auf Raumtemperatur weiter gerührt, die wässrige Phase mit Kaliumcarbonat gesättigt und das Reaktionsgemisch mit Chloroform dreimal extrahiert. Die organischen Phasen werden vereinigt, über Kaliumcarbonat getrocknet und am Vakuumrotationsverdampfer eingeengt. Chromatographie des Rückstandes an Kieselgel mit dem Laufmittelsystem Hexan/Dichlormethan 9:1 + 5 % Triethylamin liefert 21 g (49 %) des Methyl-bis-(2,2,6,6-tetramethyl-piperidin-4-yl)amins, Smp. 51-53°C, als weisses Pulver. ¹H-NMR (300 MHz, CDCl₃): δ= 2,25 ppm (s, 3H) Methylgruppe am Stickstoff.
      2. In Analogie zu Beispiel lb) wird ausgehend vom Methyl-bis(2,2,6,6-tetramethyl-piperidin-4-yl)amin (Beispiel δ1) mit Ethylenoxid das HALS-Diol (205) hergestellt. Analyse berechnet: C 69,47 %; H 11,91 %; N 10,57 %. gefunden: C 68,31 %; H 12,16 %; N 10,50 %. 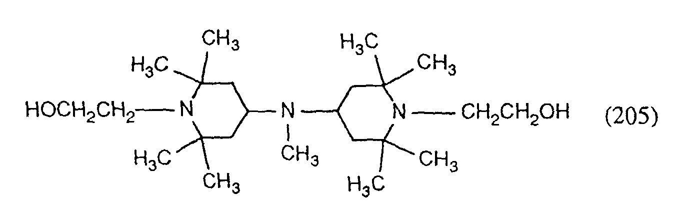
   ε) Das HALS-Diol (206) ist bekannt und die Herstellung in US-A-4 210 576, Seite 5, Beispiel 1, beschrieben. 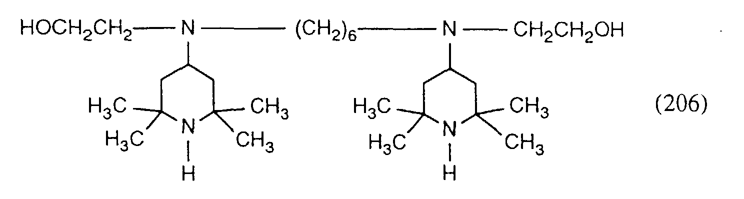
   φ)
      1. Zu einer Lösung von 69,7 g (0,13 Mol) 2,4-Bis[N-(2,2,6,6-tetramethyl-4-piperidinyl)butylamino]-6-chloro-1,3,5-triazin [EP-A-314 472, Sankyo] in 400 ml Toluol wird bei Raumtemperatur und unter Stickstoffatmosphäre 63,5 g (0,195 Mol) einer 21 %igen Natriumethylat-Lösung in Toluol getropft. Anschliessend wird das Reaktionsgemisch während 20 Stunden unter Rückfluss gekocht. Nach dem Abkühlen auf Raumtemperatur wird das Reaktionsgemisch nacheinander mit Wasser, lN Natriumhydrogencarbonat-Lösung Wasser und gesättigter Natriumchlorid-Lösung gewaschen. Die organischen Phasen werden vereinigt, über Kaliumcarbonat getrocknet und am Vakuumrotationsverdampfer eingeengt. Kristallisation des Rückstandes aus Acetonitril liefert 52,2 g (74 %) 2-Ethoxy-4,6-bis[N-(2,2,6,6-tetramethyl-4-piperidinyl)butylamino]-1,3,5-triazin, Smp. 95-104°C, weisses Pulver. ¹H-NMR (300 MHz, CDCl₃): δ=4,345 ppm (q, J = 7 Hz) -O**CH**₂CH₃.
      2. In einem 11 Autoklav werden 38,5 g (0,07 Mol) 2-Ethoxy-4,6-bis[N-(2,2,6,6-tetramethyl-4-piperidinyl)butylamino]-1,3,5-triazin (Beispiel φ1), 140 ml Ethanol und 70 ml Wasser vorgelegt. Der Autoklav wird mit Stickstoff inertisiert. Anschliessend werden 12,4 g (0,28 Mol) Ethylenoxid zugepresst und das Reaktionsgemisch auf 90°C erwärmt (Druck =2 bar). Nach 2 Stunden wird auf 30°C abgekühlt und nochmals 12,4 g (0,28 Mol) Ethylenoxid zugepresst. Das Reaktionsgemisch wird auf 100°C erwärmt und während 3 Stunden bei dieser Temperatur gehalten (Druck = 3 bar). Nach dem Abkühlen auf Raumtemperatur wird das Reaktionsgemisch am Vakuumrotationsverdampfer eingeengt. Der Rückstand wird in 100 ml Acetonitril gelöst und heiss filtriert. Beim Abkühlen kristallisieren 40 g (90 %) des HALS-Diols (207), Smp. 160-170°C, als weisses Pulver aus. Analyse berechnet: C 66,31 %; H 10,65 %; N 15,47 %. gefunden: C 66,23 %; H 10,61 %; N 15,34 %. 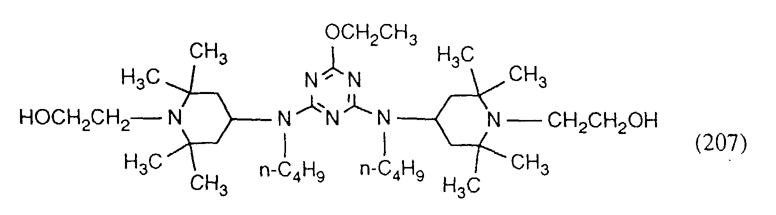
   η)
      1. Zu einer Lösung von 42,5 g (0,20 Mol) 4-n-Butylamino-2,2,6,6-tetramethylpiperidin [EP-A-302 020, Beispiel 1, Seite 4] und 50 ml (36,3 g; 0,36 Mol) Triethylamin in 300 ml Toluol wird unter Stickstoffatmosphäre bei 12-13°C 16,5 g (0,21 Mol) Acetylchlorid getropft. Das Reaktionsgemisch wird während 3 Stunden bei Raumtemperatur gerührt. Das ausgefallene Triethylaminhydrochlorid wird abfiltriert und das Filtrat am Vakuumrotationsverdampfer eingeengt. Destillation des Rückstandes (90-92°C, 0,05 mbar) liefert 38,7 g (76 %) N-n-Butyl-N-(2,2,6,6-tetramethyl-4-piperidinyl)acetamid als viskoses Oel.
      2. In Analogie zu Beispiel 1bφ2 wird ausgehend von 25,4 g (0,10 Mol) N-n-Butyl-N-(2,2,6,6-tetramethyl-4-piperidinyl)-acetamid [Beispiel 1bη1] und 17,6 g (0,40 Mol) Ethylenoxid in 100 ml Wasser und 100 ml Ethanol 27,2 g Rohprodukt erhalten. Chromatographie an Kieselgel mit dem Laufmittelsystem Essigester/Ethanol/Triethylamin = 30:1:1 liefert 17,2 (58 %) des gewünschten N-n-Butyl-N-[1-(2-hydroxyethyl)-2,2,6,6-tetramethyl-piperidin-4-yl]-acetamids als viskoses Oel, das sich beim Lagern verfestigt, Smp. 72-82°C. Analyse berechnet: C 68,41 %; H 11,48 %; N 9,39 %. Analyse gefunden: C 67,99 %; H 11,96 %; N 9,14 %.
      3. Eine Lösung von 12,6 g (42,2 mMol) N-n-Butyl-N-[1-(2-hydroxyethyl)-2,2,6,6-tetramethyl-piperidin-4-yl]-acetamid [Beispiel 1bη2] in 180 ml 2N Salzsäure wird während 48 Stunden am Rückfluss gekocht. Anschliessend wird das Reaktionsgemisch auf 0-5°C abgekühlt und mit 40 ml 30 %iger Natriumhydroxid-Lösung versetzt und zweimal mit Toluol extrahiert. Die organischen Phasen werden mit Wasser gewaschen, vereinigt, über Natriumsulfat getrocknet und am Vakuumrotationsverdampfer eingeengt. Chromatographie des Rückstandes an Kieselgel mit dem Laufmittelsystem Essigester/Ethanol/Triethylamin = 50:2:1 liefert 8,1 g (68 %) des 2-(4-n-Butylamino-2,2,6,6-tetramethyl-piperidin-1-yl)-ethanols (208) als weisses Pulver, Smp. 106-111°C. Analyse berechnet: C 70,26 %; H 12,58 %; N 10,92 %. Analyse gefunden: C 70,42 %; H 12,85 %; N 11,00 %. 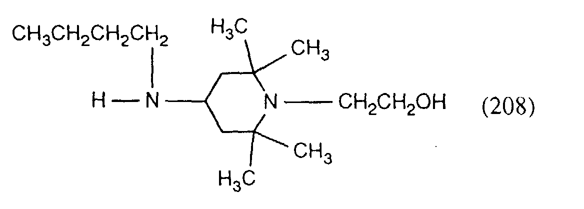
   τ) In einem Rundkolben mit Magnetrührer und Kühler werden unter Argon-Atmosphäre 833 g (5,30 Mol) 4-Hydroxy-2,2,6,6-tetramethylpiperidin und 418 g (1,05 Mol) 2-Butin1,4-diol-ditosylat [C.A. Registry No. 6337-59-3] in 3,6 l Acetonitril vorgelegt. Das Reaktionsgemisch wird über Nacht am Rückluss gekocht. Anschliessend wird das Reaktionsgemisch abgekühlt, auf Eis gegossen und mehrmals mit Essigester extrahiert. Die organischen Phasen werden vereinigt, über Natriumsulfat getrocknet und am Vakuumrotationsverdampfer eingeengt. Kristallisation des Rückstandes aus Ethanol liefert 295 g (76 %) 1,4-Bis(4-hydroxy-2,2,6,6-tetramethylpiperidin-1-yl)-but-2-in (209), Smp. 203,4°C, weisse Kristalle. Analyse berechnet: C 72,48 %; H 11,06 %; N 7,68 %. gefunden: C 72,52 %; H 11,12 %; N 7,75 %. 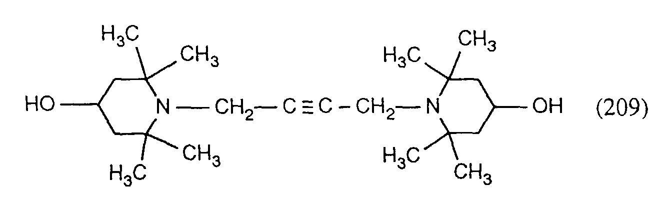
   κ) Das HALS-Diol (210) ist bekannt und in US-A-4 569 997 (Ciba-Geigy, Beispiel 1, Kolonne 14) beschrieben. 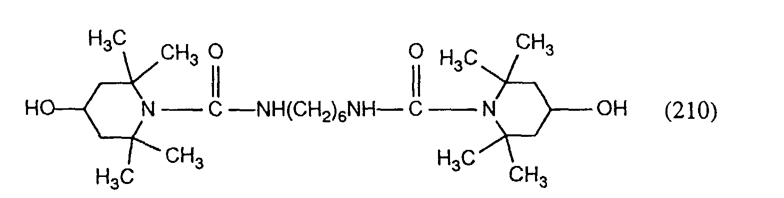
   λ)
      1. Zu einer unter Stickstoffatmosphäre gerührten Lösung von 22,2 g (105 mMol) 4-n-Butylamino-2,2,6,6-tetramethylpiperidin [EP-A-302 020, Beispiel 1, Seite 4] in 70 ml Triethylamin und 150 ml Toluol wird bei 0-5°C 9,15 g (50 mMol) Adipinsäuredichlorid getropft. Nach ca. 30 Minuten wird auf ca. 100°C erwärmt und während 90 Minuten bei dieser Temperatur gerührt. Anschliessend wird die erhaltene dicke Suspension auf Raumtemperatur gekühlt, von den Salzen abfiltriert und das Filtrat am Vakuumrotationsverdampfer eingeengt. Chromatographie des Rückstandes an Kieselgel mit dem Laufmittelsystem Essigester/Ethanol/Triethylamin = 20:1:1 und Kristallisation der reinen Fraktionen aus Hexan liefert 17,15 g (64 %) N,N'-Di-n-butyl-N,N'-bis-(2,2,6,6-tetramethyl-4-piperidinyl)-hexandiamid als weisses Pulver, Smp. 134-144°C.
      2. In Analogie zu Beispiel 1bφ2 wird ausgehend von N,N'-Di-n-butyl-N,N'-bis-(2,2,6,6-tetramethyl-4-piperidinyl)-hexandiamid [Beispiel 1bλ1] mit Ethylenoxid das HALS-Diol (211) hergestellt. Analyse berechnet: C 69,41 %; H 11,33 %; N 8,99 %. gefunden: C 68,45 %; H 11,20 %; N 8,34 %. 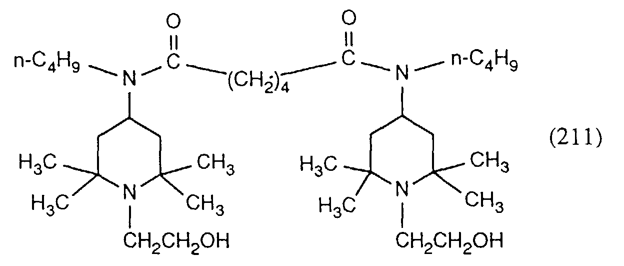
   µ) Zu einer unter Stickstoffatmosphäre gerührten Lösung von 8,4 g (39 mMol) 4-(2-Hydroxyethylamino)-1,2,2,6,6-pentamethylpiperidin [US-A-3 904 581, Sankyo] in 25 ml Triethylamin und 50 ml Toluol wird bei ca. -10°C 3,45 g (18 mMol) Adipinsäuredichlorid getropft. Das Reaktionsgemisch wird während einer Stunde bei 70°C gerührt. Anschliessend wird das Reaktionsgemisch auf Raumtemperatur gekühlt, filtriert und das Filtrat am Vakuumrotationsverdampfer eingeengt. Chromatographie des Rückstandes an Kieselgel mit dem Laufmittelsystem Essigester/Ethanol/Triethylamin = 20:1:1 liefert 4,9 g (51 %) des gewünschten HALS-Diols (212) als Harz. 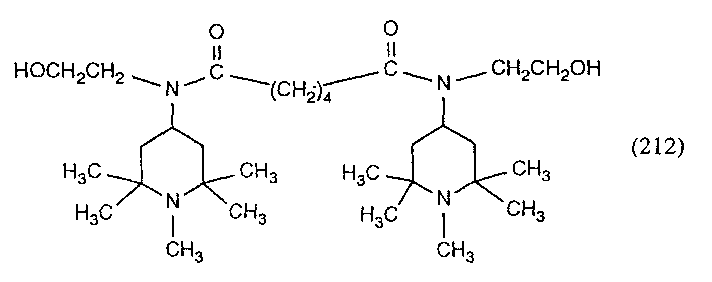
   ν)
      1. Zu einer unter Stickstoffatmosphäre gerührten Lösung von 26,6 g (57 mMol) N,N'-Bis(2,2,6,6-tetramethyl-4-piperidinyl)-1,6-hexandiamin [US-A-5 187 275, Beispiel 3] in 42 ml (0,30 Mol) Triethylamim und 100 ml Toluol wird bei ca. 5°C 9,9 g (126 mMol) Acetylchlorid getropft. Das Reaktionsgemisch wird während einer Stunde bei Raumtemperatur und einer Stunde bei ca. 45°C gerührt und anschliessend am Vakuumrotationsverdampfer eingeengt. Der Rückstand wird in Methylenchlorid aufgenommen und die organische Phase mit einer 15 % wässrigen Natriumhydroxid-Lösung und Wasser gewaschen. Die organische Phase wird über Kaliumcarbonat getrocknet und am Vakuumrotationsverdampfer eingeengt. Kristallisation des Rückstandes aus Aceton liefert 12,6 g (47 %) N,N'-Hexandiylbis(2,2,6,6-tetramethyl-4-piperidinyl)-acetamid, beiges Pulver (Smp. 149-154°C).
      2. In Analogie zu Beispiel 1bφ2 wird ausgehend vom N,N'-Hexandiylbis(2,2,6,6-tetramethyl-4-piperidinyl)-acetamid [Beispiel 1bν1] mit Ethylenoxid das HALS-Diol (213) hergestellt, Smp. 200-205°C. Analyse berechnet: C 67,80 %; H 11,02 %; N 9,88 %. gefunden: C 67,70 %; H 11,22 %; N 9,89 %. 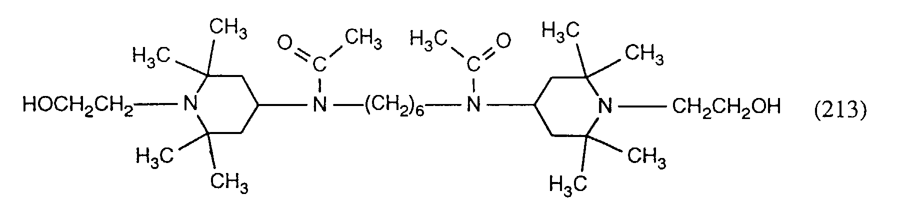
   ω) In einem 11 Autoklav werden 12,1 g (47,0 mMol) 9-Aza-3-hydroxymethyl-3,8,8,10,10-pentamethyl-1,5-dioxospiro[5.5]undecan (DE-A-2 353 538, Sankyo, Beispiel 1, Seite 38), 50 ml Ethanol und 50 ml Wasser vorgelegt. Der Autoklav wird mit Stickstoff inertisiert. Anschliessend werden 8,2 g (188 mMol) Ethylenoxid zugepresst und das Reaktionsgemisch auf 90°C erwärmt (Druck = 2 bar). Nach 2 Stunden wird auf 30°C abgekühlt und nochmals 8,2 g (188 mMol) Ethylenoxid zugepresst. Das Reaktionsgemisch wird auf 100°C erwärmt und während 3 Stunden bei dieser Temperatur gehalten (Druck = 3 bar). Nach dem Abkühlen auf Raumtemperatur wird das Reaktionsgemisch am Vakuumrotationsverdampfer eingeengt. Der Rückstand wird in Essigester gelöst und an Kieselgel mit dem Laufmittel Essigester chromatographiert. Kristallisation der reinen Fraktionen aus Toluol/Hexan = 9:1 liefert 11,15 g (79 %) des HALS-Diols (214), Smp. 110-115°C, als weisses Pulver. Analyse berechnet: C 63,76 %; H 10,37 %; N 4,65 %. gefunden: C 64,04 %; H 10,32 %; N 4,45 %. 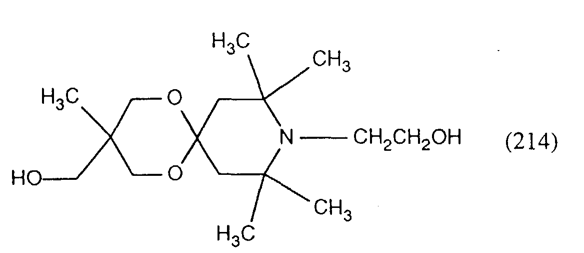
   π) Das HALS-Diol (215) ist ebenfalls bekannt und die Herstellung in JP-A-57 21 368 (Adeka Argus, Beispiel 7) beschrieben. 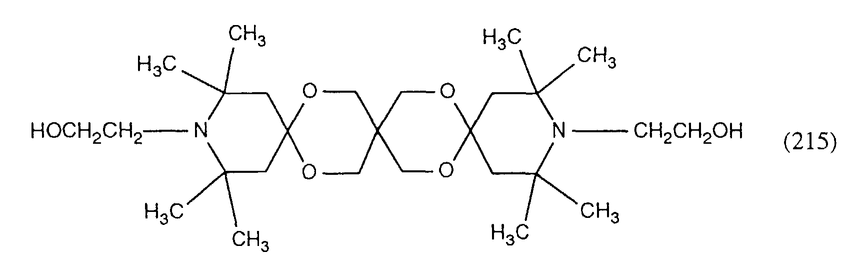
   c) In einem 350 ml Sulfierkolben werden unter Stickstoffatmosphäre 7,81 g (26,0 mMol; 1,3 Equivalent) des HALS-Diols (201) (Beispiel 1b), 5,06 g (50,0 mMol, 2,5 Equivalent) Triethylamin und 130 ml Toluol gegeben. Zu dieser farblosen Lösung wird bei 50°C innerhalb von 20 Minuten die oben beschriebene Lösung (Beispiel la) getropft. Anschliessend wird die dicke Suspension auf 100°C erwärmt und während 3 Stunden bei dieser Temperatur weiter gerührt. Das Reaktionsgemisch wird auf Raumtemperatur abgekühlt und über Celite filtriert. Das Filtrat wird am Vakuumrotationsverdampfer eingeengt. Trocknung des Rückstandes am Hochvakuum liefert 12,8 g (100 %) der oligomeren Verbindung (101) (Tabelle 1) als viskoses Oel.

In Analogie zu Beispiel 1c wird aus dem HALS-Diol (202) die oligomere Verbindung (102) (Tabelle 1) hergestellt.

### Beispiel 2: Herstellung der oligomeren Verbindung (103) (Tabelle 1).

a) In Analogie zu Beispiel 1a wird aus 3,3 g (15,0 mMol) 2,4-Di-tert-butyl-6-methylphenol, 1,7 ml (20,0 mMol; 1,3 Equivalent) Phosphortrichlorid und 37 mg (0,30 mMol) 4-Dimethylaminopyridin in 10 ml Toluol die entsprechende Dichlorphosphit-Lösung hergestellt.
b) In einem 100 ml Sulfierkolben werden unter Stickstoffatmosphäre 5,86 g (19,5 mMol; 1,3 Equivalent) des HALS-Diols (201) (Beispiel 1b), 24 ml Triethylamin und 24 ml Toluol gegeben. Zu dieser Lösung wird bei 45°C innerhalb von 15 Minuten die oben beschriebene Lösung (Beispiel 2a) getropft. Anschliessend wird die dicke Suspension auf 100°C erwärmt und während 3 Stunden bei dieser Temperatur weiter gerührt. Das Reaktionsgemisch wird auf Raumtemperatur abgekühlt und über Celite filtriert. Das Filtrat wird am Vakuumrotationsverdampfer eingeengt. Trocknung des Rückstandes am Hochvakuum liefert 9,60 g (100 %) der oligomeren Verbindung (103) (Tabelle 1) als viskoses Oel.

In Analogie zu Beispiel 2 werden aus den entsprechenden HALS-Diolen (203), (204), (205), (206) und (207) die oligomeren Verbindungen (104), (105), (106), (107) und (108) hergestellt (Tabelle 1).

### Beispiel 3: Herstellung der oligomeren Verbindung (109) (Tabelle 1).

In einem 100 ml Sulfierkolben werden unter Stickstoffatmosphäre 5,17 g (9,10 mMol; 1,3 Equivalent) des HALS-Diols (203) (Beispiel 1bβ), 15 ml Triethylamin und 15 ml Toluol gegeben. Zu dieser Lösung wird bei Raumtemperatur 1,26 g (7,0 mMol) Phenyldichlorphosphin getropft. Anschliessend wird die weisse Suspension auf 100°C erwärmt und während 3 Stunden bei dieser Temperatur weiter gerührt. Das Reaktionsgemisch wird auf Raumtemperatur abgekühlt und über Celite filtriert. Das Filtrat wird am Vakuumrotationsverdampfer eingeengt. Trocknung des Rückstandes am Hochvakuum liefert 6,0 g (100 %) der oligomeren Verbindung (109) (Tabelle 1) als viskoses Oel.

Die oligomeren Verbindungen (110), (111), (112), (113), (114) und (115) werden, analog wie in Beispiel 3 beschrieben, aus den entsprechenden HALS-Diolen (204), (209), (205), (210), (211) und (207) hergestellt (Tabelle 1).

### Beispiel 4: Herstellung der oligomeren Verbindung (116) (Tabelle 1).

a) In Analogie zu Beispiel 1a wird aus 1,77 g (8,03 mMol) 2,4-Di-tert-butyl-6-methylphenol, 1,43 g (10,4 mMol; 1,3 Aequivlalent) Phosphortrichlorid und 16 mg (0,13 mMol) 4-Dimethylaminopyridin in 5 ml Toluol die entsprechende Dichlorphosphit-Lösung hergestellt.
b) In einem 100 ml Sulfierkolben werden unter Stickstoffatmosphäre 5,5 g (8,83 mMol; 1,1 Aequivalent) des HALS-Diols (211) [Beispiel 1bλ2], 18 ml Triethylamin und 13 ml Toluol gegeben. Zu dieser Lösung wird bei 45°C innerhalb von 13 Minuten die oben beschriebene Lösung (Beispiel 4a) getropft. Anschliessend wird die dicke Suspension während 3 Stunden am Rückfluss gekocht. Das Reaktionsgemisch wird mit 10 ml Toluol verdünnt, auf Raumtemperatur abgekühlt und über Hyflo filtriert. Das Filtrat wird am Vakuumrotationsverdampfer eingeengt. Trocknung des Rückstandes am Hochvakuum liefert 7,3 g (97 %) der Verbindung (116) (Tabelle 1), Smp. 82-91°C, amorphes weisses Pulver.

In Analogie zu Beispiel 4 werden aus den entsprechenden HALS-Diolen (212), (213), (214) und (215) und dem Aminoalkohol (208) die oligomeren Verbindungen (117), (118), (119), (121) und (123) hergestellt (Tabelle 1).

### Beispiel 5: Herstellung der oligomeren Verbindung (120) (Tabelle 1).

In einem 100 ml Sulfierkolben werden unter Stickstoffatmosphäre 4,42 g (7,8 mMol; 1,1 Aequivalent) des HALS-Diols (213) [Beispiel 1bν2], 10 ml Triethylamin und 8 ml Toluol gegeben. Zu dieser Lösung wird bei 45°C innerhalb von 5 Minuten eine Lösung von 1,27 g (7,09 mMol) Phenyldichlorphosphin in 2 ml Toluol getropft. Anschliessend wird die Suspension während 3 Stunden am Rückfluss gekocht. Das Reaktionsgemisch wird mit 4 ml Toluol verdünnt, auf Raumtemperatur abgekühlt und über Celite filtriert. Das Filtrat wird am Vakuumrotationsverdampfer eingeengt. Trocknung des Rückstandes am Hochvakuum liefert 5 g (97 %) der oligomeren Verbindung (120) als amorphes hellbeiges Pulver, Smp. 92-105°C (Tabelle 1).

Die oligomere Verbindung (122) wird, analog wie in Beispiel 5 beschrieben, aus dem HALS-Diol (215) hergestellt.

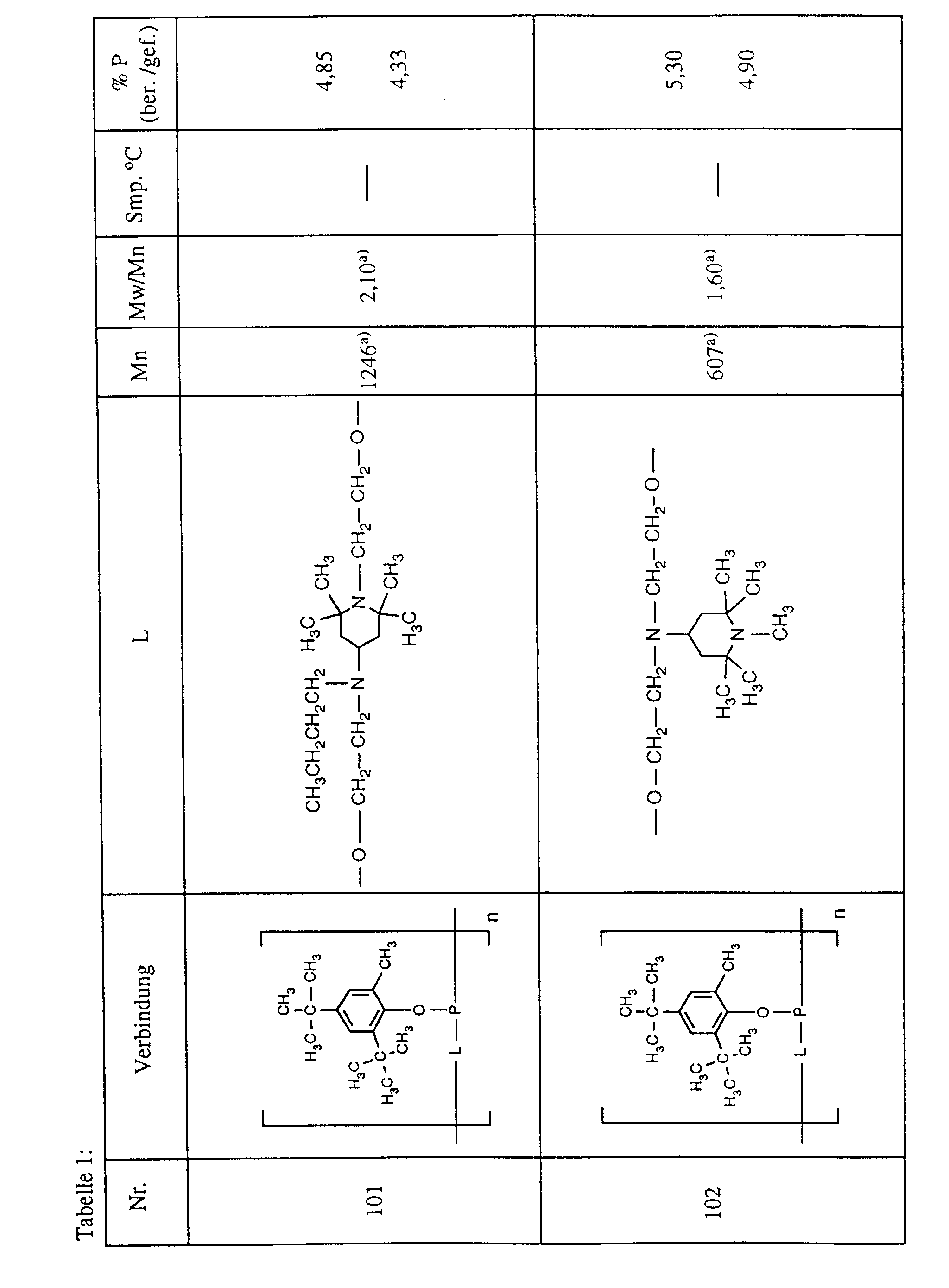

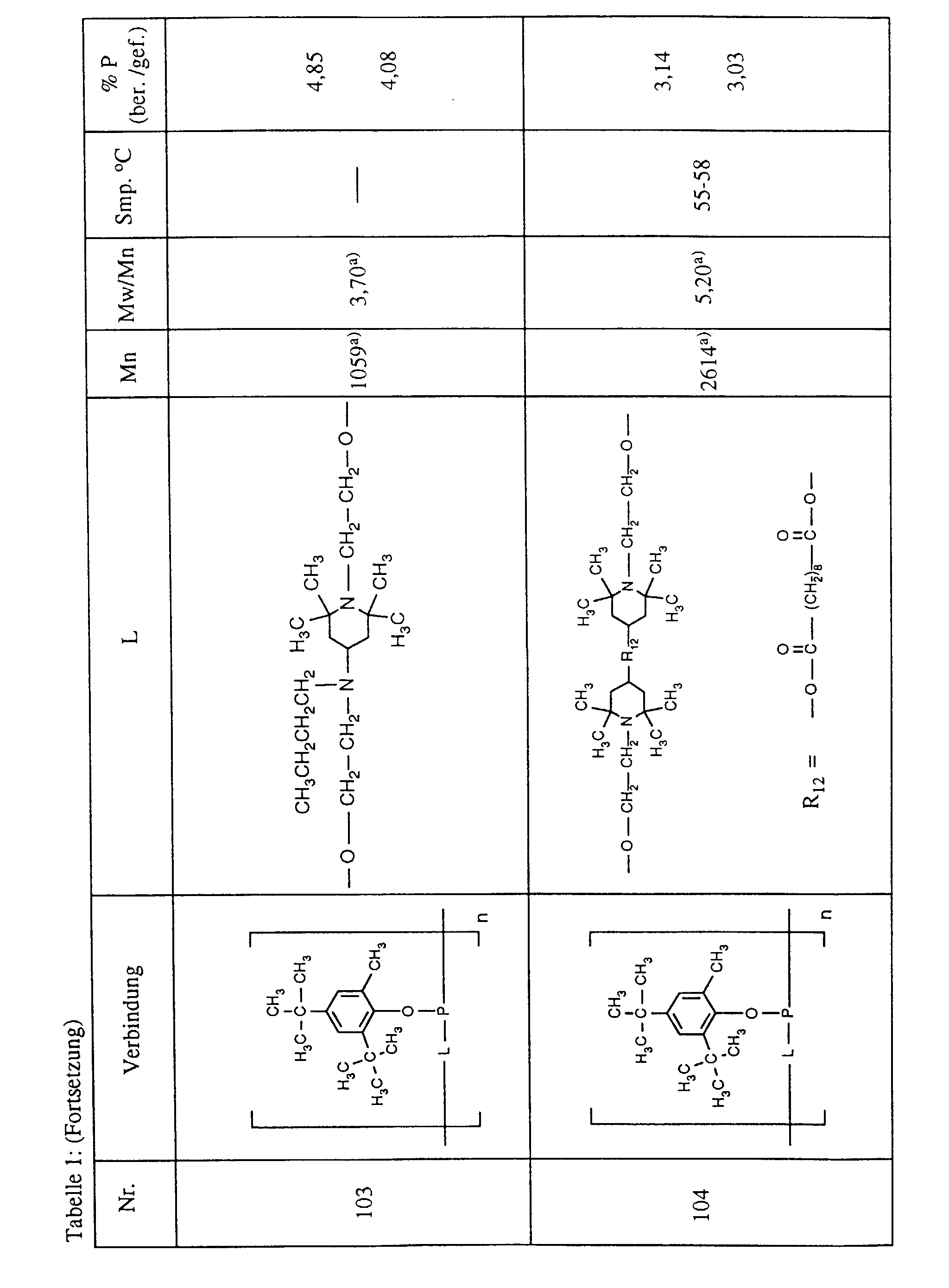

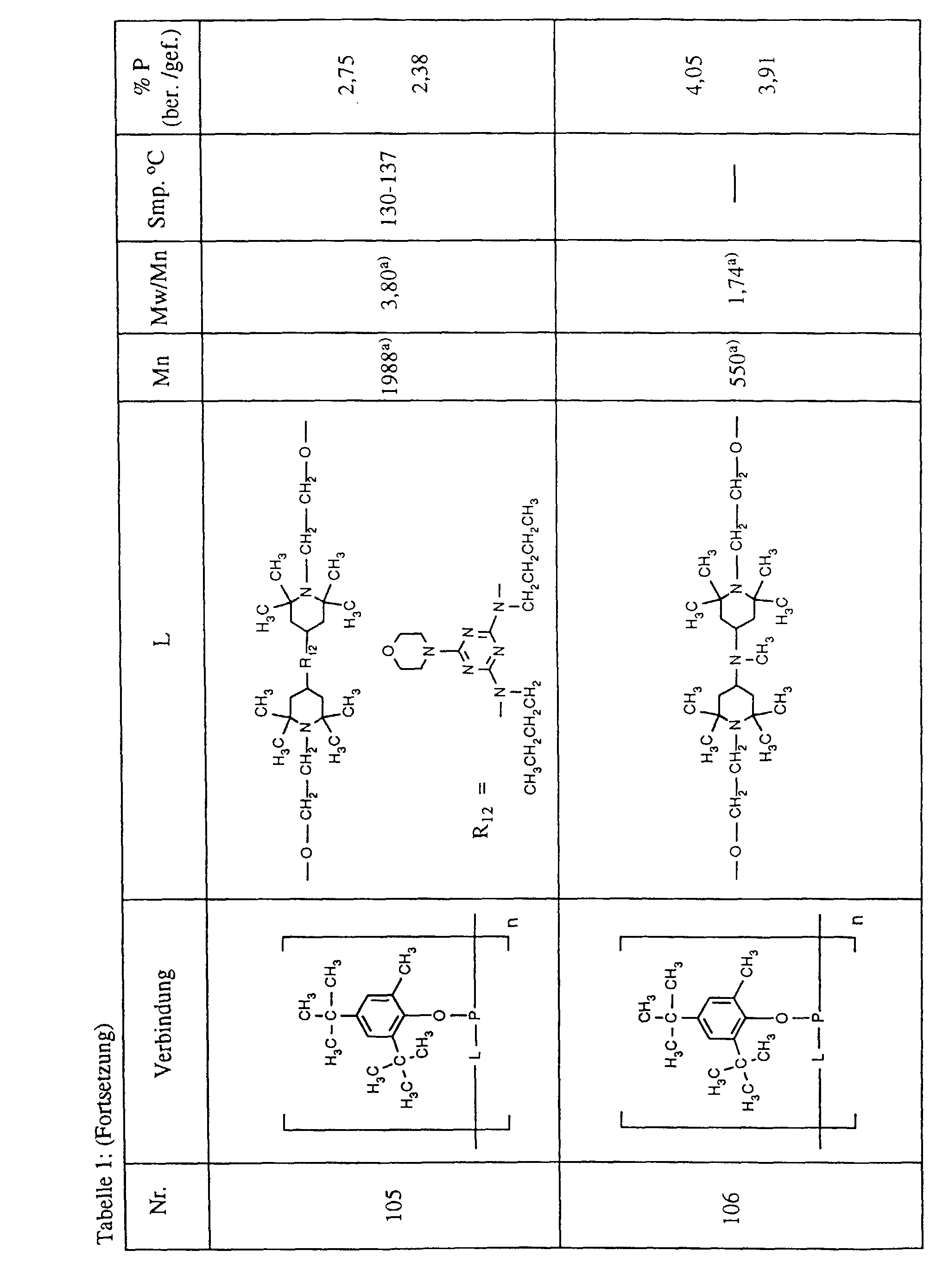

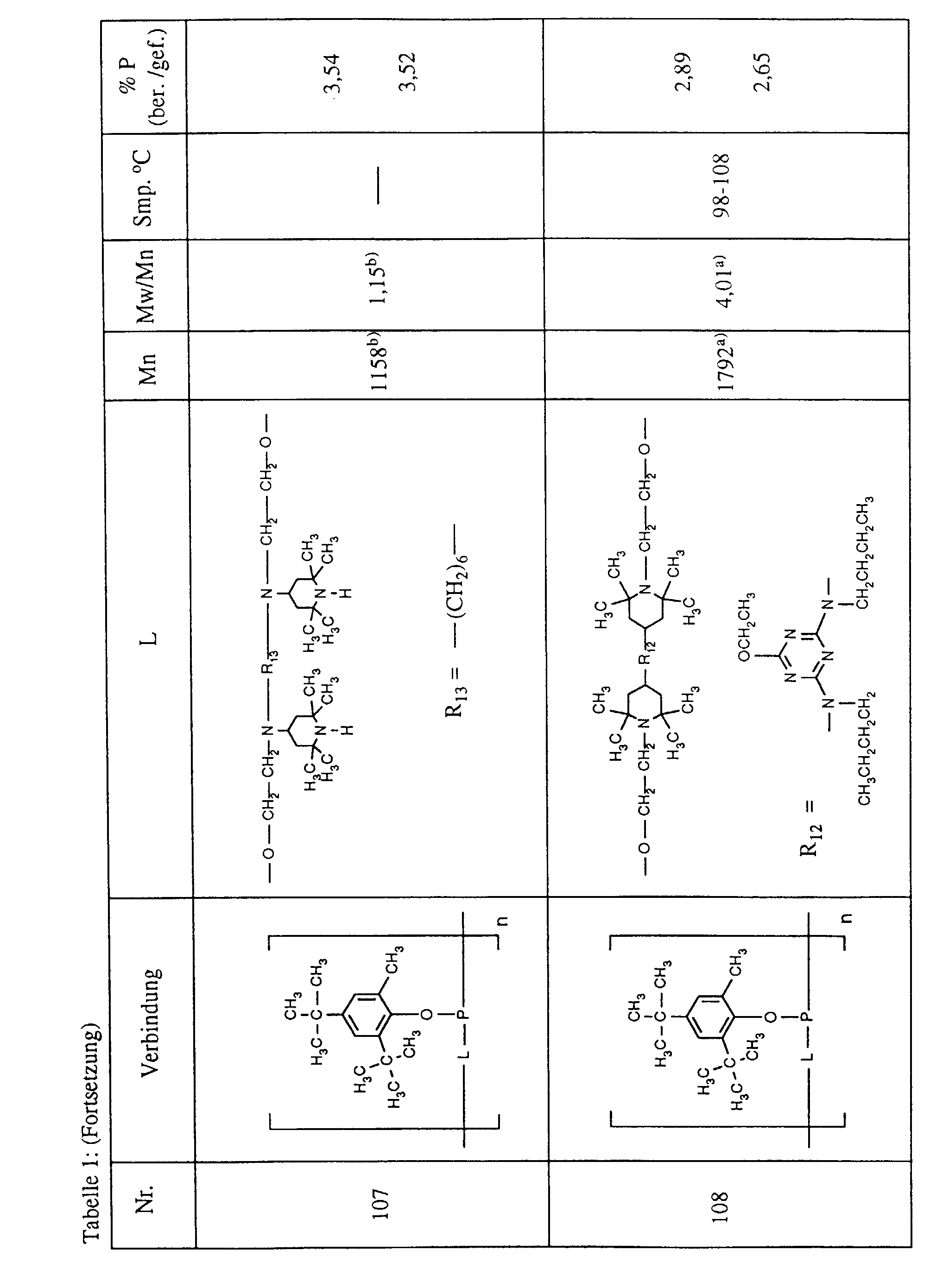

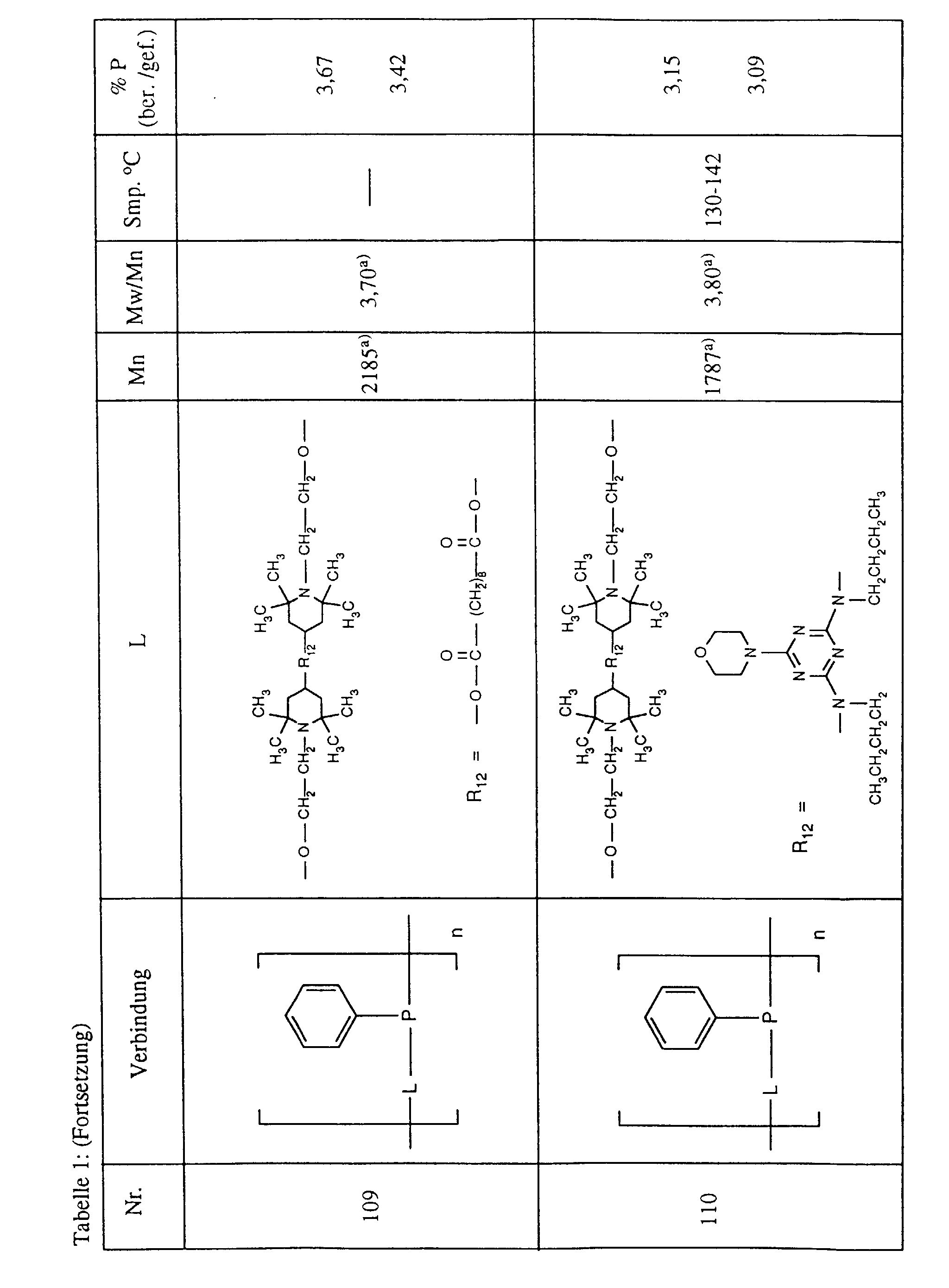

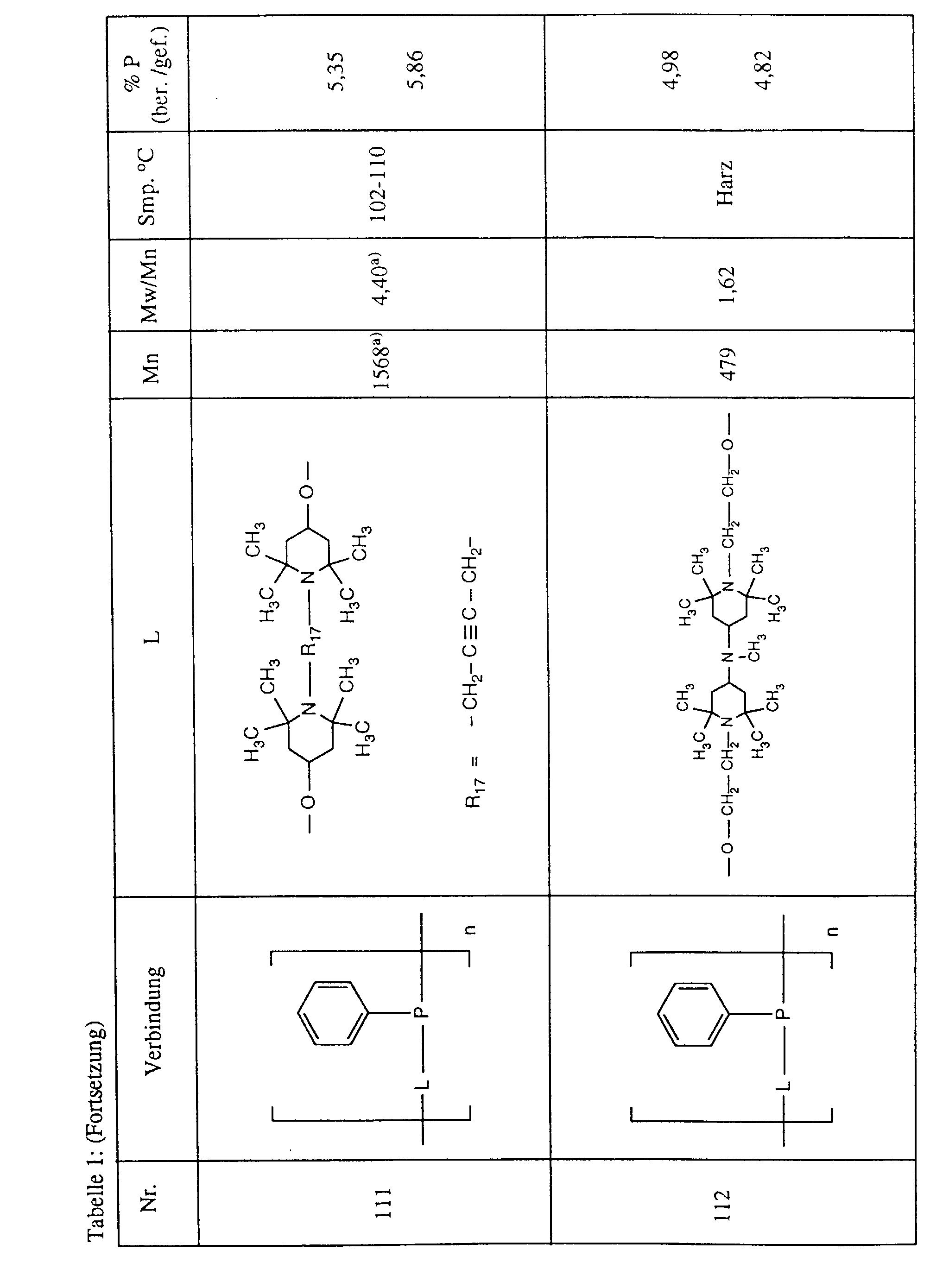

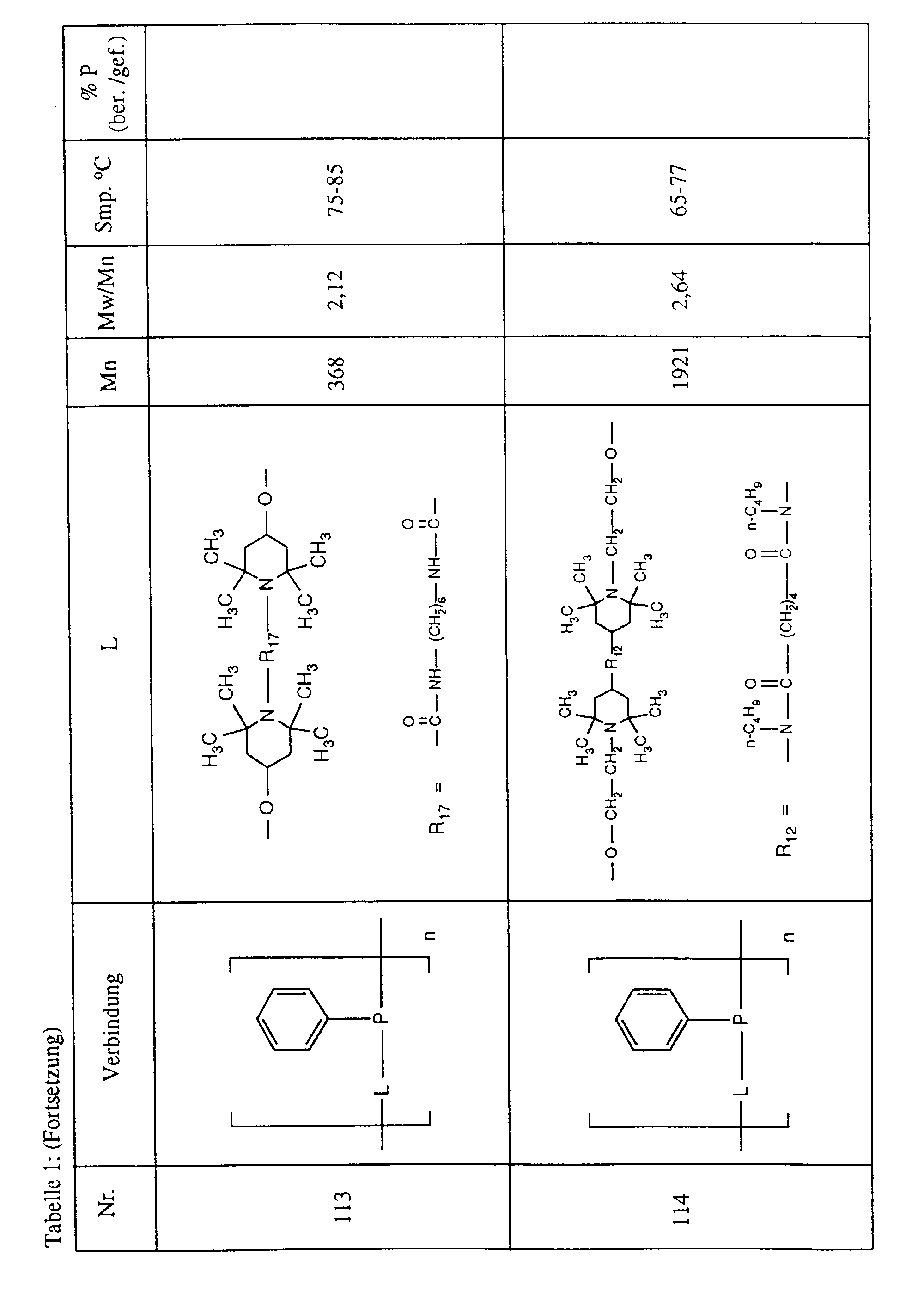

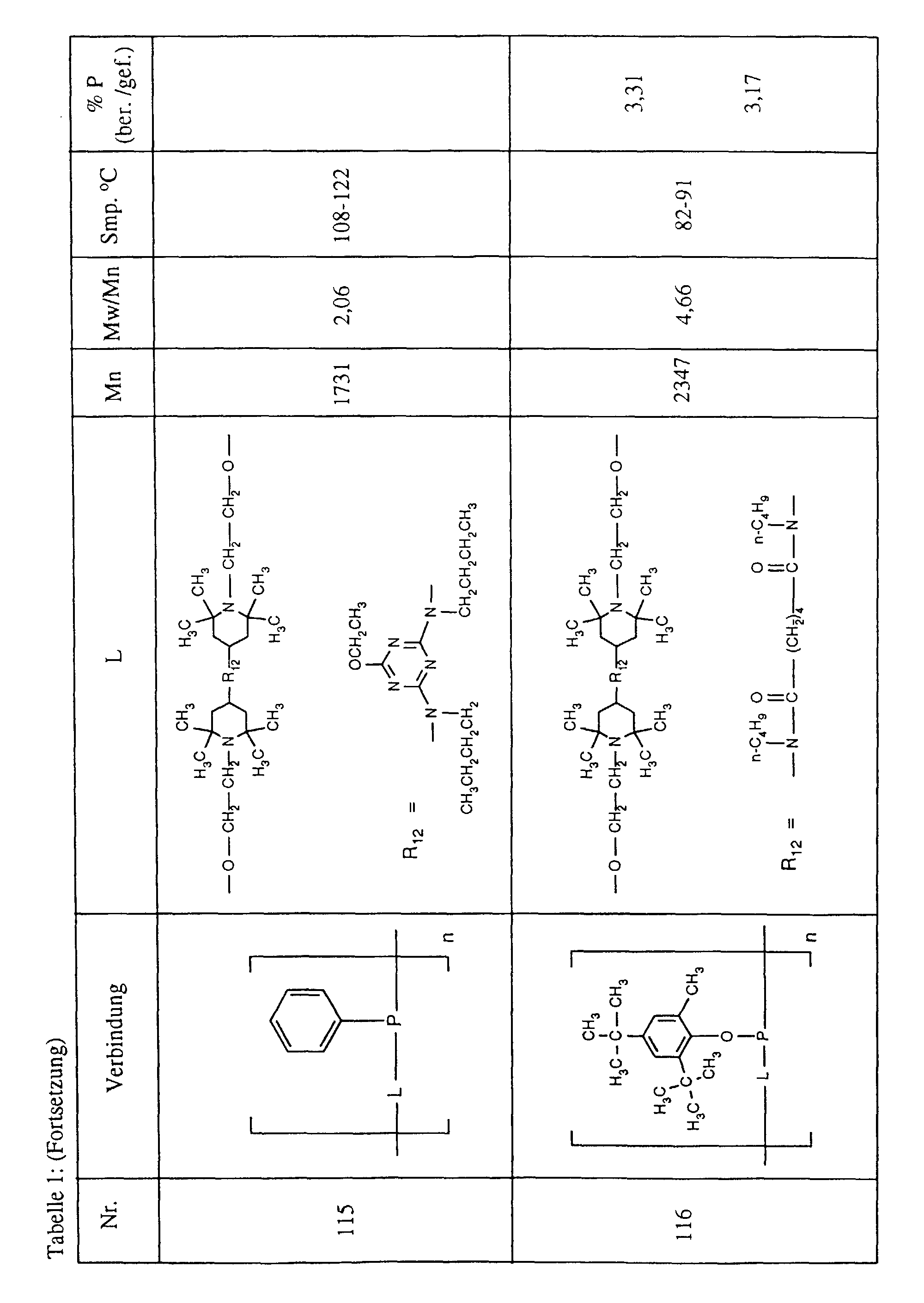

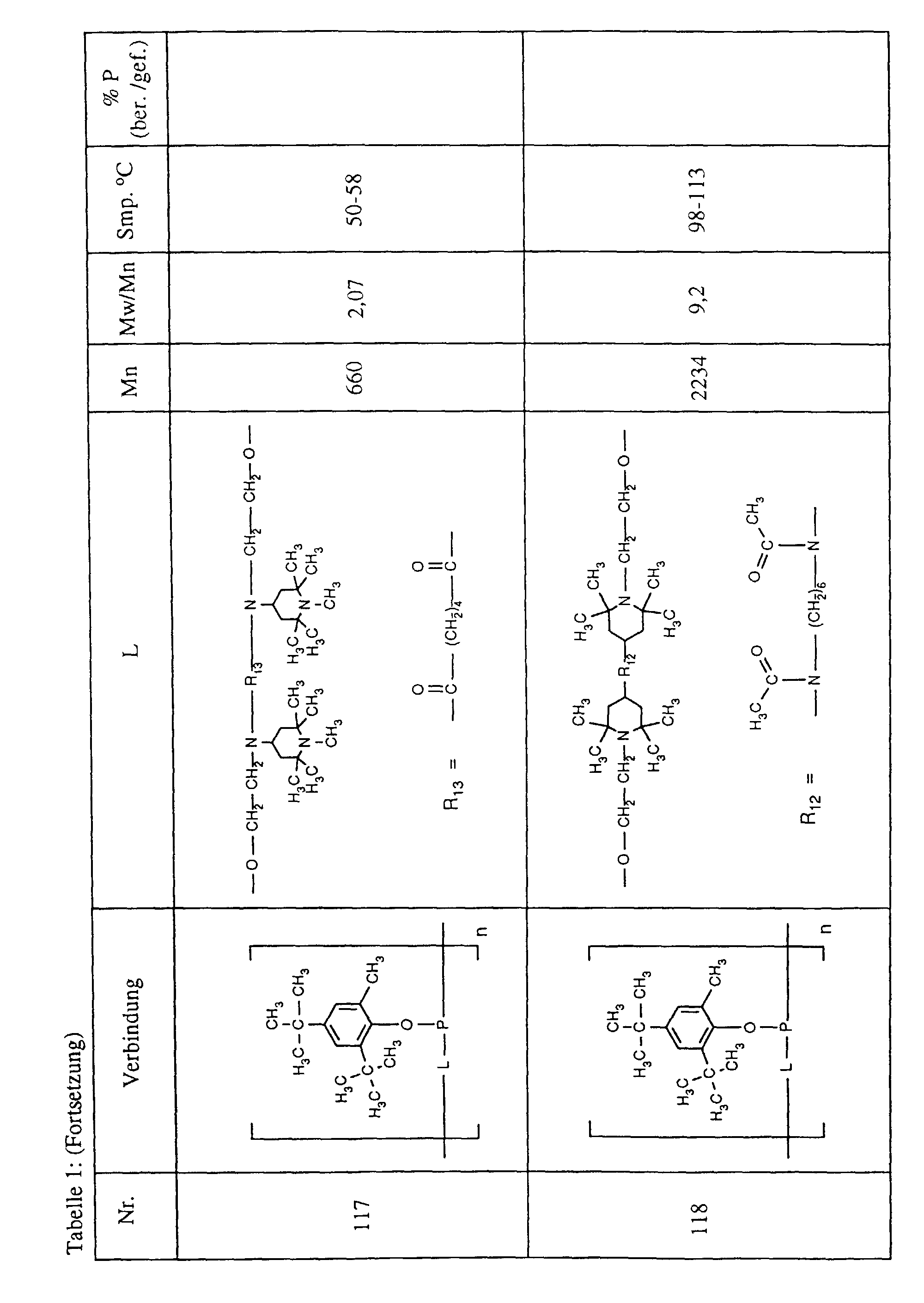

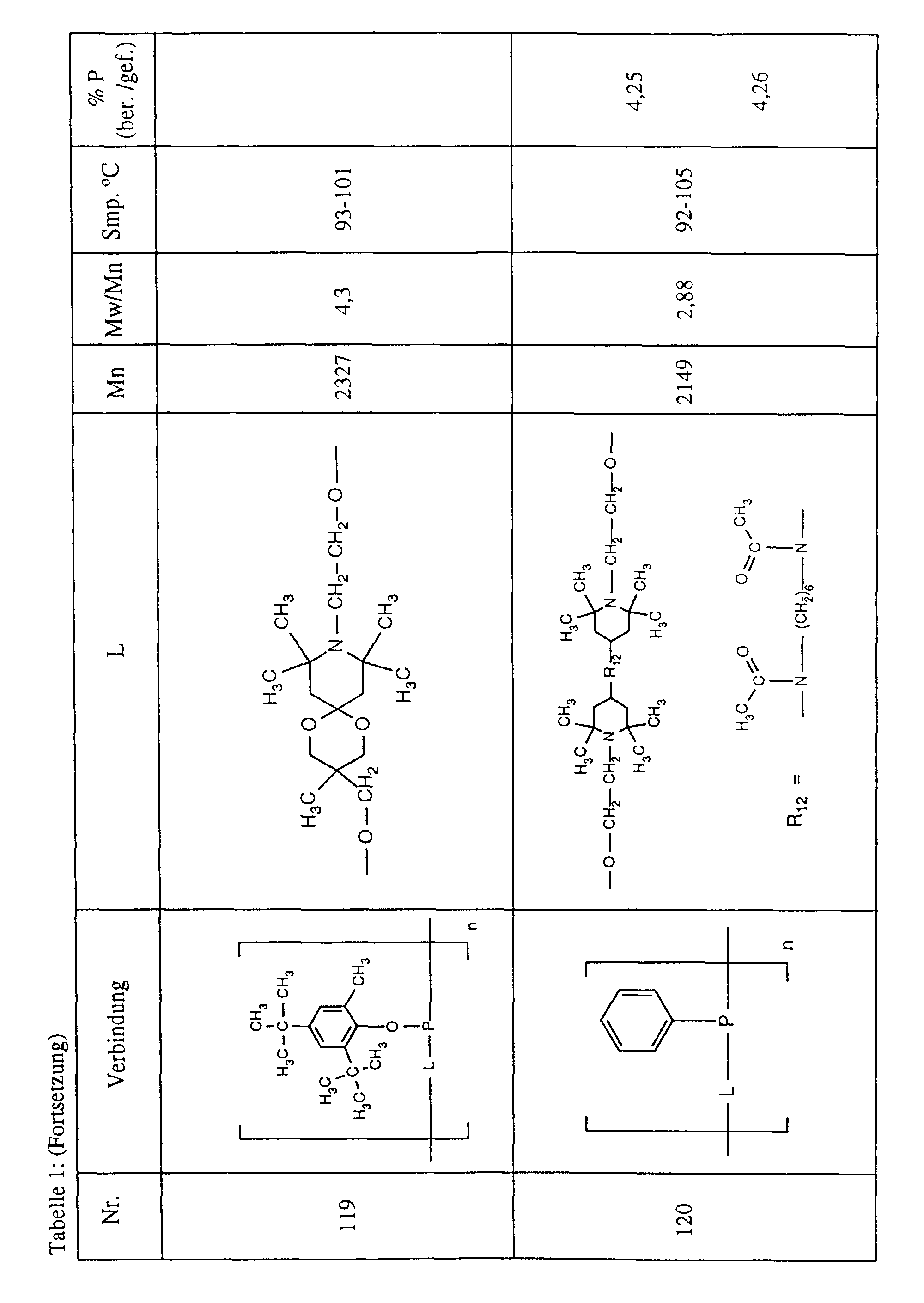

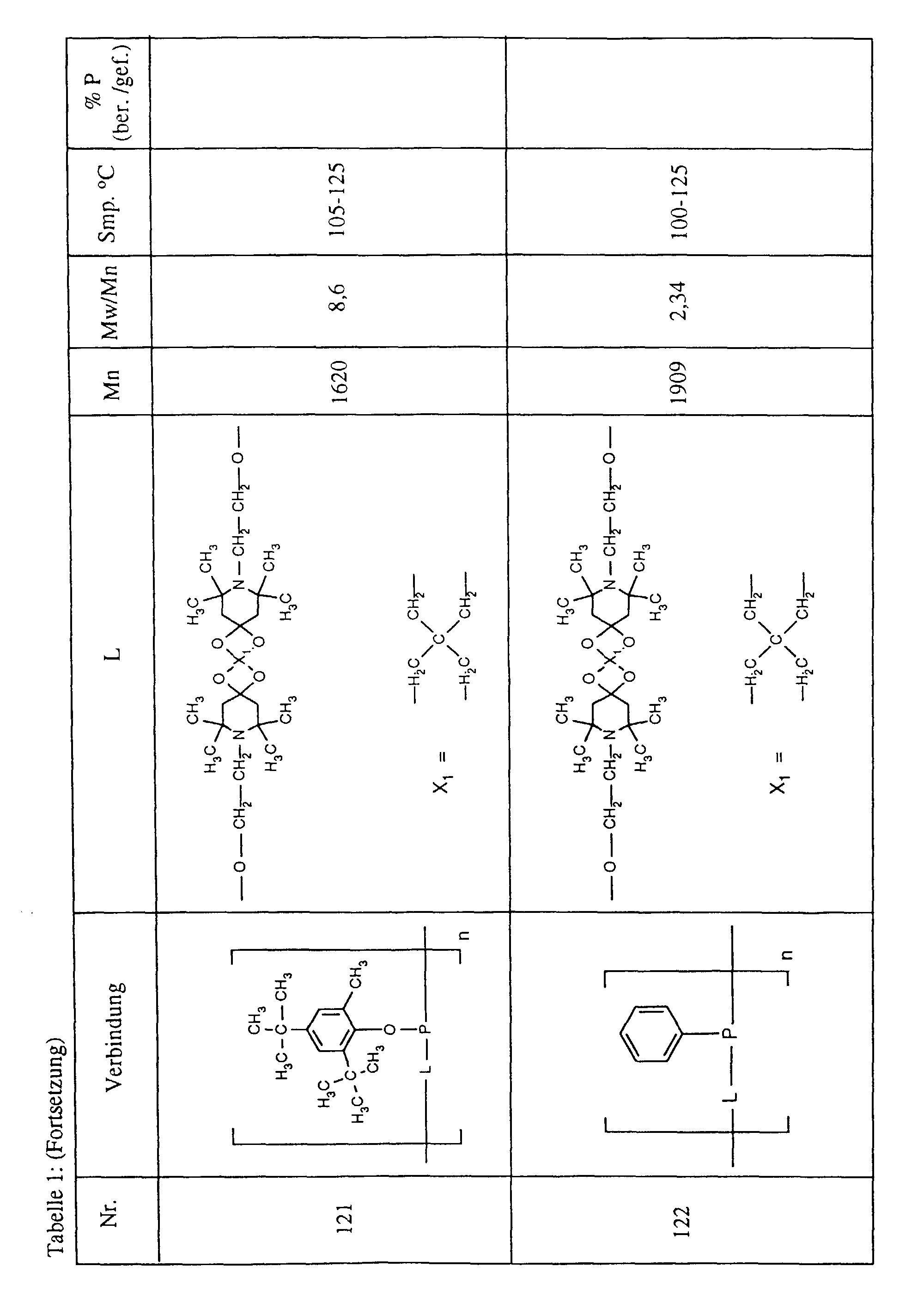

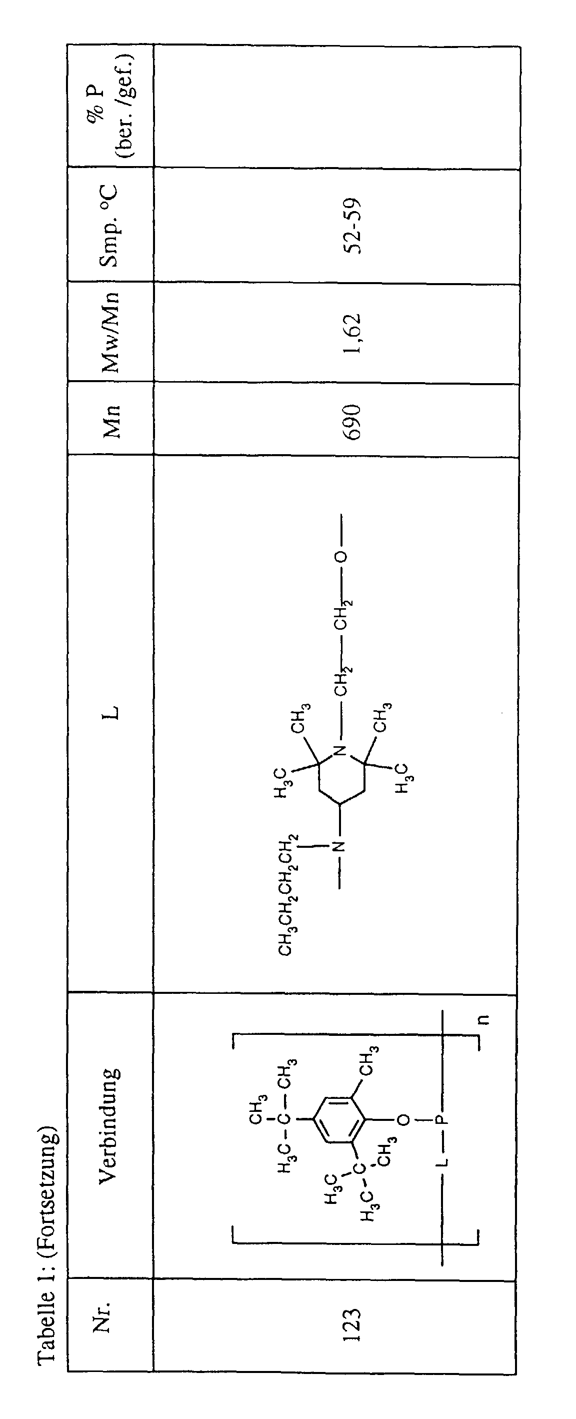

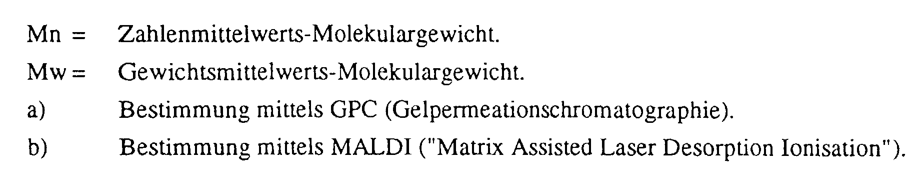

### Beispiel 6: Stabilisierung von Polypropylen bei Mehrfachextrusion.

1,3 kg Polypropylenpulver (®Profax 6501), das mit 0,025 % Irganox® 1076 (3-[3,5-di-tert-butyl-4-hydroxyphenyl]propionsäure-n-octadecylester) vorstabilisiert wurde, (mit einem bei 230°C und mit 2,16 kg gemessenen Schmelzindex von 3,2) werden gemischt mit 0,05 % Irganox® 1010 (Pentaerythrityl-tetrakis-[3-(3,5-di-tert-butyl-4-hydroxyphenyl)-propionat]), 0,05 % Calciumstearat, 0,03 % Dihydrotalcit [DHT 4A®, Kyowa Chemical Industry Co., Ltd., Mg_{4.5}Al₂(OH)₁₃CO₃•3,5 H₂O] und 0,05 % der Verbindung aus Tabelle 1. Diese Mischung wird in einem Extruder mit einem Zylinderdurchmesser von 20 mm und einer Länge von 400 mm mit 100 Umdrehungen pro Minute extrudiert, wobei die 3 Heizzonen auf die folgenden Temperaturen eingestellt werden: 260, 270, 280°C. Das Extrudat wird zur Kühlung durch ein Wasserbad gezogen und anschliessend granuliert. Dieses Granulat wird wiederholt extrudiert. Nach 3 Extrusionen wird der Schmelzindex gemessen (bei 230°C mit 2,16 kg). Grosse Zunahme des Schmelzindex bedeutet starken Kettenabbau, also schlechte Stabilisierung. Die Resultate sind in Tabelle 2 zusammengefasst.

**Tabelle 2:**

| Verbindung aus Tabelle 1 | Schmelzindex nach 3 Extrusionen |
|---|---|
| _ | 18,2 |
| 102 | 7,4 |
| 103 | 6,8 |
| 104 | 8,5 |
| 105 | 8,7 |
| 106 | 6,9 |
| 109 | 7,2 |
| 110 | 7,0 |
| 113 | 5,9 |
| 114 | 8,9 |
| 118 | 8,3 |
| 119 | 6,8 |
| 120 | 6,5 |
| 122 | 7,5 |

## Patentansprüche

1. Oligomere Verbindungen der Formel I 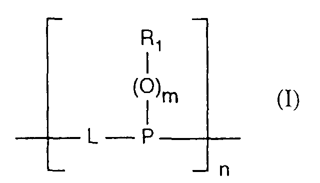 worin L eine Gruppe der Formel II oder III
(II) ―O-R₂-O― 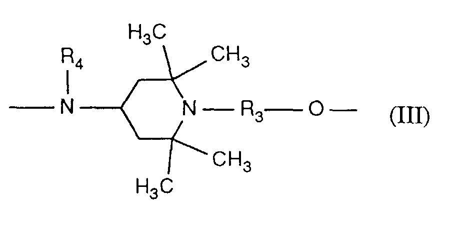
bedeutet,
R₁ C₁-C₂₅-Alkyl, durch Sauerstoff, Schwefel oder 〉N-R₅ unterbrochenes C₂-C₂₅-Alkyl; C₂-C₂₄-Alkenyl, unsubstituiertes oder durch C₁-C₄-Alkyl substituiertes C₅-C₁₅-Cyclo-alkyl; unsubstituiertes oder durch C₁-C₄-Alkyl substituiertes C₅-C₁₅-Cycloalkenyl; unsubstituiertes oder am Phenylring durch C₁-C₄-Alkyl substituiertes C₇-C₉-Phenylalkyl; oder Tetrahydroabietyl bedeutet; oder ferner R₁ einen Rest der Formel IV 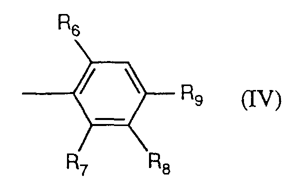 darstellt,
R₂ eine Gruppe der Formel V bis XVI 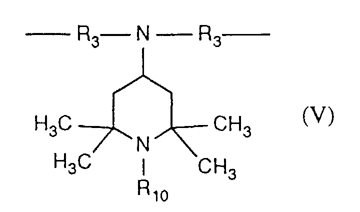 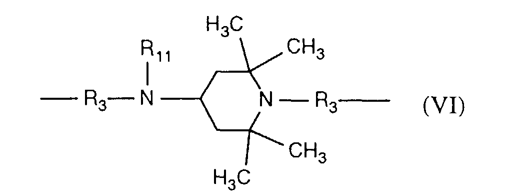 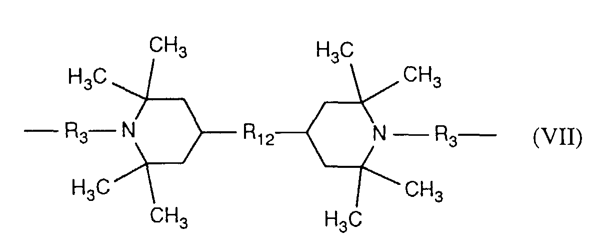 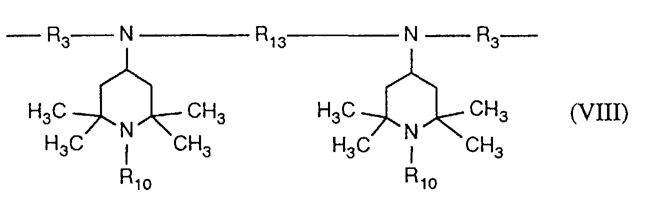 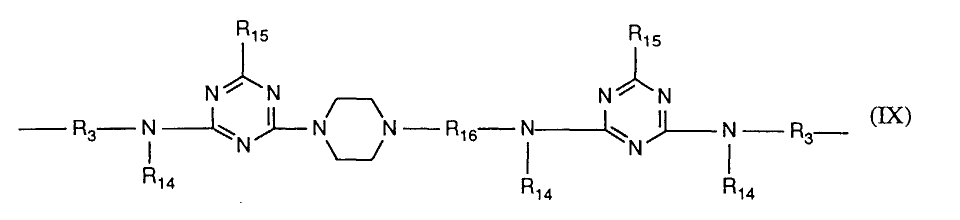 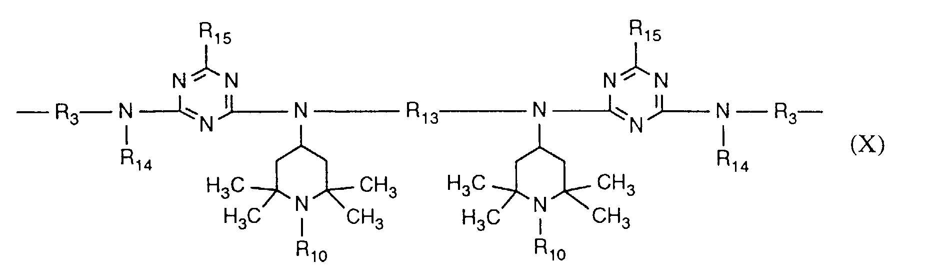 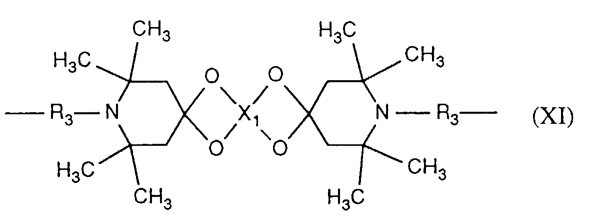 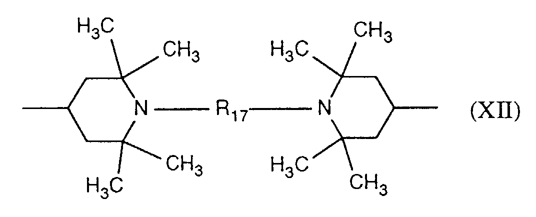 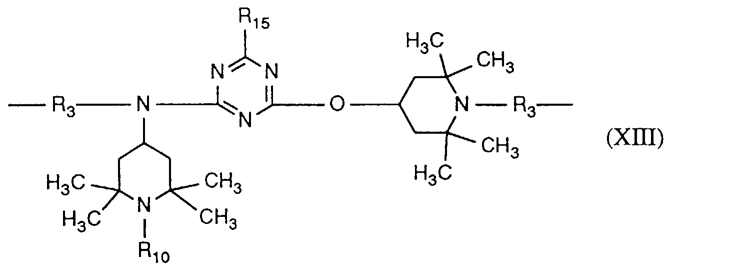 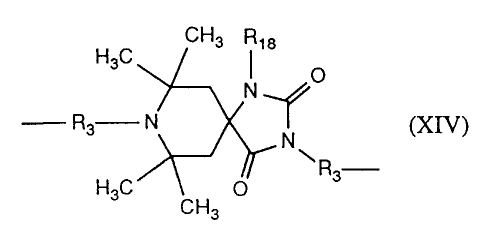 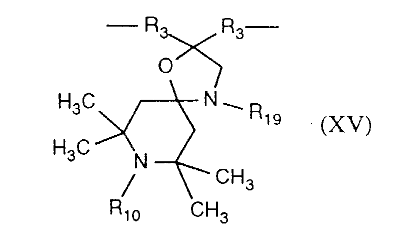 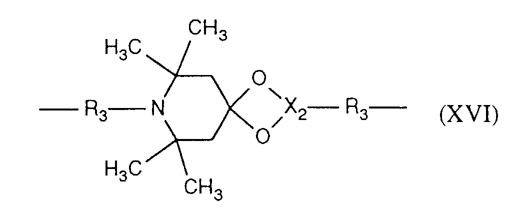 bedeutet,
R₃ C₁-C₁₈-Alkylen, durch Sauerstoff, Schwefel oder 〉N-R₅ unterbrochenes C₂-C₁₈-Alkylen; C₄-C₈-Alkenylen oder Phenylethylen darstellt,
R₄ C₁-C₈-Alkyl oder einen Rest der Formel XVII 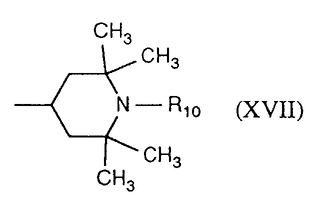 bedeutet,
R₅ Wasserstoff oder C₁-C₈-Alkyl darstellt,
R₆ und R₇ unabhängig voneinander Wasserstoff, C₁-C₂₅-Alkyl, C₂-C₂₄-Alkenyl, unsubstituiertes oder durch C₁-C₄-Alkyl substituiertes C₅-C₈-Cycloalkyl, unsubstituiertes oder durch C₁-C₄-Alkyl substituiertes Phenyl, unsubstituiertes oder durch C₁-C₄-Alkyl substituiertes C₅-C₈-Cycloalkenyl; C₇-C₉-Phenylalkyl oder -CH₂-S-R₂₀ bedeuten,
R₈ Wasserstoff oder Methyl ist,
R₉ Wasserstoff, C₁-C₂₅-Alkyl, C₂-C₂₄-Alkenyl, unsubstituiertes oder durch C₁-C₄-Alkyl substituiertes C₅-C₈-Cycloalkyl; unsubstituiertes oder durch C₁-C₄-Alkyl substituiertes Phenyl, unsubstituiertes oder durch C₁-C₄-Alkyl substituiertes C₅-C₈-Cycloalkenyl; C₇-C₉-Phenylalkyl, -CH₂-S-R₂₀, -(CH₂)ₚCOOR₂₁ oder -(CH₂)_{q}OR₂₂ bedeutet,
R₁₀ Wasserstoff, C₁-C₈-Alkyl, O^{•}, OH, NO, -CH₂CN, C₁-C₁₈-Alkoxy, C₅-C₁₂-Cycloalkoxy, C₃-C₆-Alkenyl, C₃-C₆-Alkinyl, C₁-C₈-Acyl, unsubstituiertes oder am Phenylring durch C₁-C₄-Alkyl substituiertes C₇-C₉-Phenylalkyl darstellt;
R₁₁ C₁-C₈-Alkyl oder einen Rest der Formel XVII 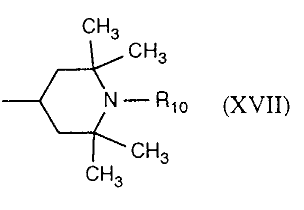 bedeutet,
R₁₂ 〉N-R₂₃ 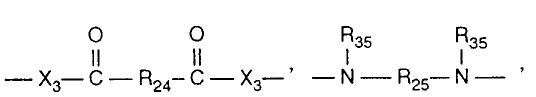 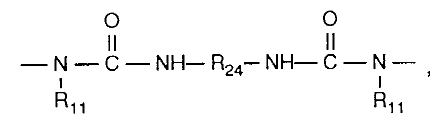 -O-R₂₅-O-, 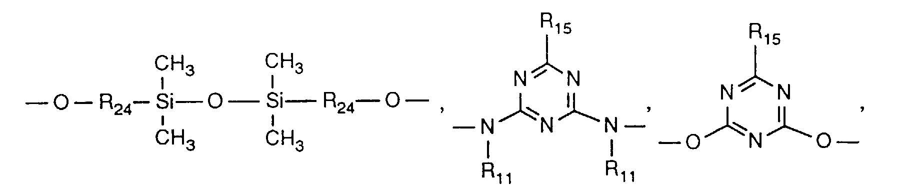 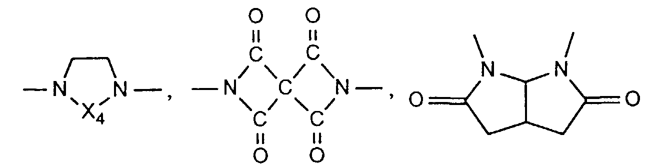 oder 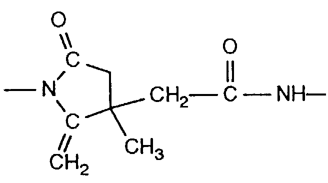 darstellt,
R₁₃ 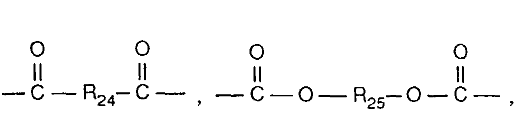 -R₂₅-, 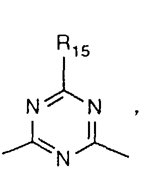 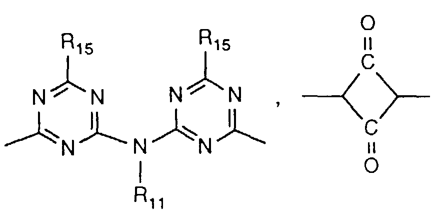 oder 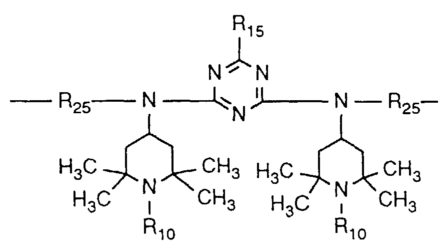 bedeutet,
R₁₄ C₁-C₈-Alkyl oder einen Rest der Formel XVII 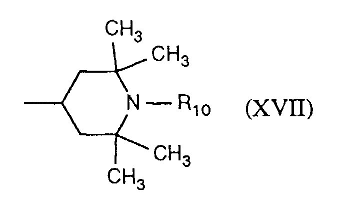 darstellt,
R₁₅ -OR₂₆, -NHR₂₇, 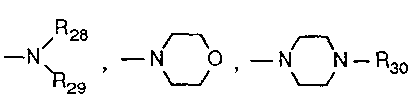 oder -SR₂₆ bedeutet,
R₁₆ und R₁₇ unabhängig voneinander 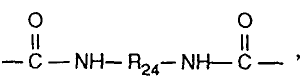 C₁-C₁₈-Alkylen, durch Sauerstoff, Schwefel oder 〉N-R₅ unterbrochenes C₂-C₁₈-Alkylen; C₂-C₁₈-Alkenylen, C₂-C₁₈-Alkinylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen oder Naphthylen; 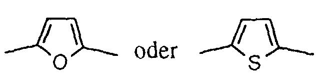 darstellen,
R₁₈ und R₁₉ unabhängig voneinander Wasserstoff oder C₁-C₈-Alkyl bedeuten,
R₂₀ C₁-C₁₈-Alkyl, unsubstituiertes oder durch C₁-C₄-Alkyl substituiertes C₅-C₁₂-Cycloalkyl; unsubstituiertes oder durch C₁-C₄-Alkyl substituiertes Phenyl; C₇-C₉-Phenylalkyl oder -(CH₂)ᵣCOOR₂₁ darstellt,
R₂₁ C₁-C₁₈-Alkyl, unsubstituiertes oder durch C₁-C₄-Alkyl substituiertes C₅-C₁₂-Cycloalkyl; unsubstituiertes oder durch C₁-C₄-Alkyl substituiertes Phenyl; oder C₇-C₉-Phenylalkyl bedeutet,
R₂₂ C₁-C₂₅-Alkyl, unsubstituiertes oder durch C₁-C₄-Alkyl substituiertes Phenyl; C₇-C₉-Phenylalkyl, C₁-C₂₅-Alkanoyl, C₃-C₂₅-Alkenoyl, durch Sauerstoff, Schwefel oder 〉N-R₅ unterbrochenes C₃-C₂₅-Alkanoyl; C₆-C₉-Cycloalkylcarbonyl, unsubstituiertes oder durch C₁-C₁₂-Alkyl substituiertes Benzoyl; Thenoyl oder Furoyl darstellt,
R₂₃ C₁-C₈-Alkyl bedeutet,
R₂₄ eine direkte Bindung, C₁-C₁₈-Alkylen, durch Sauerstoff, Schwefel oder 〉N-R₅ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen oder Naphthylen; 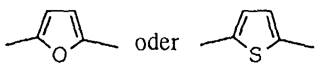 darstellt,
R₂₅ C₁-C₁₈-Alkylen, durch Sauerstoff, Schwefel oder 〉N-R₅ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen oder Naphthylen; 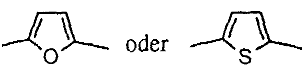 bedeutet,
R₂₆ C₁-C₂₅-Alkyl, durch Sauerstoff, Schwefel oder 〉N-R₅ unterbrochenes C₂-C₂₅-Alkyl; C₂-C₂₄-Alkenyl, unsubstituiertes oder durch C₁-C₄-Alkyl substituiertes C₅-C₁₅-Cycloalkyl; unsubstituiertes oder durch C₁-C₄-Alkyl substituiertes C₅-C₁₅-Cycloalkenyl; unsubstituiertes oder am Phenylring durch C₁-C₄-Alkyl substituiertes C₇-C₉-Phenylalkyl; unsubstituiertes oder durch C₁-C₄-Alkyl substituiertes Phenyl darstellt;
R₂₇, R₂₈, R₂₉ und R₃₀ unabhängig voneinander Wasserstoff, C₁-C₁₈-Alkyl oder einen Rest der Formel XVII 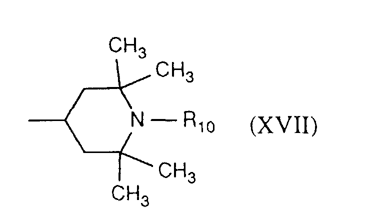 bedeuten,
R₃₁ C₁-C₄-Alkyl oder Hydroxymethyl darstellt,
R₃₂ Wasserstoff oder C₁-C₈-Alkyl bedeutet,
R₃₃ Wasserstoff, C₁-C₈-Alkyl oder einen Rest der Formel XVII 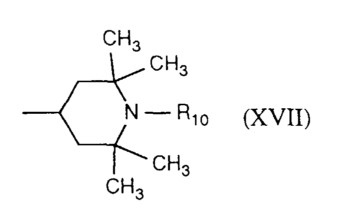 darstellt,
R₃₄ Wasserstoff, C₁-C₂₀-Alkyl, C₅-C₁₂-Cycloalkyl, unsubstituiertes oder durch C₁-C₄-Alkyl substituiertes Phenyl bedeutet,
R₃₅ C₁-C₂₅-Alkanoyl, unsubstituiertes oder durch C₁-C₄-Alkyl substituiertes Benzoyl;
oder 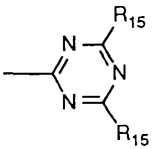 darstellt,
X₁ eine Gruppe der Formel XVIII, XIX, XX oder XXI 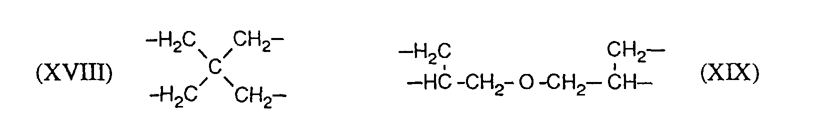 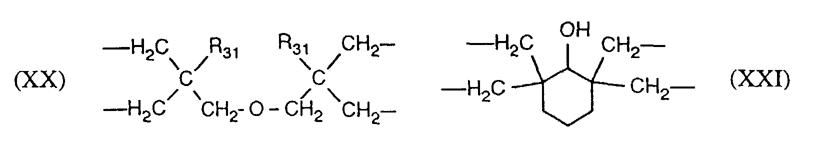 bedeutet,
X₂ 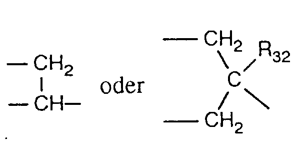 darstellt,
X₃ Sauerstoff oder 〉N-R₃₃ bedeutet,
X₄ 〉C=O, 〉C=S oder 〉CH-R₃₄ darstellt,
m 0 oder 1 ist,
n eine Zahl von 2 bis 25 darstellt,
p 0, 1 oder 2 ist,
q eine ganze Zahl von 3 bis 8 bedeutet, und
r 1 oder 2 darstellt, wobei in den wiederkehrenden Struktureinheiten der Formel I die Gruppe L, der Rest R₁, sowie die Ziffer m gleich oder verschieden sind.

2. Oligomere Verbindungen gemäss Anspruch 1, worin
R₁ C₁-C₁₈-Alkyl, durch Sauerstoff unterbrochenes C₂-C₁₈-Alkyl; C₂-C₁₈-Alkenyl, C₅-C₁₅-Cycloalkyl, C₅-C₁₅-Cycloalkenyl, C₇-C₉-Phenylalkyl oder Tetrahydroabietyl bedeutet; oder ferner R₁ einen Rest der Formel IV 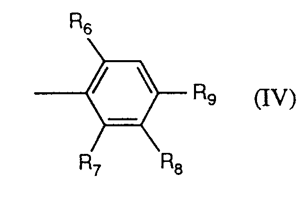 darstellt,
R₆ und R₇ unabhängig voneinander Wasserstoff, C₁-C₁₈-Alkyl, C₂-C₁₈-Alkenyl, C₅-C₈-Cycloalkyl, Phenyl, C₅-C₈-Cycloalkenyl, C₇-C₉-Phenylalkyl oder -CH₂-S-R₂₀ bedeuten,
R₉ Wasserstoff, C₁-C₁₈-Alkyl, C₂-C₁₈-Alkenyl, C₅-C₈-Cycloalkyl, Phenyl, C₅-C₈-Cycloalkenyl, C₇-C₉-Phenylalkyl, -CH₂-S-R₂₀, -(CH₂)ₚCOOR₂₁ oder -(CH₂)_{q}OR₂₂ darstellt,
R₂₀ C₁-C₁₂-Alkyl, C₃-C₁₂-Cycloalkyl, Phenyl, C₇-C₉-Phenylalkyl oder -(CH₂)ᵣCOOR₂₁ bedeutet,
R₂₁ C₁-C₁₂-Alkyl, C₅-C₁₂-Cycloalkyl, Phenyl oder C₇-C₉-Phenylalkyl darstellt,
R₂₂ C₁-C₁₈-Alkyl, Phenyl, C₇-C₉-Phenylalkyl, C₁-C₁₈-Alkanoyl, C₃-C₁₈-Alkenoyl, durch Sauerstoff unterbrochenes C₃-C₁₈-Alkanoyl; C₆-C₉-Cycloalkylcarbonyl, Benzoyl, Thenoyl oder Furoyl bedeutet, und
q eine ganze Zahl von 3 bis 6 darstellt.

3. Oligomere Verbindungen gemäss Anspruch 1, worin
R₁ C₁-C₁₂-Alkyl, C₃-C₁₂-Alkenyl, Cyclohexyl, Benzyl oder Tetrahydroabietyl bedeutet, oder ferner R₁ einen Rest der Formel IV 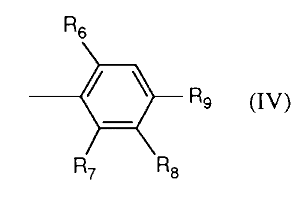 darstellt,
R₆ und R₇ unabhängig voneinander Wasserstoff, C₁-C₈-Alkyl, Cyclohexyl oder Phenyl bedeuten,
R₉ Wasserstoff, C₁-C₈-Alkyl, Cyclohexyl, Phenyl oder -(CH₂)ₚCOOR₂₁ darstellt,
R₂₁ C₁-C₁₂-Alkyl oder Benzyl bedeutet,
n eine Zahl von 2 bis 20 darstellt, und
p 2 ist.

4. Oligomere Verbindungen gemäss Anspruch 1, worin
R₃ C₁-C₁₂-Alkylen, durch Sauerstoff unterbrochenes C₂-C₁₂-Alkylen; C₄-C₈-Alkenylen oder Phenylethylen darstellt,
R₁₁ C₁-C₈-Alkyl bedeutet,
R₁₂ 〉N-R₂₃, 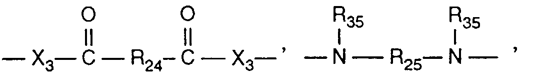 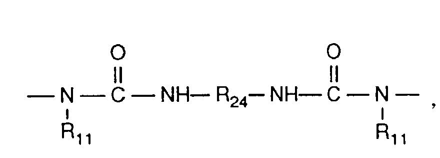 -O-R₂₅-O-, 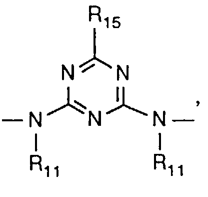 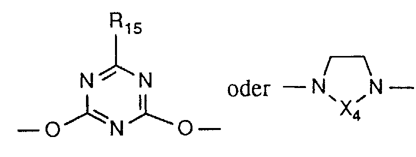 darstellt,
R₁₃ 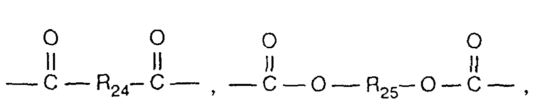 -R₂₅-, 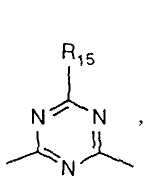 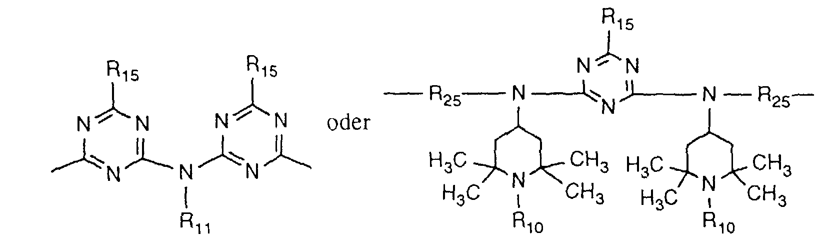 bedeutet,
R₁₅ -OR₂₆,-NHR₂₇, 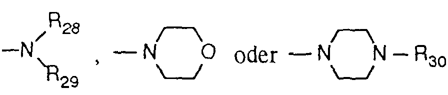 darstellt,
R₁₆ und R₁₇ unabhängig voneinander 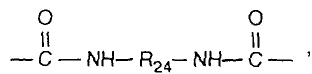 C₂-C₁₂-Alkylen, durch Sauerstoff unterbrochenes C₂-C₁₂-Alkylen; C₂-C₁₂-Alkenylen, C₄-C₁₂-Alkinylen, C₂-C₁₂-Alkyliden, C₇-C₁₂-Phenylalkyliden, C₅-C₈-Cycloalkylen oder Phenylen bedeuten,
R₂₄ eine direkte Bindung, C₁-C₁₂-Alkylen, durch Sauerstoff unterbrochenes C₂-C₁₂-Alkylen; C₂-C₁₂-Alkenylen, C₂-C₁₂-Alkyliden, C₇-C₁₂-Phenylalkyliden, C₅-C₈-Cyclo-alkylen oder Phenylen darstellt,
R₂₅ C₁-C₁₂-Alkylen, durch Sauerstoff unterbrochenes C₂-C₁₂-Alkylen; C₂-C₁₂-Alkenylen, C₂-C₁₂-Alkyliden, C₇-C₁₂-Phenylalkyliden, C₅-C₈-Cycloalkylen oder Phenylen bedeutet,
R₂₆ C₁-C₁₈-Alkyl, durch Sauerstoff unterbrochenes C₂-C₁₈-Alkyl; C₂-C₁₈-Alkenyl, C₅-C₁₅-Cycloalkyl, C₅-C₁₅-Cycloalkenyl, C₇-C₉-Phenylalkyl oder Phenyl darstellt,
R₂₇, R₂₈, R₂₉ und R₃₀ unabhängig voneinander Wasserstoff, C₁-C₁₂-Alkyl oder einen Rest der Formel XVII 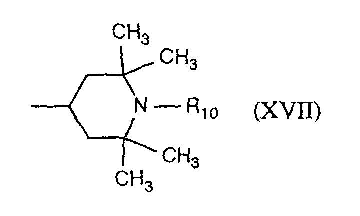 bedeuten,
R₃₂ Wasserstoff oder C₁-C₄-Alkyl ist,
R₃₃ Wasserstoff oder C₁-C₈-Alkyl darstellt,
R₃₄ Wasserstoff, C₁-C₁₂-Alkyl, C₅-C₁₂-Cycloalkyl oder Phenyl bedeutet,
R₃₅ C₁-C₁₈-Alkanoyl, Benzoyl oder 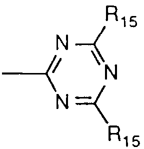 darstellt,
X₁ eine Gruppe der Formel XVIII oder XIX 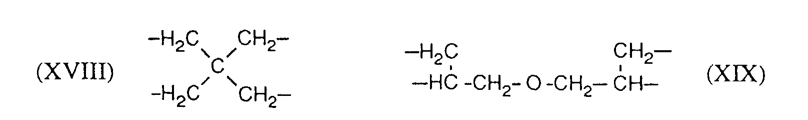 bedeutet,
X₂ 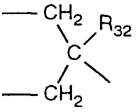 darstellt,
X₄ 〉C=O oder 〉CH-R₃₄ bedeutet, und
n eine Zahl von 2 bis 20 darstellt.

5. Oligomere Verbindungen gemäss Anspruch 1, worin
R₃ C₁-C₈-Alkylen, durch Sauerstoff unterbrochenes C₂-C₈-Alkylen; oder C₄-C₈-Alkenylen darstellt,
R₁₁ C₁-C₆-Alkyl bedeutet,
R₁₂ 〉N-R₂₃, 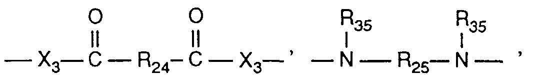 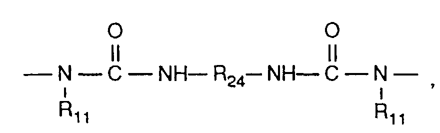 -O-R₂₅-O-, 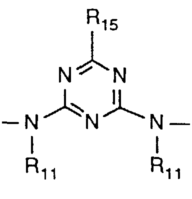 oder 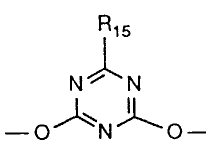 darstellt,
R₁₃ 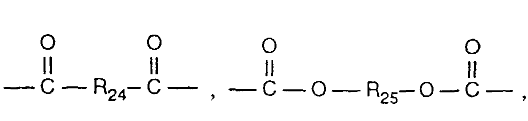 -R₂₅-, 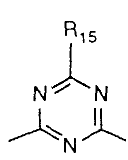 oder 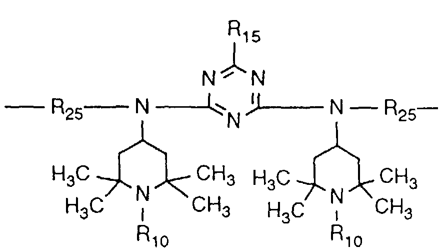 bedeutet,
R₁₅ -OR₂₆, -NHR₂₇, 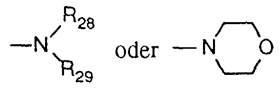 darstellt,
R₁₆ und R₁₇ unabhängig voneinander 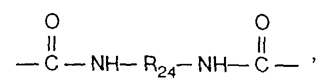 C₂-C₈-Alkylen, C₄-C₁₂-Alkinylen oder C₂-C₈-Alkyliden bedeuten,
R₂₃ C₁-C₆-Alkyl ist,
R₂₄ eine direkte Bindung, C₁-C₁₂-Alkylen, durch Sauerstoff unterbrochenes C₂-C₁₂-Alkylen; C₂-C₈-Alkenylen oder C₂-C₈-Alkyliden darstellt,
R₂₅ C₂-C₁₂-Alkylen, durch Sauerstoff unterbrochenes C₂-C₁₂-Alkylen; C₂-C₁₂-Alkenylen oder C₂-C₁₂-Alkyliden bedeutet,
R₂₆ C₁-C₁₂-Alkyl, C₂-C₁₂-Alkenyl, Cyclohexyl, Benzyl oder Phenyl darstellt,
R₂₇, R₂₈ und R₂₉ unabhängig voneinander Wasserstoff, C₁-C₁₀-Alkyl oder einen Rest der Formel XVII 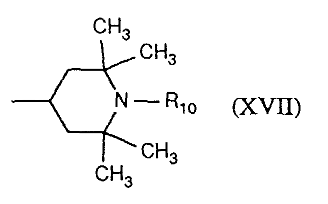 bedeuten,
R₃₂ Wasserstoff oder C₁-C₄-Alkyl ist,
R₃₃ Wasserstoff oder C₁-C₈-Alkyl darstellt,
R₃₄ Wasserstoff oder C₁-C₈-Alkyl bedeutet,
R₃₅ C₁-C₁₂-Alkanoyl, Benzoyl oder 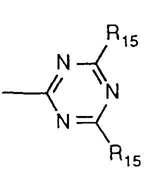 darstellt,
X₁ eine Gruppe der Formel XVIII oder XIX 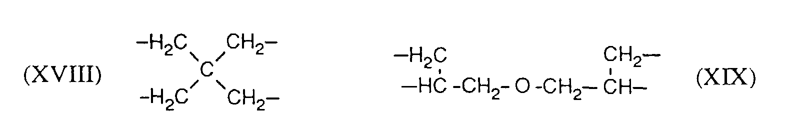 bedeutet,
X₂ 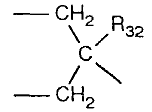 darstellt,
X₄ 〉C=O oder 〉CH-R₃₄ bedeutet,und
n eine Zahl von 2 bis 15 darstellt.

6. Oligomere Verbindungen gemäss Anspruch 1, worin
R₁₀ Wasserstoff, C₁-C₄-Alkyl, C₄-C₁₆-Alkoxy, C₅-C₈-Cycloalkoxy, Allyl, Propargyl, Acetyl oder Benzyl darstellt.

7. Oligomere Verbindungen gemäss Anspruch 1, worin
R₁ einen Rest der Formel IV 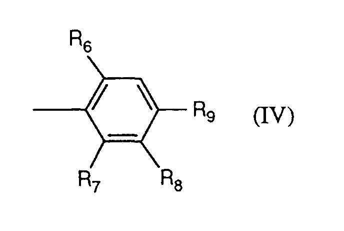 darstellt,
R₂ eine Gruppe der Formel V, VI, VII, VIII, XI, XII oder XVI 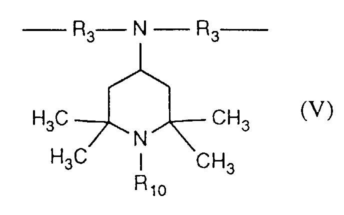 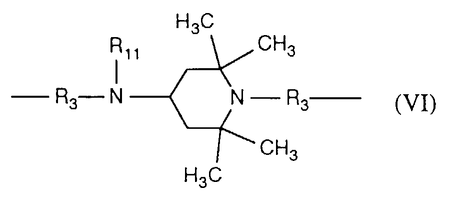 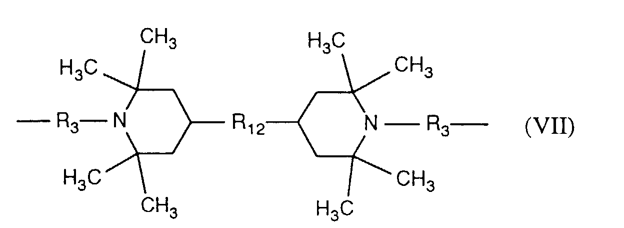 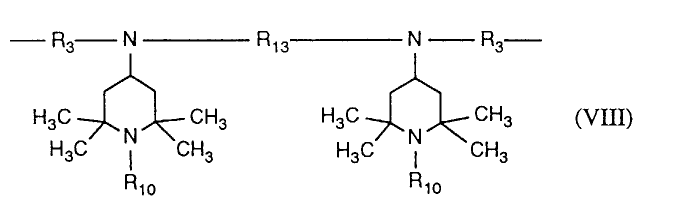 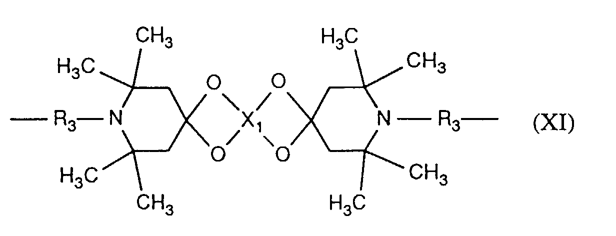 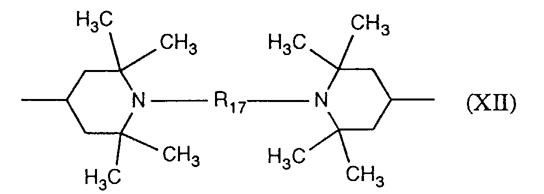 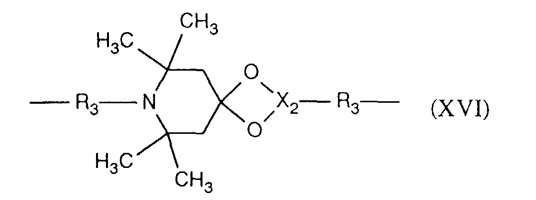
R₃ Methylen oder Ethylen darstellt,
R₄ C₁-C₈-Alkyl bedeutet,
R₆ und R₇ unabhängig voneinander Wasserstoff oder C₁-C₄-Alkyl sind,
R₈ Wasserstoff ist,
R₉ Wasserstoff oder C₁-C₄-Alkyl bedeutet,
R₁₀ Wasserstoff oder C₁-C₄-Alkyl darstellt,
R₁₁ C₁-C₄-Alkyl bedeutet,
R₁₂ 〉N-R₂₃, 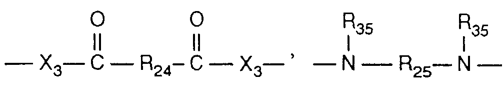 oder 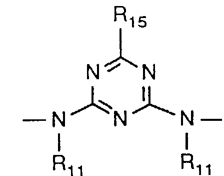 darstellt,
R₁₃ 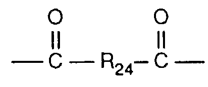 oder -R₂₅- bedeutet,
R₁₅ -OR₂₆ oder 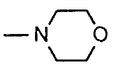 darstellt,
R₁₇ 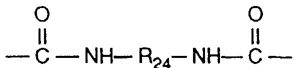 oder C₄-C₆-Alkinylen ist,
R₂₃ C₁-C₄-Alkyl bedeutet,
R₂₄ C₂-C₈-Alkylen darstellt,
R₂₅ C₂-C₈-Alkylen bedeutet,
R₂₆ C₁-C₄-Alkyl darstellt,
R₃₂ Wasserstoff oder C₁-C₄-Alkyl ist,
R₃₃ Wasserstoff oder C₁-C₄-Alkyl darstellt,
R₃₅ C₁-C₄-Alkanoyl bedeutet,
X₁ eine Gruppe der Formel XVIII 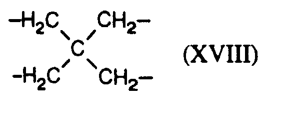 darstellt.
X₂ 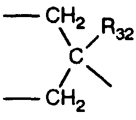 bedeutet,
X₃ Sauerstoff oder 〉N-R₃₃ darstellt, und
n eine Zahl von 2 bis 10 bedeutet.

8. Verfahren zur Herstellung von oligomeren Verbindungen der Formel I gemäss Anspruch 1, dadurch gekennzeichnet, dass eine Verbindung der Formel XXII oder ein Gemisch von Verbindungen der Formel XXII 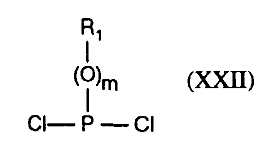 worin die allgemeinen Symbole wie in Anspruch 1 definiert sind, mit einer Verbindung der Formel XXIII oder einem Gemisch von Verbindungen der Formel XXIII
H―L―H (XXIII)
worin L wie in Anspruch 1 definiert ist, umgesetzt wird.

9. Zusammensetzung enthaltend
a) ein dem oxidativen, thermischen oder lichtinduzierten Abbau unterworfenes organisches Material und
b) mindestens eine Verbindung der Formel I gemäss Anspruch 1.

10. Zusammensetzung gemäss Anspruch 9, enthaltend neben den Komponenten (a) und (b) zusätzlich weitere Additive.

11. Zusammensetzung gemäss Anspruch 10, enthaltend als weitere Additive phenolische Antioxidantien, Lichtschutzmittel oder/und Verarbeitungsstabilisatoren.

12. Zusammensetzung gemäss Anspruch 10, enthaltend als weiteres Additiv mindestens eine Verbindung vom Typ der Benzofuran-2-one.

13. Zusammensetzung gemäss Anspruch 9, enthaltend als Komponente a) natürliche, halbsynthetische oder synthetische Polymere.

14. Zusammensetzung gemäss Anspruch 9, enthaltend als Komponente (a) thermoplastische Polymere.

15. Zusammensetzung gemäss Anspruch 9, enthaltend als Komponente (a) ein Polyolefin.

16. Zusammensetzung gemäss Anspruch 9, enthaltend als Komponente (a) Polyethylen oder Polypropylen.

17. Verwendung der Verbindungen der in Anspruch 1 definierten Formel I als Stabilisatoren für organische Materialien gegen oxidativen, thermischen oder lichtinduzierten Abbau.

18. Verwendung gemäß Anspruch 17 als Verarbeitungsstabilisatoren (Thermostabilisatoren) in thermoplastischen Polymeren.

19. Verfahren zum Stabilisieren eines organischen Materials gegen oxidativen, thermischen oder lichtinduzierten Abbau, dadurch gekennzeichnet, dass man diesem mindestens eine Verbindung der in Anspruch 1 definierten Formel I einverleibt oder auf dieses aufbringt.

## Claims

1. An oligomeric compound of formula I 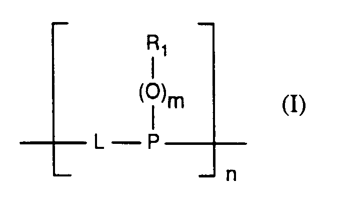 wherein L is a group of formula II or III
(II) ―O―R₂―O― 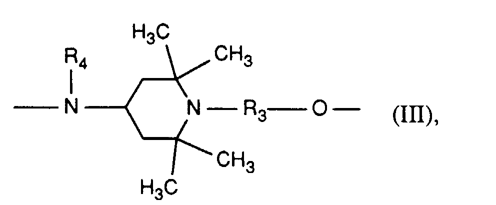
R₁ is C₁-C₂₅alkyl, C₂-C₂₅alkyl which is interrupted by oxygen, sulfur or 〉N-R₅ ; C₂-C₂₄-alkenyl, unsubstituted or C₁-C₄alkyl-substituted C₅-C₁₅cycloalkyl; unsubstituted or C₁-C₄-alkyl-substituted C₅-C₁₅cycloalkenyl; C₇-C₉phenylalkyl which is unsubstituted or substituted at the phenyl ring by C₁-C₄alkyl; or tetrahydroabietyl; or R₁ is also a radical of formula IV 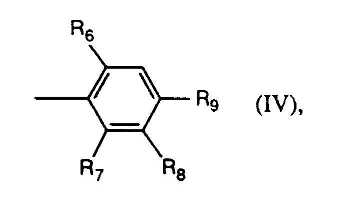
R₂ is a group of formula V to XVI 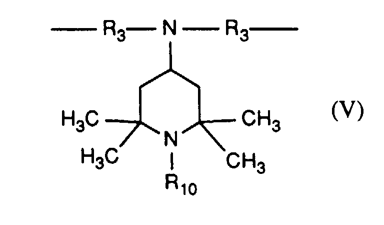 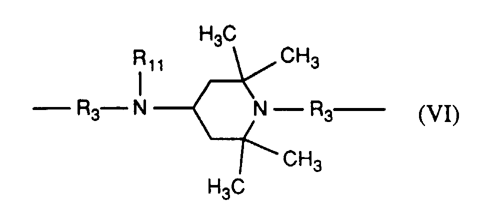 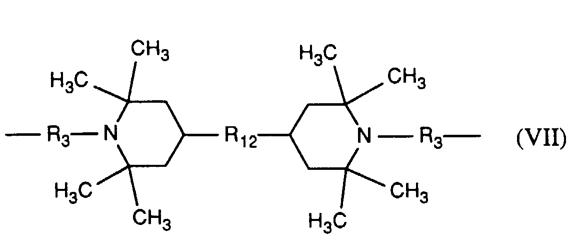 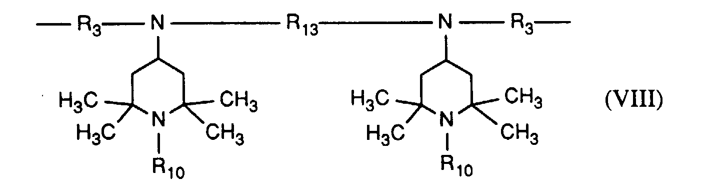 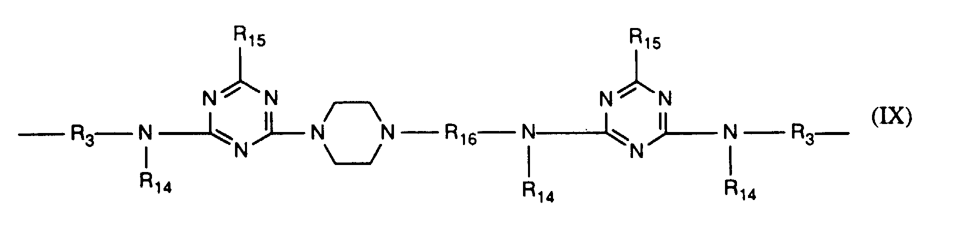 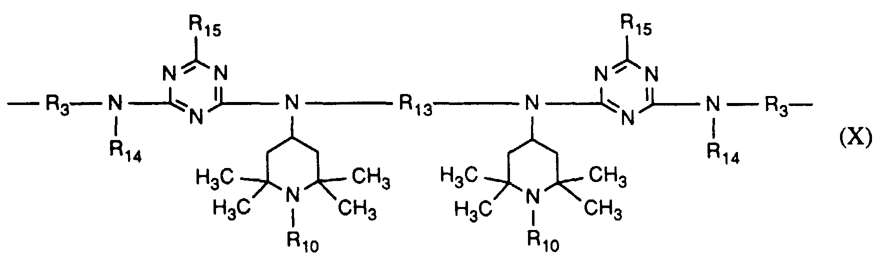 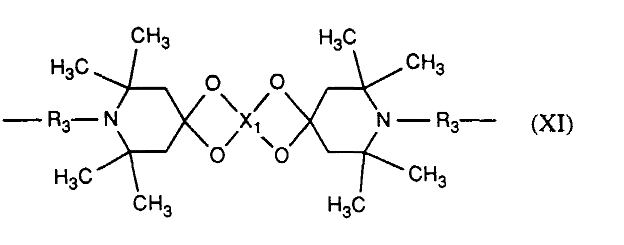 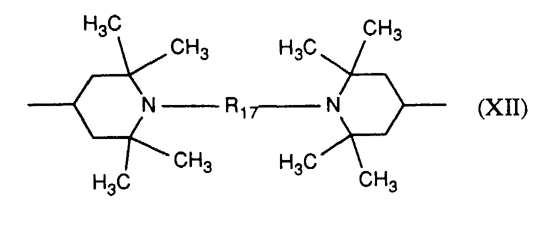 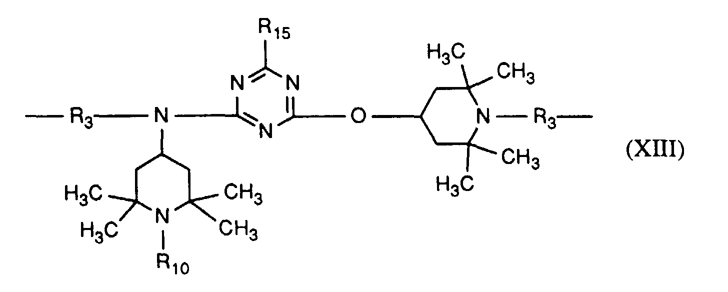 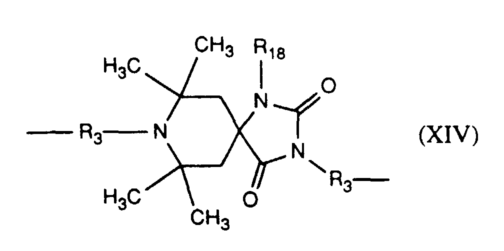 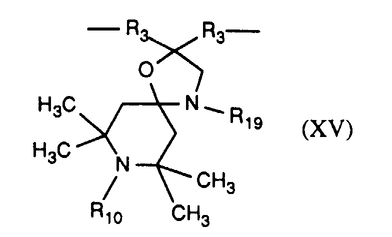 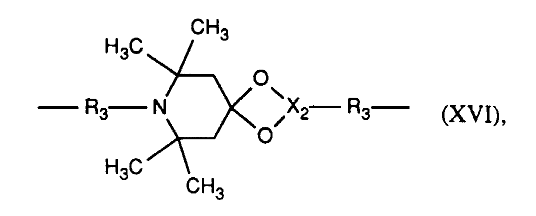
R₃ is C₁-C₁₈alkylene, C₂-C₁₈alkylene which is interrupted by oxygen, sulfur or 〉N-R₅ ;
C₄-C₈alkenylene or phenylethylene,
R₄ is C₁-C₈alkyl or a radical of formula XVII 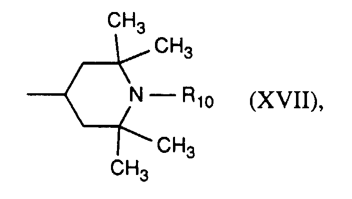
R₅ is hydrogen or C₁-C₈alkyl,
R₆ and R₇ are each independently of the other hydrogen, C₁-C₂₅alkyl, C₂-C₂₄alkenyl, unsubstituted or C₁-C₄alkyl-substituted C₅-C₈cycloalkyl, unsubstituted or C₁-C₄alkyl-substituted phenyl, unsubstituted or C₁-C₄alkyl-substituted C₅-C₈cycloalkenyl; C₇-C₉phenylalkyl or -CH₂-S-R₂₀,
R₈ is hydrogen or methyl,
R₉ is hydrogen, C₁-C₂₅alkyl, C₂-C₂₄alkenyl, unsubstituted or C₁-C₄alkyl-substituted C₅-C₈cycloalkyl; unsubstituted or C₁-C₄alkyl-substituted phenyl, unsubstituted or C₁-C₄-alkyl-substituted C₅-C₈cycloalkenyl; C₇-C₉phenylalkyl, -CH₂-S-R₂₀ , -(CH₂)ₚCOOR₂₁ or -(CH₂)_{q}OR₂₂,
R₁₀ is hydrogen, C₁-C₈alkyl, O^{•}, OH, NO, -CH₂CN, C₁-C₁₈alkoxy, C₅-C₁₂cycloalkoxy, C₃-C₆alkenyl, C₃-C₆alkynyl, C₁-C₈acyl, C₇-C₉phenylalkyl which is unsubstituted or substituted at the phenyl ring by C₁-C₄alkyl;
R₁₁ is C₁-C₈alkyl or a radical of formula XVII 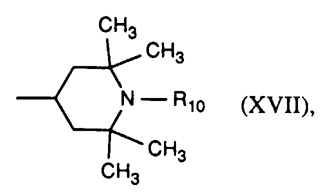
R₁₂ is 〉N-R₂₃, 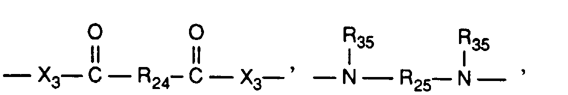 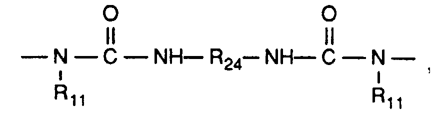 ―O―R₂₅―O―, 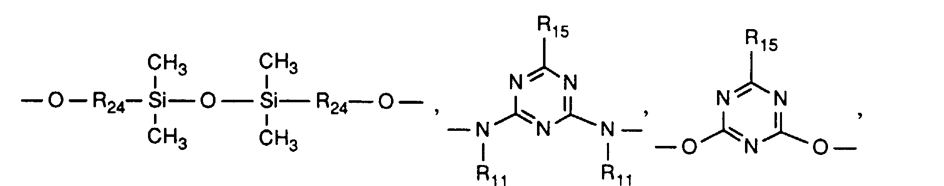 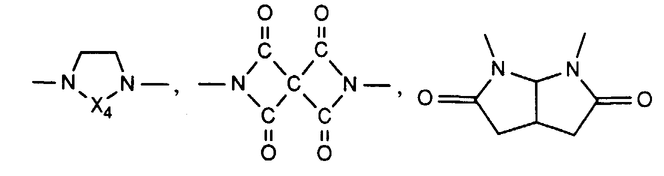 or 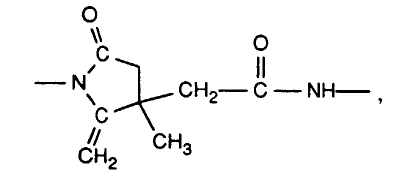
R₁₃ is 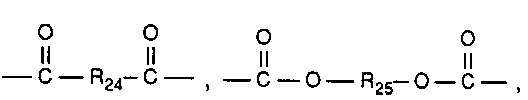 -R₂₅-, 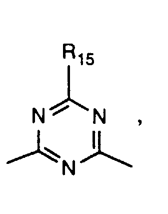 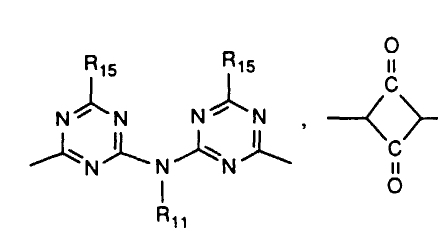 or 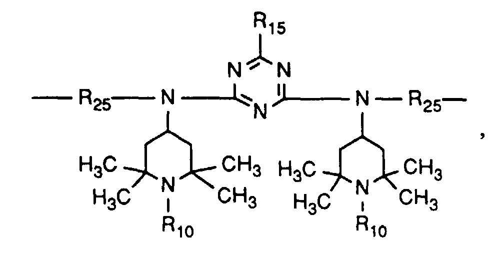
R₁₄ is C₁-C₈alkyl or a radical of formula XVII 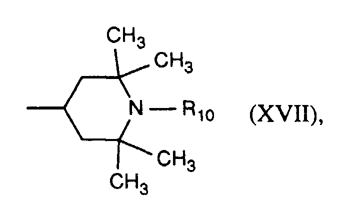
R₁₅ is -OR₂₆, -NHR₂₇, 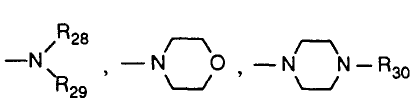 or -SR₂₆,
R₁₆ and R₁₇ are each independently of the other 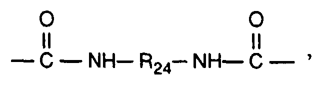 C₁-C₁₈- alkylene, C₂-C₁₈alkylene which is interrupted by oxygen, sulfur or 〉N-R₅ ; C₂-C₁₈alkenylene, C₂-C₁₈alkynylene, C₂-C₂₀alkylidene, C₇-C₂₀phenylalkylidene, C₅-C₈cycloalkylene, C₇-C₈bicycloalkylene, unsubstituted or C₁-C₄alkyl-substituted phenylene or naphthylene; 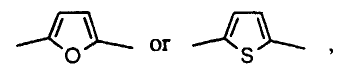
R₁₈ and R₁₉ are each independently of the other hydrogen or C₁-C₈alkyl,
R₂₀ is C₁-C₁₈alkyl, unsubstituted or C₁-C₄alkyl-substituted C₅-C₁₂cycloalkyl; unsubstituted or C₁-C₄alkyl-substituted phenyl; C₇-C₉phenylalkyl or -(CH₂)ᵣCOOR₂₁,
R₂₁ is C₁-C₁₈alkyl, unsubstituted or C₁-C₄alkyl-substituted C₅-C₁₂cycloalkyl; unsubstituted or C₁-C₄alkyl-substituted phenyl; or C₇-C₉phenylalkyl,
R₂₂ is C₁-C₂₅alkyl, unsubstituted or C₁-C₄alkyl-substituted phenyl; C₇-C₉phenylalkyl, C₁-C₂₅alkanoyl, C₃-C₂₅alkenoyl, C₃-C₂₅alkanoyl which is interrupted by oxygen, sulfur or 〉N-R₅ ; C₆-C₉cycloalkylcarbonyl, unsubstituted or C₁-C₁₂alkyl-substituted benzoyl; thenoyl or furoyl,
R₂₃ is C₁-C₈alkyl,
R₂₄ is a direct bond, C₁-C₁₈alkylene, C₂-C₁₈alkylene which is interrupted by oxygen, sulfur or 〉N-R₅ ; C₂-C₁₈alkenylene, C₂-C₂₀alkylidene, C₇-C₂₀phenylalkylidene, C₅-C₈-cycloalkylene, C₇-C₈bicycloalkylene, unsubstituted or C₁-C₄alkyl-substituted phenylene or naphthylene; 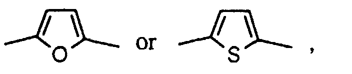
R₂₅ is C₁-C₁₈alkylene, C₂-C₁₈alkylene which is interrupted by oxygen, sulfur or 〉N-R₅ ; C₂-C₁₈alkenylene, C₂-C₂₀alkylidene, C₇-C₂₀phenylalkylidene, C₅-C₈cycloalkylene, C₇-C₈bicycloalkylene, unsubstituted or C₁-C₄alkyl-substituted phenylene or naphthylene; 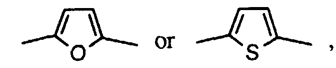
R₂₆ is C₁-C₂₅alkyl, C₂-C₂₅alkyl which is interrupted by oxygen, sulfur or 〉N-R₅ ; C₂-C₂₄alkenyl, unsubstituted or C₁-C₄alkyl-substituted C₅-C₁₅cycloalkyl; unsubstituted or C₁-C₄alkyl-substituted C₅-C₁₅cycloalkenyl; C₇-C₉phenylalkyl which is unsubstituted or substituted at the phenyl ring by C₁-C₄alkyl; unsubstituted or C₁-C₄alkyl-substituted phenyl;
R₂₇, R₂₈, R₂₉ and R₃₀ are each independently of one another hydrogen, C₁-C₁₈alkyl or a radical of formula XVII 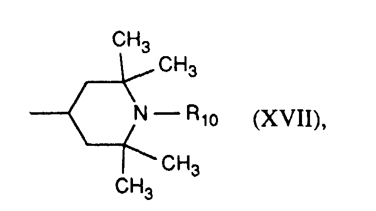
R₃₁ is C₁-C₄alkyl or hydroxymethyl,
R₃₂ is hydrogen or C₁-C₈alkyl,
R₃₃ is hydrogen, C₁-C₈alkyl or a radical of formula XVII 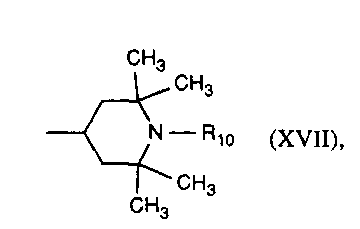
R₃₄ is hydrogen, C₁-C₂₀alkyl, C₅-C₁₂cycloalkyl, unsubstituted or C₁-C₄alkyl-substituted phenyl,
R₃₅ is C₁-C₂₅alkanoyl, unsubstituted or C₁-C₄alkyl-substituted benzoyl; or 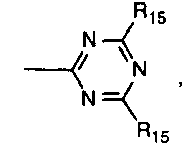
X₁ is a group of formula XVIII, XIX, XX or XXI 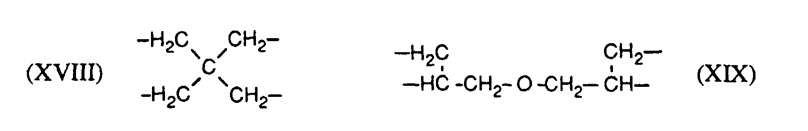 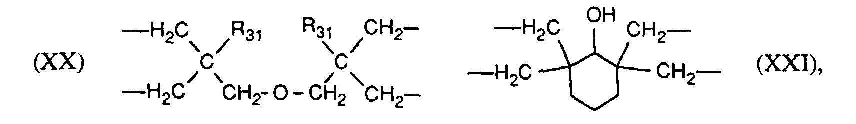
X₂ is 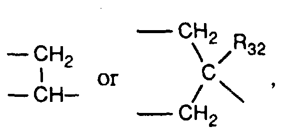
X₃ is oxygen or 〉N-R₃₃,
X₄ is 〉C=O, 〉C=S or 〉CH-R₃₄,
m is 0 or 1,
n is a number from 2 to 25,
p is 0, 1 or 2,
q is an integer from 3 to 8, and
r is 1 or 2, with the proviso that in the structural repeating units of formula I the group L, the radical R₁, and the figure m are identical or different.

2. An oligomeric compound according to claim 1, wherein
R₁ is C₁-C₁₈alkyl, C₂-C₁₈alkyl which is interrupted by oxygen; C₂-C₁₈alkenyl, C₅-C₁₅-cycloalkyl, C₅-C₁₅cycloalkenyl, C₇-C₉phenylalkyl or tetrahydroabietyl; or R₁ is also a radical of formula IV 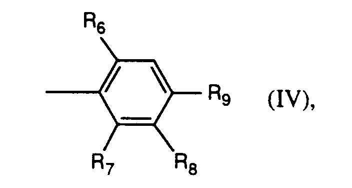
R₆ and R₇ are each independently of the other hydrogen, C₁-C₁₈alkyl, C₂-C₁₈alkenyl, C₅-C₈cycloalkyl, phenyl, C₅-C₈cycloalkenyl, C₇-C₉phenylalkyl or -CH₂-S-R₂₀,
R₉ is hydrogen, C₁-C₁₈alkyl, C₂-C₁₈alkenyl, C₅-C₈cycloalkyl, phenyl, C₅-C₈cycloalkenyl, C₇-C₉phenylalkyl, -CH₂-S-R₂₀ , -(CH₂)ₚCOOR₂₁ or -(CH₂)_{q}OR₂₂,
R₂₀ is C₁-C₁₂alkyl, C₅-C₁₂cycloalkyl, phenyl, C₇-C₉phenylalkyl or -(CH₂)ᵣCOOR₂₁,
R₂₁ is C₁-C₁₂alkyl, C₅-C₁₂cycloalkyl, phenyl or C₇-C₉phenylalkyl,
R₂₂ is C₁-C₁₈alkyl, phenyl, C₇-C₉phenylalkyl, C₁-C₁₈alkanoyl, C₃-C₁₈alkenoyl, C₃-C₁₈-alkanoyl which is interrupted by oxygen; C₆-C₉cycloalkylcarbonyl, benzoyl, thenoyl or furoyl, and
q is an integer from 3 to 6.

3. An oligomeric compound according to claim 1, wherein
R₁ is C₁-C₁₂alkyl, C₃-C₁₂alkenyl, cyclohexyl, benzyl or tetrahydroabietyl, or R₁ is also a radical of formula IV 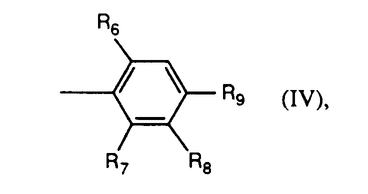
R₆ and R₇ are each independently of the other hydrogen, C₁-C₈alkyl, cyclohexyl or phenyl,
R₉ is hydrogen, C₁-C₈alkyl, cyclohexyl, phenyl or -(CH₂)ₚCOOR₂₁,
R₂₁ is C₁-C₁₂alkyl or benzyl,
n is a number from 2 to 20, and
p is 2.

4. An oligomeric compound according to claim 1, wherein
R₃ is C₁-C₁₂alkylene, C₂-C₁₂alkylene which is interrupted by oxygen; C₄-C₈alkenylene or phenylethylene,
R₁₁ is C₁-C₈alkyl,
R₁₂ is 〉N-R₂₃, 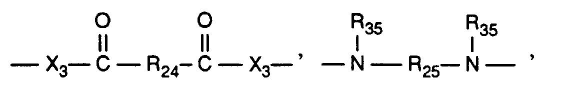 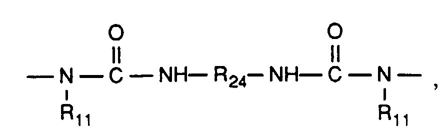 -O-R₂₅-O- 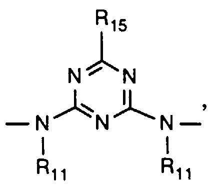 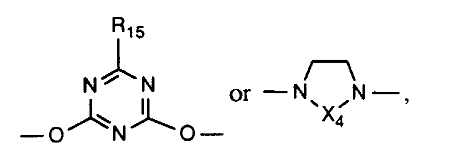
R₁₃ is 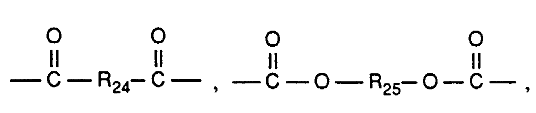 -R₂₅-, 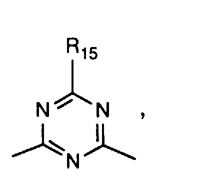 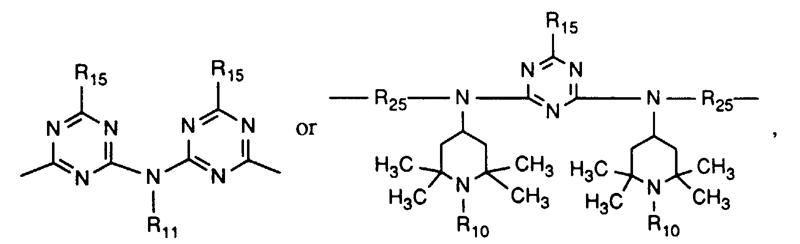
R₁₅ is -OR₂₆, -NHR₂₇, 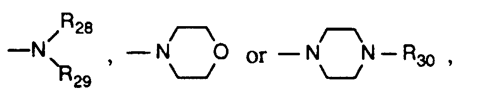
R₁₆ and R₁₇ are each independently of the other 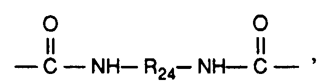 C₂-C₁₂-alkylene, C₂-C₁₂alkylene which is interrupted by oxygen; C₂-C₁₂alkenylene, C₄-C₁₂alkynylene, C₂-C₁₂alkylidene, C₇-C₁₂phenylalkylidene, C₅-C₈cycloalkylene or phenylene,
R₂₄ is a direct bond, C₁-C₁₂alkylene, C₂-C₁₂alkylene which is interrupted by oxygen; C₂-C₁₂alkenylene, C₂-C₁₂alkylidene, C₇-C₁₂phenylalkylidene, C₅-C₈cycloalkylene or phenylene,
R₂₅ is C₁-C₁₂alkylene, C₂-C₁₂alkylene which is interrupted by oxygen; C₂-C₁₂alkenylene, C₂-C₁₂alkylidene, C₇-C₁₂phenylalkylidene, C₅-C₈cycloalkylene or phenylene,
R₂₆ is C₁-C₁₈alkyl, C₂-C₁₈alkyl which is interrupted by oxygen; C₂-C₁₈alkenyl, C₅-C₁₅-cycloalkyl, C₅-C₁₅cycloalkenyl, C₇-C₉phenylalkyl or phenyl,
R₂₇, R₂₈, R₂₉ and R₃₀ are each independently of one another hydrogen, C₁-C₁₂alkyl or a radical of formula XVII 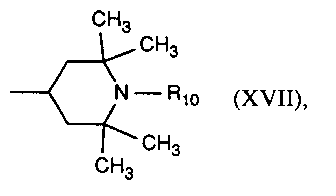
R₃₂ is hydrogen or C₁-C₄alkyl,
R₃₃ is hydrogen or C₁-C₈alkyl,
R₃₄ is hydrogen, C₁-C₁₂alkyl, C₅-C₁₂cycloalkyl or phenyl,
R₃₅ is C₁-C₁₈alkanoyl, benzoyl or 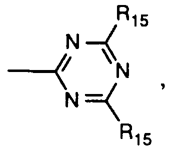
X₁ is a group of formula XVIII or XIX 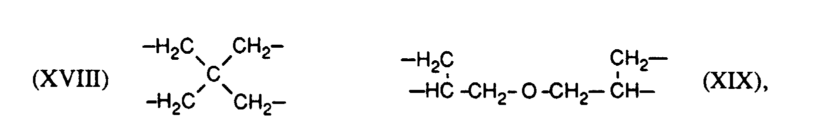
X₂ is 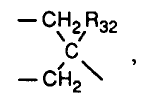
X₄ is 〉C=O or 〉CH-R₃₄, and
n is a number from 2 to 20.

5. An oligomeric compound according to claim 1, wherein
R₃ is C₁-C₈alkylene, C₂-C₈alkylene which is interrupted by oxygen; or C₄-C₈alkenylene,
R₁₁ is C₁-C₆alkyl,
R₁₂ is 〉N-R₂₃, 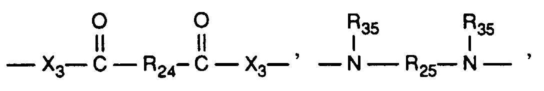 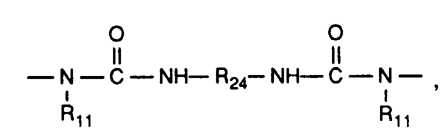 -O-R₂₅-O- 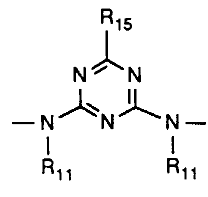 or 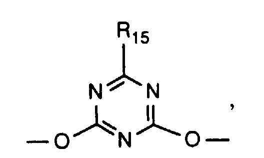
R₁₃ is 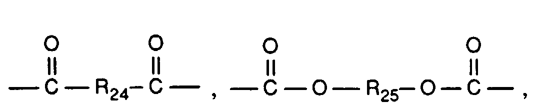 -R₂₅- 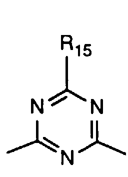 or 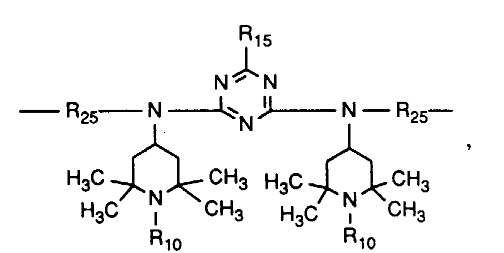
R₁₅ is -OR₂₆, -NHR₂₇, 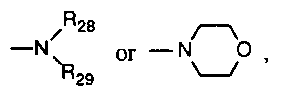
R₁₆ and R₁₇ are each independently of the other 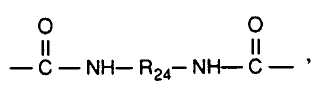 C₂-C₈- alkylene, C₄-C₁₂alkynylene or C₂-C₈alkylidene,
R₂₃ is C₁-C₆alkyl,
R₂₄ is a direct bond, C₁-C₁₂alkylene, C₂-C₁₂alkylene which is interrupted by oxygen; C₂-C₈alkenylene or C₂-C₈alkylidene,
R₂₅ is C₂-C₁₂alkylene, C₂-C₁₂alkylene which is interrupted by oxygen; C₂-C₁₂alkenylene or C₂-C₁₂alkylidene,
R₂₆ is C₁-C₁₂alkyl, C₂-C₁₂alkenyl, cyclohexyl, benzyl or phenyl,
R₂₇, R₂₈ and R₂₉ are each independently of one another hydrogen, C₁-C₁₀alkyl or a radical of formula XVII 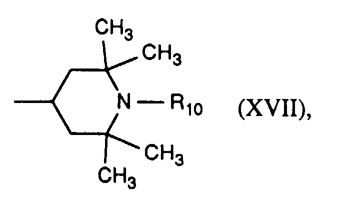
R₃₂ is hydrogen or C₁-C₄alkyl,
R₃₃ is hydrogen or C₁-C₈alkyl,
R₃₄ is hydrogen or C₁-C₈alkyl,
R₃₅ is C₁-C₁₂alkanoyl, benzoyl or 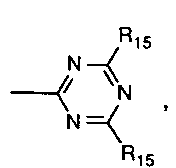
X₁ is a group of formula XVIII or XIX 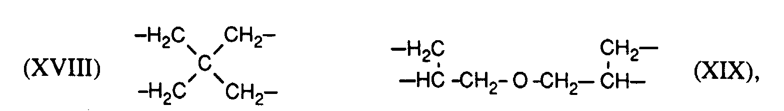
X₂ is 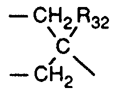
X₄ is 〉C=O or 〉CH-R₃₄, and
n is a number from 2 to 15.

6. An oligomeric compound according to claim 1, wherein
R₁₀ is hydrogen, C₁-C₄alkyl, C₄-C₁₆alkoxy, C₅-C₈cycloalkoxy, allyl, propargyl, acetyl or benzyl.

7. An oligomeric compound according to claim 1, wherein
R₁ is a radical of formula IV 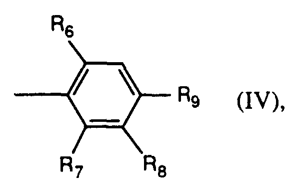
R₂ is a group of formula V, VI, VII, VIII, XI, XII or XVI 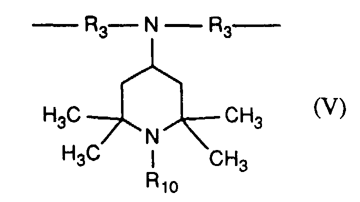 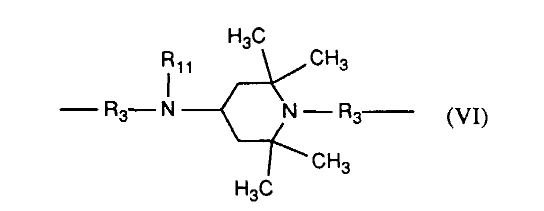 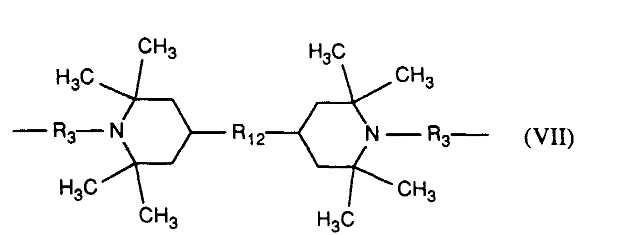 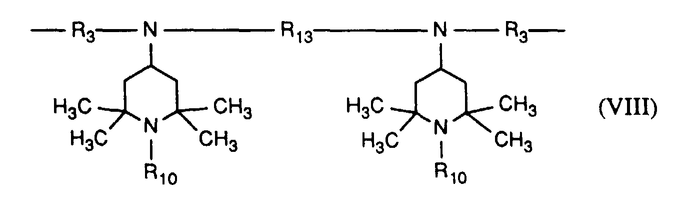 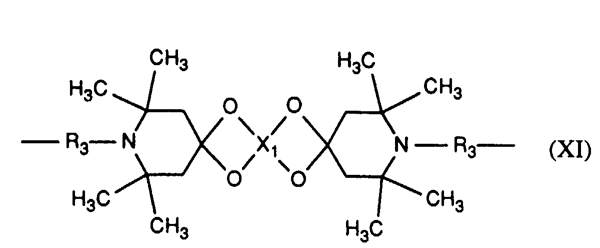 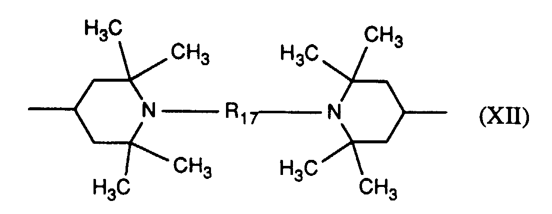 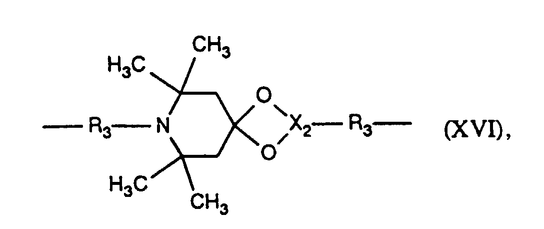
R₃ is methylene or ethylene,
R₄ is C₁-C₈alkyl,
R₆ and R₇ are each independently of the other hydrogen or C₁-C₄alkyl,
R₈ is hydrogen,
R₉ is hydrogen or C₁-C₄alkyl,
R₁₀ is hydrogen or C₁-C₄alkyl,
R₁₁ is C₁-C₄alkyl,
R₁₂ is 〉N-R₂₃, 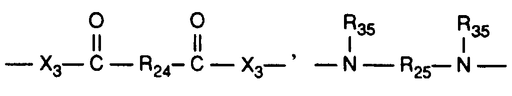 or 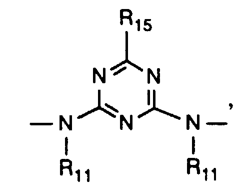
R₁₃ is 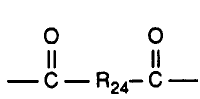 or ―R₂₅―,
R₁₅ is -OR₂₆ or 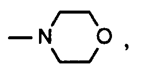
R₁₇ is 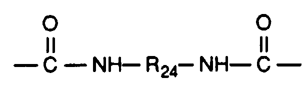 or C₄-C₆alkynylene,
R₂₃ is C₁-C₄alkyl,
R₂₄ is C₂-C₈alkylene,
R₂₅ is C₂-C₈alkylene,
R₂₆ is C₁-C₄alkyl,
R₃₂ is hydrogen or C₁-C₄alkyl,
R₃₃ is hydrogen or C₁-C₄alkyl,
R₃₅ is C₁-C₄alkanoyl,
X₁ is a group of formula XVIII 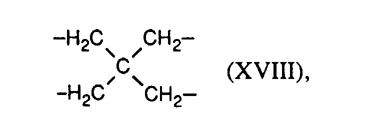
X₂ is 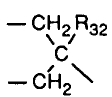
X₃ is oxygen or 〉N-R₃₃, and
n is a number from 2 to 10.

8. A process for the preparation of an oligomeric compound of formula I according to claim 1, which comprises reacting a compound of formula XXII or a mixture of compounds of formula XXII 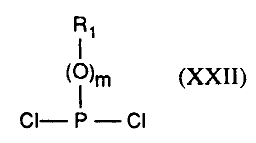 wherein the general symbols are as defined in claim 1, with a compound of formula XXIII or a mixture of compounds of formula XXIII
H―L―H (XXIII)
wherein L is as defined in claim 1.

9. A composition comprising
a) an organic material which is susceptible to oxidative, thermal or light-induced degradation, and
b) at least one compound of formula I according to claim 1.

10. A composition according to claim 9, comprising further additives in addition to components (a) and (b).

11. A composition according to claim 10, comprising as further additives phenolic antioxidants, light stabilizers and/or processing stabilizers.

12. A composition according to claim 10, comprising at least one compound of the benzofuran-2-one type as further additive.

13. A composition according to claim 9, comprising as component (a) natural, semi-synthetic or synthetic polymers.

14. A composition according to claim 9, comprising as component (a) thermoplastic polymers.

15. A composition according to claim 9, comprising as component (a) a polyolefin.

16. A composition according to claim 9, comprising as component (a) polyethylene or polypropylene.

17. Use of a compound of formula I as defined in claim 1 as stabilizer for organic materials against oxidative, thermal or light-induced degradation.

18. Use according to claim 17 as processing stabilizer (heat stabilizer) in thermoplastic polymers.

19. A method of stabilizing an organic material against oxidative, thermal or light-induced degradation, which comprises incorporating in, or applying to, said material at least one compound of formula I as defined in claim 1.

## Revendications

1. Composés oligomères de formule I 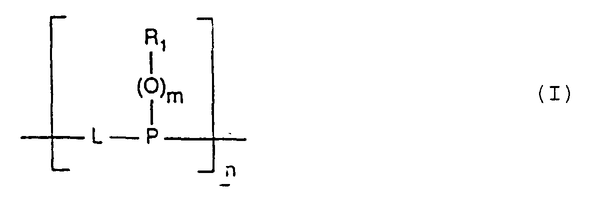 dans laquelle L représente un groupe de formule II ou III
(II) ―O―R₂―O― 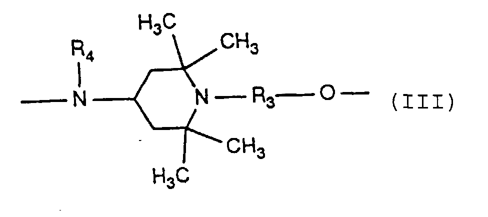
R₁ représente un groupe alkyle en C₁-C₂₅, un groupe alkyle en C₂-C₂₅ interrompu par un atome d'oxygène, de soufre ou ou >N-R₅, alcényle en C₂-C₂₄, cycloalkyle en C₅-C₁₅ non substitué ou substitué par alkyle en C₁-C₄ ; cycloalcényle en C₅-C₁₅ non substitué ou substitué par alkyle en C₁-C₄ ; phénylalkyle en C₇-C₉ non substitué ou substitué sur le cycle phényle par alkyle en C₁-C₄ ; ou tétrahydroabiétyle ; ou en plus R₁ représente un reste de formule IV 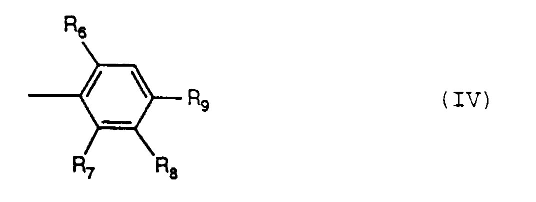
R₂ représente un groupe de formules V à XVI : 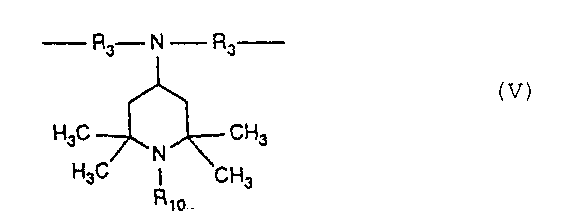 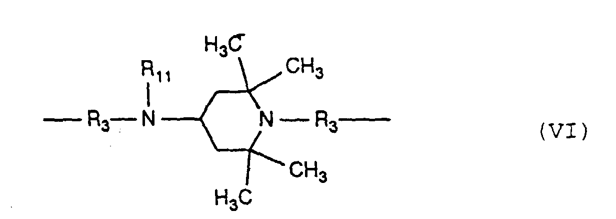 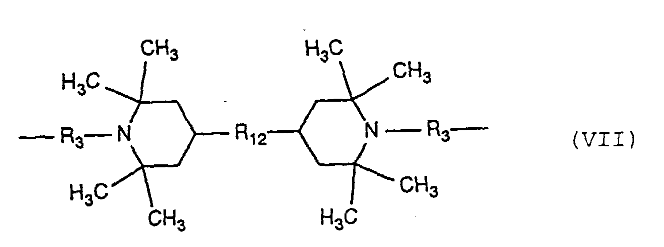 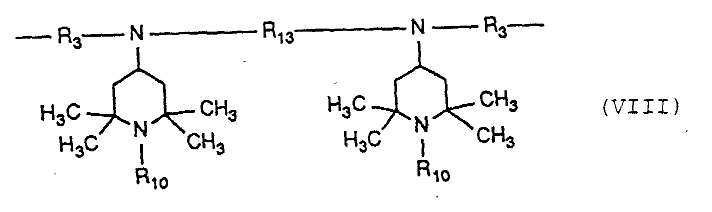 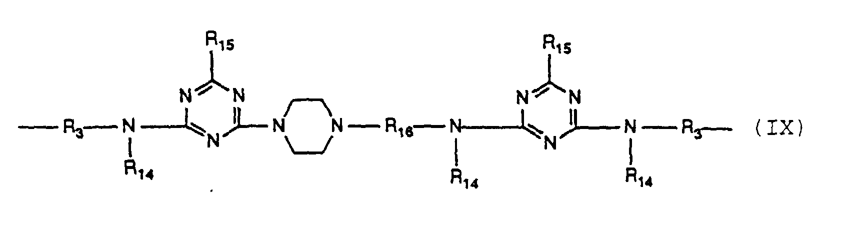 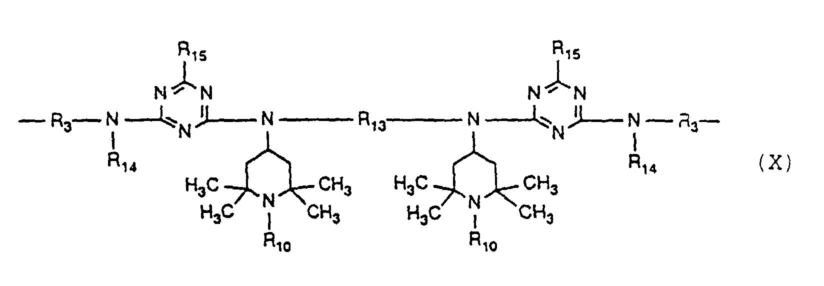 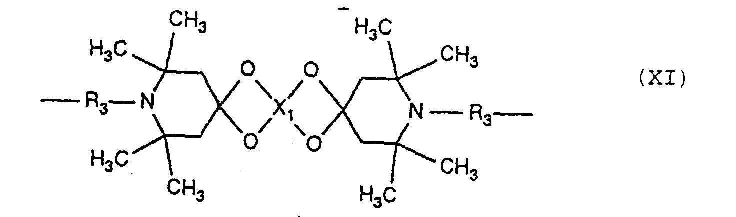 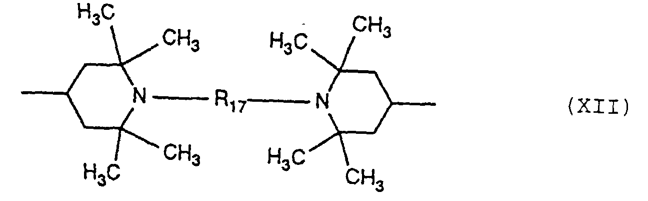 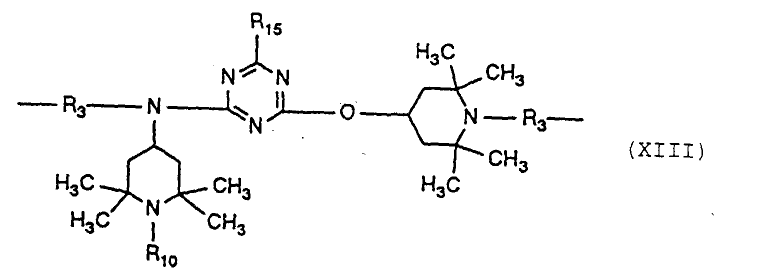 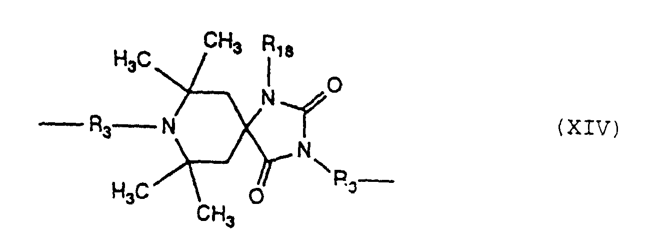 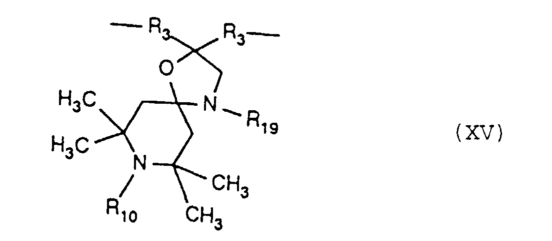 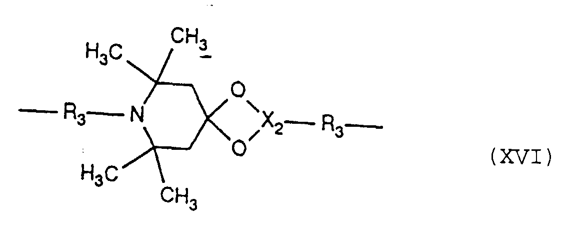
R₃ représente un groupe alkylène en C₁-C₁₈, alkylène en C₂-C₁₈ interrompu par un atome d'oxygène, de soufre ou >N-R₅, alcénylène en C₄-C₈ ou phényléthylène,
R₄ représente un groupe alkyle en C₁-C₈ ou un reste de formule XVII : 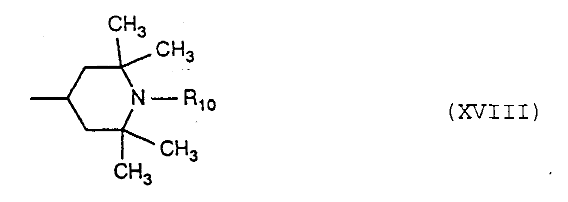
R₅ représente un atome d'hydrogène ou un groupe alkyle en C₁-C₈,
R₆ et R₇, indépendamment l'un de l'autre, représentent un atome d'hydrogène, des groupes alkyle en C₁-C₂₅, alcényle en C₂-C₂₄, cycloalkyle en C₅-C₈ non substitué ou substitué par alkyle en C₁-C₄, phényle non substitué ou substitué par alkyle en C₁-C₄, cycloalcényle en C₅-C₈ non substitué ou substitué par alkyle en C₁-C₄ ; phénylalkyle en C₇-C₉ ou -CH₂-S-R₂₀,
R₈ représente un atome d'hydrogène ou un groupe méthyle,
R₉ représente un atome d'hydrogène, des groupes alkyle en C₁-C₂₅, alcényle en C₂-C₂₄, cycloalkyle en C₅-C₈ non substitué ou substitué par alkyle en C₁-C₄ ; phényle non substitué ou substitué par alkyle en C₁-C₄, cycloalcényle en C₅-C₈ non substitué ou substitué par alkyle en C₁-C₄ ; phénylalkyle en C₇-C₉, -CH₂-S-R₂₀, -(CH₂)ₚCOOR₂₁ ou -(CH₂)_{q}OR₂₂,
R₁₀ représente un atome d'hydrogène, un groupe alkyle en C₁-C₈, O^{•}, OH, NO, -CH₂CN, alkoxy en C₁-C₁₈, cycloalkoxy en C₅-C₁₂, alcényle en C₃-C₆, alcynyle en C₃-C₆, acyle en C₁-C₈, phénylalkyle en C₇-C₉ non substitué ou substitué sur le cycle phényle par un groupe alkyle en C₁-C₄ ;
R₁₁ représente un groupe alkyle en C₁-C₈ ou un reste de formule XVII : 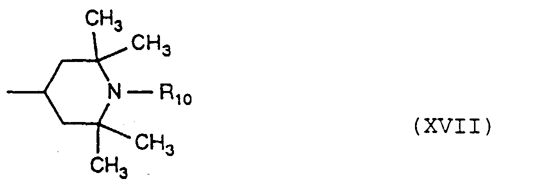
R₁₂ représente
〉N-R₂₃, 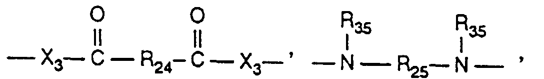 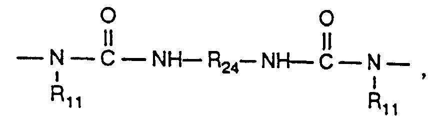 ―O―R₂₅―O―, 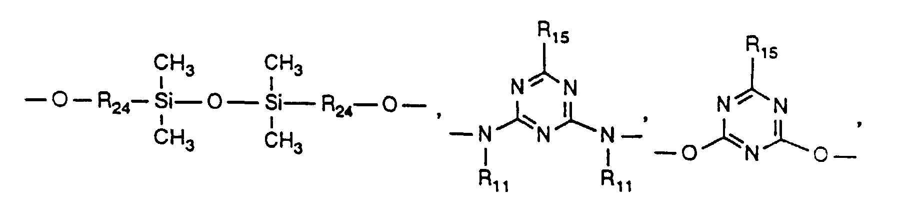 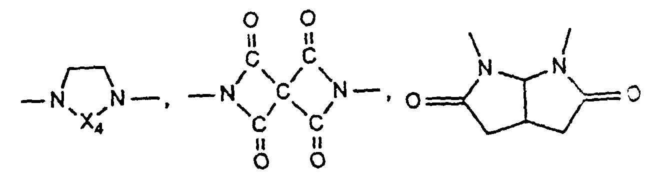 ou 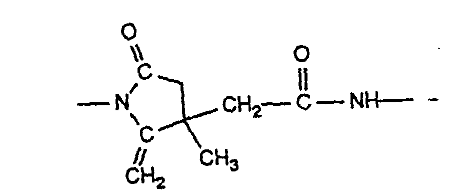
R₁₃ représente 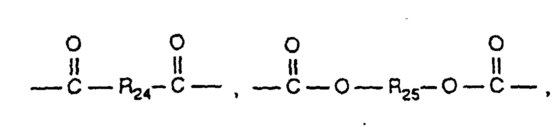 -R₂₅-, 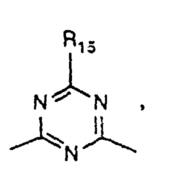 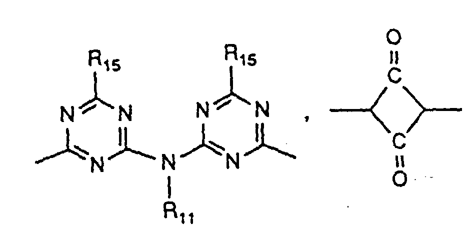 ou 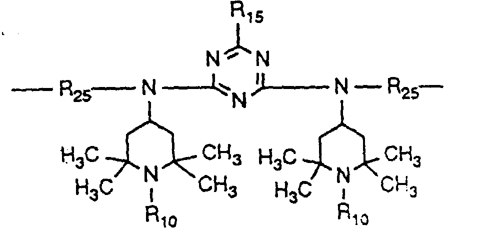
R₁₄ représente un groupe alkyle en C₁-C₈ ou un groupe de formule XVII 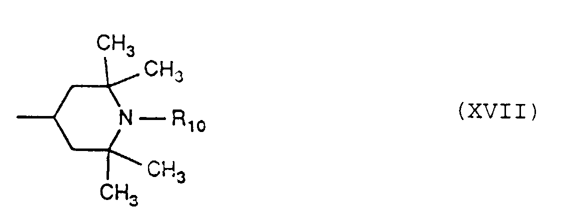
R₁₅ représente -OR₂₆, -NHR₂₇, 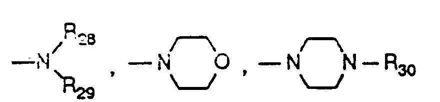 ou -SR₂₆,
R₁₆ et R₁₇ représentent, indépendamment l'un de l'autre, 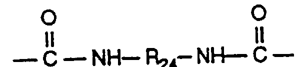 alkylène en C₁-C₁₈, alkylène en C₂-C₁₈ interrompu par un atome d'oxygène, de soufre ou >N-R₅ ; alcénylène en C₂-C₁₈, alcynylène en C₂-C₁₈, alkylidène en C₂-C₂₀, phénylalkylidène en C₇-C₂₀, cycloalkylène en C₅-C₈, bicycloalkylène en C₇-C₈, phénylène ou naphtylène non substitué ou substitué par alkyle en C₁-C₄ ; 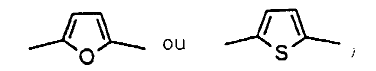
R₁₈ et R₁₉, indépendamment l'un de l'autre, représentent un atome d'hydrogène ou un groupe alkyle en C₁-C₈,
R₂₀ représente un groupe alkyle en C₁-C₁₈, cycloalkyle en C₅-C₁₂, non substitué ou substitué par alkyle en C₁-C₄ ; phényle non substitué ou substitué par alkyle en C₁-C₄ ; phénylalkyle en C₇-C₉ ou - (CH₂)ᵣCOOR₂₁,
R₂₁ représente un groupe alkyle en C₁-C₁₈, cycloalkyle en C₅-C₁₂ non substitué ou substitué par alkyle en C₁-C₄ ; phényle non substitué ou substitué par alkyle en C₁-C₄ ; ou phénylalkyle en C₇-C₉,
R₂₂ représente un groupe alkyle en C₁-C₂₅, phényle non substitué ou substitué par alkyle en C₁-C₄ ; phénylalkyle en C₇-C₉, alcanoyle en C₁-C₂₅, alcénoyle en C₃-C₂₅, ou alcanoyle en C₃-C₂₅ interrompu par un atome d'oxygène, de soufre ou >N-R₅, (cycloalkyl en C₆-C₉)-carbonyle, benzoyle non substitué ou substitué par alkyle en C₁-C₁₂ ; thénoyle ou furoyle,
R₂₃ représente un groupe alkyle en C₁-C₈,
R₂₄ représente une liaison directe, des groupes alkylène en C₁-C₁₈, alkylène en C₂-C₁₈ interrompu par un atome d'oxygène, de soufre ou >N-R₅ ; alcénylène en C₂-C₁₈, alkylidène en C₂-C₂₀, phénylalkylidène en C₇-C₂₀, cycloalkylène en C₅-C₈, bicycloalkylène en C₇-C₈, naphtylène ou phénylène non substitué ou substitué par alkyle en C₁-C₄, 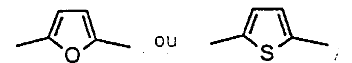
R₂₅ représente un groupe alkylène en C₁-C₁₈, alkylène en C₂-C₁₈ interrompu par un atome d'oxygène, de soufre ou >N-R₅ ; alcénylène en C₂-C₁₈, alkylidène en C₂-C₂₀, phénylalkylidène en C₇-C₂₀, cyclo-alkylène en C₅-C₈, bicycloalkylène en C₇-C₈, phénylène ou naphtylène non substitué ou substitué par alkyle en C₁-C₄ ; 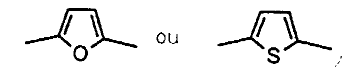
R₂₆ représente un groupe alkyle en C₁-C₂₅, alkyle en C₂-C₂₅ interrompu par un atome d'oxygène, de soufre ou >N-R₅ ; alcényle en C₂-C₂₄, cycloalkyle en C₅-C₁₅ non substitué ou substitué par alkyle en C₁-C₄ ; cycloalcényle en C₅-C₁₅ non substitué ou substitué par alkyle en C₁-C₄ ; phénylalkyle en C₇-C₉ non substitué ou substitué sur le cycle phényle par alkyle en C₁-C₄ ; phényle non substitué ou substitué par alkyle en C₁-C₄ ;
R₂₇, R₂₈, R₂₉ et R₃₀, indépendamment l'un de l'autre, représentent un atome d'hydrogène, un groupe alkyle en C₁-C₁₈ ou un reste de formule XVII : 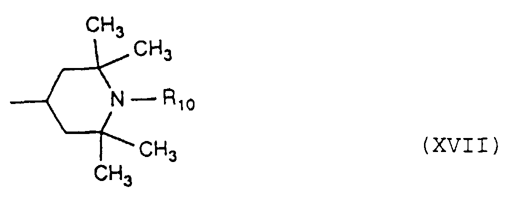
R₃₁ représente un groupe alkyle en C₁-C₄ ou hydroxyméthyle,
R₃₂ représente un atome d'hydrogène ou un groupe alkyle en C₁-C₈,
R₃₃ représente un atome d'hydrogène, un groupe alkyle en C₁-C₈ ou un reste de formule 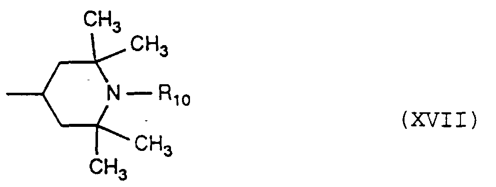
R₃₄ représente un atome d'hydrogène, un groupe alkyle en C₁-C₂₀, cycloalkyle en C₅-C₁₂, phényle non substitué ou substitué par alkyle en C₁-C₄,
R₃₅ représente un groupe alcanoyle en C₁-C₂₅, benzoyle non substitué ou substitué par alkyle en C₁-C₄, ou 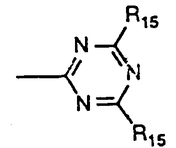
X₁ représente un groupe de formules XVII, XIX, XX ou XXI 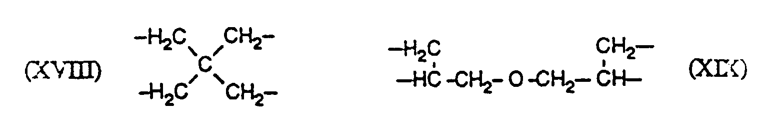 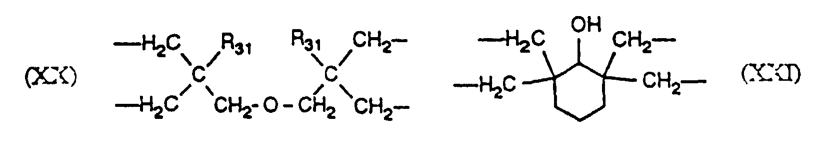
X₂ représente 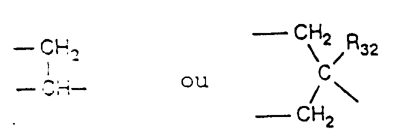
X₃ représente un atome d'oxygène ou >N-R₃₃,
X₄ représente >C=O, >C=O ou >N-R₃₄,
m vaut 0 ou 1,
n va de 2 à 25,
p vaut 0, 1, ou 2,
q est un nombre entier de 3 à 8, et
r vaut 1 ou 2, dans les unités de structure récurrentes de formule I, le groupe L, le reste R₁, ainsi que le nombre m étant identiques ou différents.

2. Composés oligomères selon la revendication 1, dans lesquels
R₁ représente des groupes alkyle en C₁-C₁₈, alkyle en C₂-C₁₈ interrompu par un atome d'oxygène ;alcényle en C₂-C₁₈, cycloalkyle en C₅-C₁₅, cycloalcényle en C₅-C₁₅, phénylalkyle en C₇-C₉ ou tétrahydroabiétyle ; ou en plus R₁ représente un reste de formule IV : 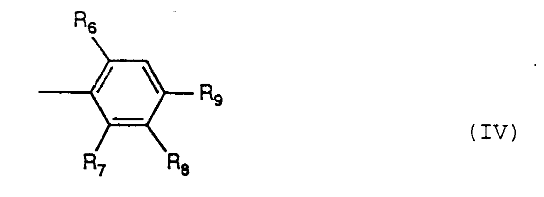
R₆ et R₇, indépendamment l'un de l'autre, représentent un atome d'hydrogène, un groupe alkyle en C₁-C₁₈, alcényle en C₂-C₁₈, cycloalkyle en C₅-C₈, phényle, cycloalcényle en C₅-C₈, phénylalkyle en C₇-C₉ ou -CH₂-S-R₂₀,
R₉ représente un atome d'hydrogène, des groupes alkyle en C₁-C₁₈, alcényle en C₂-C₁₈, cycloalkyle en C₅-C₈, phényle, cycloalcényle en C₅-C₈, phénylalkyle en C₇-C₉, -CH₂-S-R₂₀, -(CH₂)ₚCOOR₂₁ ou -(CH₂)_{q}OR₂₂,
R₂₀ représente un groupe alkyle en C₁-C₁₂, cycloalkyle en C₅-C₁₂, phényle, phénylalkyle en C₇-C₉ ou -(CH₂)ᵣCOOR₂₁,
R₂₁ représente un groupe alkyle en C₁-C₁₂, cycloalkyle en C₅-C₁₂, phényle ou phénylalkyle en C₇-C₉,
R₂₂ représente un groupe alkyle en C₁-C₁₈, phényle, phénylalkyle en C₇-C₉, alcanoyle en C₁-C₁₈, alcénoyle en C₃-C₁₈, alcanoyle en C₃-C₁₈ interrompu par un atome d'oxygène ; cycloalkylcarbonyle en C₆-C₉, benzoyle, thénoyle ou furoyle, et
q est un nombre entier de 3 à 6.

3. Composés oligomères selon la revendication 1, où
R₁ représente un groupe alkyle en C₁-C₁₂, un groupe alcényle en C₃-C₁₂, cyclohexyle, benzyle ou tétrahydroabiétyle, ou en plus R₁ est un reste de formule IV 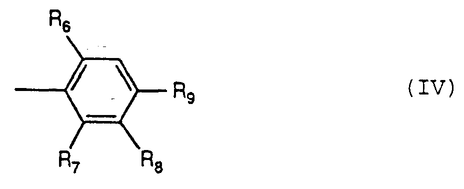 dans laquelle
R₆ et R₇, indépendamment l'un de l'autre, représentent un atome d'hydrogène, des groupes alkyle en C₁-C₈, cyclohexyle ou phényle,
R₉ représente un atome d'hydrogène des groupes alkyle en C₁-C₈, cyclohexyle, phényle ou -(CH₂)ₚCOOR₂₁,
R₂₁ représente un groupe alkyle en C₁-C₁₂ ou benzyle,
n est un nombre de 2 à 20, et
p vaut 2.

4. Composés oligomères selon la revendication 1, où
R₃ représente alkylène en C₁-C₁₂, alkylène en C₂-C₁₂ interrompu par des atomes d'oxygène ; alcénylène en C₄-C₈ ou phényléthylène,
R₁₁ représente un groupe alkyle en C₁-C₈,
R₁₂ représente
〉N-R₂₃, 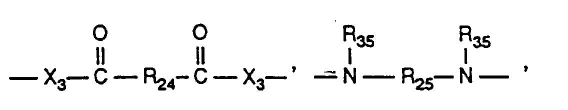 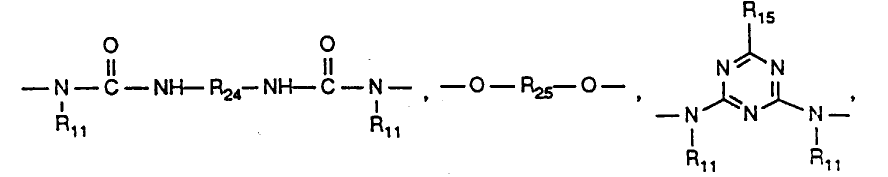 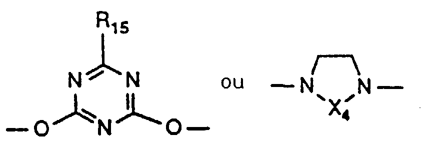
R₁₃ représente 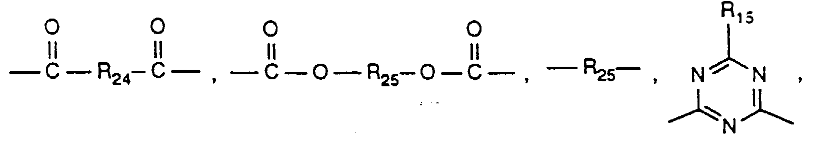 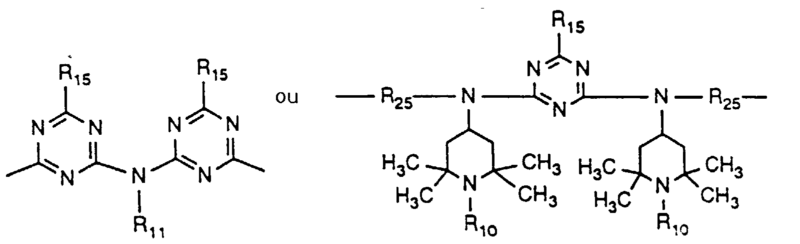
R₁₂ représente -OR₂₆, -NHR₂₇, 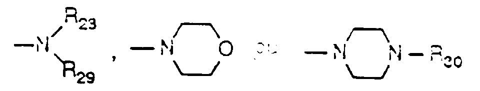
R₁₆ et R₁₇, indépendamment l'un de l'autre, représentent 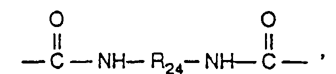 des groupes alkylène en C₂-C₁₂, alkylène en C₂-C₁₂ interrompu par des atomes d'oxygène ; alcénylène en C₂-C₁₂, alcynylène en C₄-C₁₂, alkylidène en C₂-C₁₂, phénylalkylidène en C₇-C₁₂, cycloalkylène en C₅-C₈, ou phénylène,
R₂₄ représente une liaison directe, alkylène en C₁-C₁₂, alkylène en C₂-C₁₂ interrompu par des atomes d'oxygène ; alcénylène en C₂-C₁₂, alkylidène en C₂-C₁₂, phénylalkylidène en C₇-C₁₂, cycloalkylène en C₅-C₈ ou phénylène,
R₂₅ représente alkylène en C₁-C₁₂, alkylène en C₂-C₁₂ interrompu par des atomes d'oxygène ; alcénylène en C₂-C₁₂, alkylidène en C₂-C₁₂, phénylalkylidène en C₇-C₁₂, cycloalkylène en C₅-C₈ ou phénylène,
R₂₆ représente des groupes alkyle en C₁-C₁₈, alkyle en C₂-C₁₈ interrompu par des atomes d'oxygène ; alcényle en C₂-C₁₈, cycloalkyle en C₅-C₁₅, cycloalcényle en C₅-C₁₅, phénylalkyle en C₇-C₉ ou phényle,
R₂₇, R₂₈, R₂₉ et R₃₀, indépendamment l'un de l'autre représentent des atomes d'hydrogène, des groupes alkyle en C₁-C₁₂ ou un reste de formule XVII : 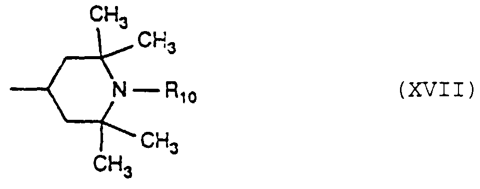 dans laquelle
R₃₂ représente un atome d'hydrogène ou un groupe alkyle en C₁-C₄,
R₃₃ représente un atome d'hydrogène ou un groupe alkyle en C₁-C₈,
R₃₄ représente un atome d'hydrogène, des groupes alkyle en C₁-C₁₂, cycloalkyle en C₇-C₁₂ ou phényle,
R₃₅ représente un groupe alcanoyle en C₁-C₁₈, benzoyle ou 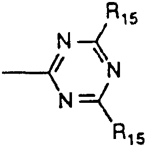
X₁ représente un groupe de formule XVIII ou XIX 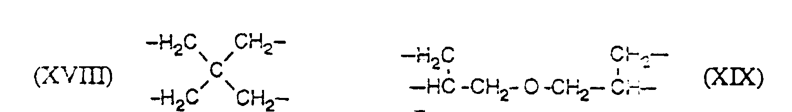
X₂ représente 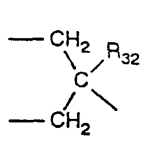
X₄ représente >C=O ou >CH-R₃₄, et
n est un nombre de 2 à 20.

5. Composés oligomères selon la revendication 1, où
R₃ représente alkylène en C₁-C₈, alkylène en C₂-C₈ interrompu par des atomes d'oxygène ; ou alcénylène en C₄-C₈,
R₁₁ représente un groupe alkyle en C₁-C₆
R₁₂ représente 〉N-R₂₃, 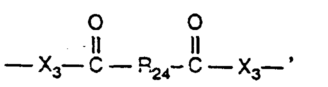 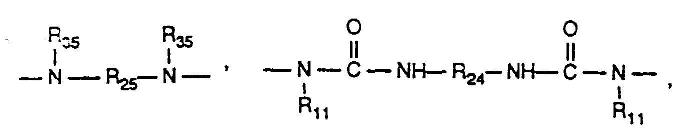 ―O―R₂₅―O―, 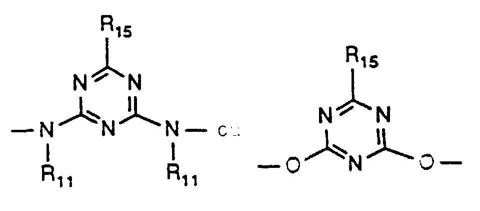
R₁₃ représente 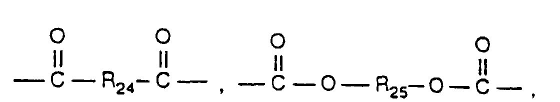 ―R₂₅―, 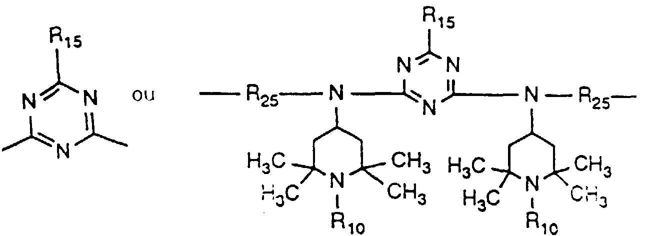
R₁₅ représente -OR₂₆, -NHR₂₇ 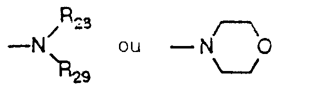
R₁₆ et R₁₇, indépendamment l'un de l'autre, représentent 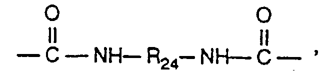 des groupes alkylène en C₂-C₈, alcynylène en C₄-C₁₂ ou alkylidène en C₂-C₈,
R₂₃ représente un groupe alkyle en C₁-C₆,
R₂₄ représente une liaison directe, alkylène en C₁-C₁₂, alkylène en C₂-C₁₂ interrompu par des atomes d'oxygène ; alcénylène en C₂-C₈ ou alkylène en C₂-C₈,
R₂₅ représente des groupes alkylène en C₂-C₁₂, alkylène en C₂-C₁₂ interrompu par un atome d'oxygène ; alcénylène en C₂-C₁₂ ou alkylidène en C₂-C₁₂,
R₂₆ représente des groupes alkyle en C₁-C₁₂, alcényle en C₂-C₁₂, cyclohexyle, benzyle ou phényle,
R₂₇, R₂₈ et R₂₉, indépendamment l'un de l'autre, représentent des atomes d'hydrogène, des groupes alkyle en C₁-C₁₀ ou un reste de formule XVII 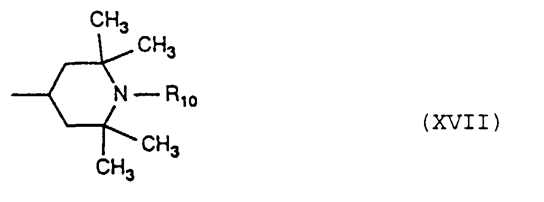 dans laquelle
R₃₂ représente un atome d'hydrogène ou un groupe alkyle en C₁-C₄,
R₃₃ représente un atome d'hydrogène ou un groupe alkyle en C₁-C₈,
R₃₄ représente un atome d'hydrogène ou un groupe alkyle en C₁-C₈,
R₃₅ représente des groupes alcanoyle en C₁-C₁₂, benzoyle ou 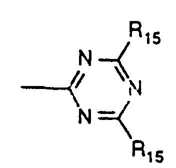
X₁ représente un groupe de formule XVIII ou XIX 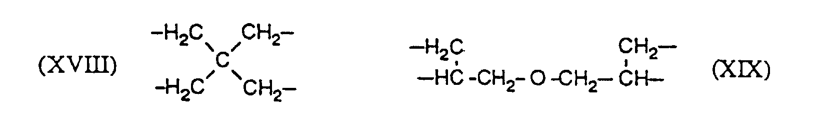
X₂ représente 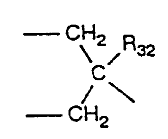
X₄ >C=O ou >CH=R₃₄,
n est un nombre de 2 à 15.

6. Composés oligomères selon la revendication 1, où R₁₀ représente un atome d'hydrogène, des groupes alkyle en C₁-C₄, alkoxy en C₄-C₁₆, cycloalkoxy en C₅-C₈, allyle, propargyle, acétyle ou benzyle.

7. Composés oligomères selon la revendication 1, où R₁ représente un reste de formule IV 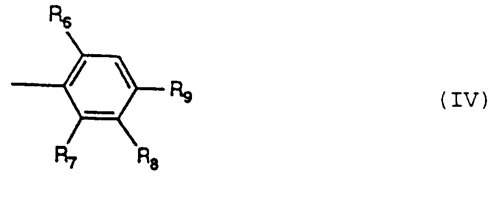
R₂ représente un groupe de formules V, VI, VII, VIII, XI, XII ou XVI 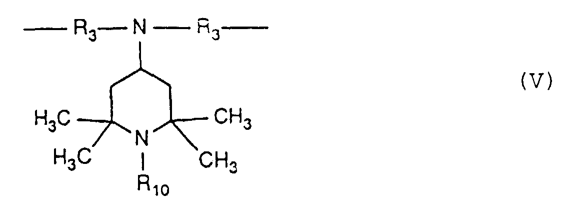 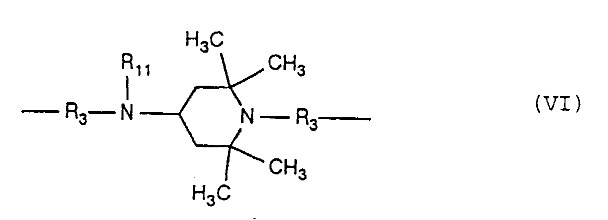 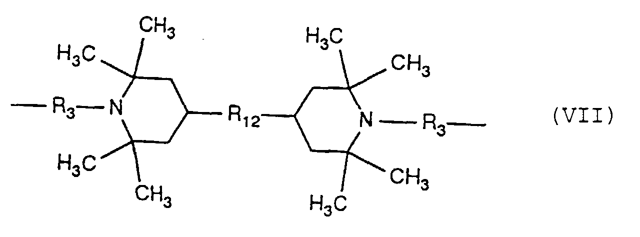 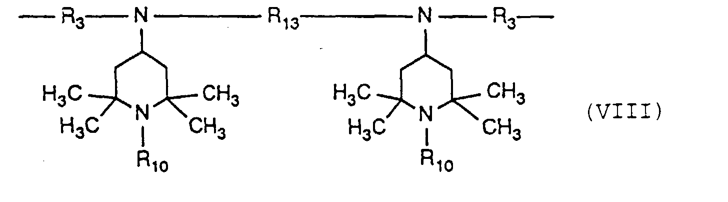 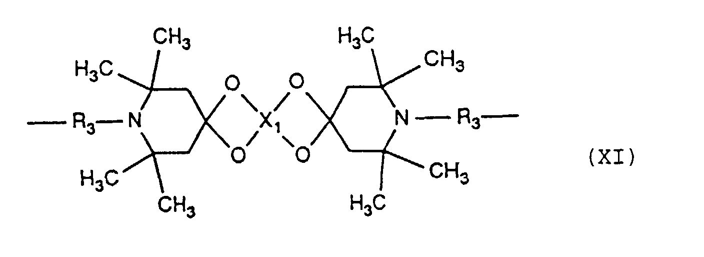 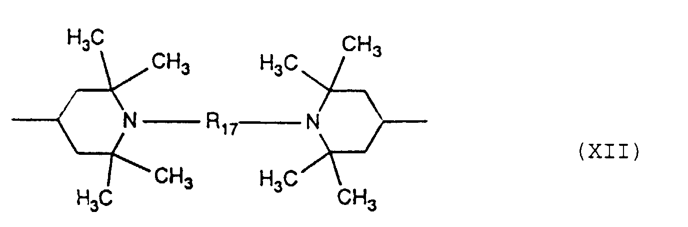 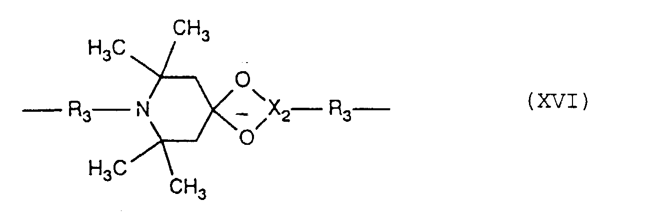
R₃ représente un groupe méthylène ou éthylène,
R₄ représente un groupe alkyle en C₁-C₈,
R₆ et R₇, indépendamment l'un de l'autre, représentent un atome d'hydrogène ou un groupe alkyle en C₁-C₄,
R₈ représente un atome d'hydrogène,
R₉ représente un atome d'hydrogène ou un groupe alkyle en C₁-C₄,
R₁₀ représente un atome d'hydrogène ou un groupe alkyle en C₁-C₄,
R₁₁ représente un groupe alkyle en C₁-C₄,
R₁₂ représente 〉N-R₂₃, 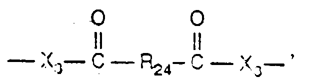 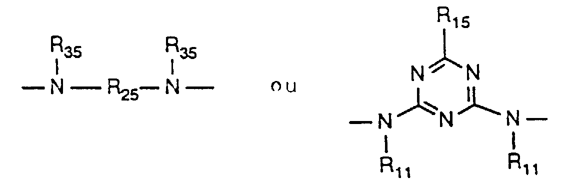
R₁₃ représente 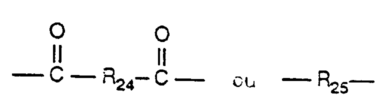
R₁₅ représente -OR₂₆ ou 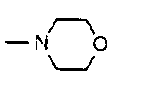
R₁₇ 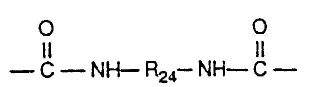 ou alcynylène en C₄-C₆,
R₂₃ représente un groupe alkyle en C₁-C₄,
R₂₄ représente un groupe alkylène en C₂-C₈,
R₂₅ représente un groupe alkylène en C₂-C₈,
R₂₆ représente un groupe alkyle en C₁-C₄,
R₃₂ représente un atome d'hydrogène ou un groupe alkyle en C₁-C₄,
R₃₃ représente un atome d'hydrogène ou un groupe alkyle en C₁-C₄,
R₃₅ représente un groupe alcanoyle en C₁-C₄,
X₁ représente un groupe de formule XVIII 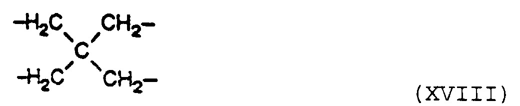
X₂ représente 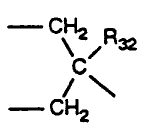
X₃ représente un atome d'oxygène ou >N-R₃₃, et
n est un nombre de 2 à 10.

8. Procédé pour la préparation de composés oligomères de formule I selon la revendication 1, caractérisé en ce que l'on fait réagir un composé de formule XXII ou un mélange de composés de formule XXII 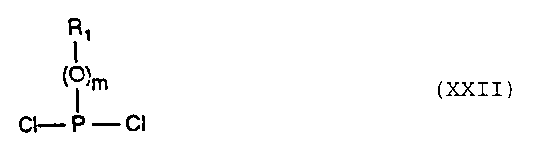 où les symboles généraux sont définis dans la revendication 1 avec un composé de formule XXIII ou un mélange de composés de formule XXIII
H-L-H (XXIII)
dans laquelle L est défini dans la revendication 1.

9. Composition contenant
a) une matière organique subissant une dégradation par l'oxygène, la chaleur ou la lumière et
b) au moins un composé de formule 1 selon la revendication 1.

10. Composition selon la revendication 9 contenant, au côté des composants (a) et (b) , encore d'autres additifs.

11. Composition selon la revendication 10 contenant comme autres additifs des anti-oxydants phénoliques, des agents photoprotecteurs et/ou des stabilisants de mise en oeuvre.

12. Composition selon la revendication 10 contenant comme autres additifs, au moins un composé du type de la benzofuran-2-one.

13. Composition selon la revendication 9 contenant comme composants (a) des polymères naturels, semi-synthétiques ou synthétiques.

14. Composition selon la revendication 9 contenant comme composants (a) des polymères thermoplastiques.

15. Composition selon la revendication 9 contenant comme composant (a) une polyoléfine.

16. Composition selon la revendication 9 contenant comme composant (a) du polyéthylène ou du polypropylène.

17. Utilisation des composés de formule I définis dans la revendication 1 en tant que stabilisants de matières organiques contre la dégradation induite par l'oxygène, la chaleur ou la lumière.

18. Utilisation selon la revendication 17 en tant que stabilisants de mise en oeuvre (stabilisants thermiques) dans des polymères thermoplastiques.

19. Procédé pour la stabilisation d'une matière organique contre la dégradation induite par l'oxygène, la chaleur ou la lumière, caractérisé en ce que l'on incorpore à cette matière ou on dépose sur celle-ci au moins un composé de formule I défini dans la revendication 1.
